# EUROPÄISCHE PATENTSCHRIFT

(11) **EP 3 324 911 B1**
(45) Veröffentlichungstag und Bekanntmachung des Hinweises auf die Patenterteilung: **02.10.2019**
(21) Anmeldenummer: 16747875.9
(22) Anmeldetag: 21.07.2016
(51) Int. Cl.: A61G 13/12

(54) **VERSTELLVORICHTUNG ZUM POSITIONIEREN VON LAGERFLÄCHENSEGMENTEN EINES OPERATIONSTISCHES**
ADJUSTING DEVICE FOR POSITIONING SUPPORT SURFACE SEGMENTS OF AN OPERATING TABLE
DISPOSITIF DE RÉGLAGE PERMETTANT DE POSITIONNER DES SEGMENTS DE SURFACES D'APPUI D'UNE TABLE D'OPÉRATION

(30) Priorität: 24.07.2015 DE 102015112083; 19.07.2016 DE 102016113250
(43) Veröffentlichungstag der Anmeldung: 30.05.2018
(73) Patentinhaber: MAQUET GmbH, 76437 Rastatt (DE)
(72) Erfinder: KRICKEBERG, Thomas, 76307 Karlsbad (DE); GAISER, Immanuel, 76599 Weisenbach (DE); DEL ALCAZAR VON BUCHWALD, Rodrigo, 76337 Waldbronn (DE); KATZENSTEIN, Bernhard, 76437 Iffezheim (DE)
(74) Vertreter: Zacco GmbH
(86) Internationale Anmeldenummer: PCT/EP2016/067396
(87) Internationale Veröffentlichungsnummer: WO 2017/016972

(56) Entgegenhaltungen:
- EP-A1- 2 617 405
- DE-A1- 10 253 906
- DE-C1- 4 406 553

## Beschreibung

Die Erfindung betrifft eine Verstellvorrichtung zum Positionieren mindestens eines Lagerflächensegments eines Operationstisches, mit einem Viergelenk, über das ein Basiselement des Operationstisches und ein Lagerflächensegment einer Patientenlagerfläche des Operationstisches verbunden sind. Das Viergelenk hat einen ersten Lenker, der an seinem ersten Ende mit dem Basiselement um eine erste Schwenkachse und an seinem zweiten Ende mit einem ersten Ende einer Koppel um eine zu der ersten Schwenkachse parallele zweite Schwenkachse schwenkbar verbundenen ist. Des Weiteren hat das Viergelenk einen zweiten Lenker, der an seinem ersten Ende mit dem Basiselement um eine zu der ersten Schwenkachse parallele dritte Schwenkachse und an seinem zweiten Ende mit der Koppel um eine zu der ersten Schwenkachse parallele vierte Schwenkachse schwenkbar verbunden ist.

Bei einigen Operationen, wie z.B. bei der Cholezystektomie und in der Adipositaschirurgie, ist eine Spreizung der Beine eines auf der Patientenlagerfläche eines Operationstisches angeordneten Patienten erforderlich. Hierzu sind die Ober- und Unterschenkel des Patienten auf jeweils einer Oberschenkelplatte und einer Unterschenkelplatte angeordnet, die schwenkbar zueinander und schwenkbar zu weiteren Segmenten der Patientenlagerfläche sind.

Zur Spreizung der Beine wird die Oberschenkelplatte und die damit verbundene Unterschenkelplatte jeweils um eine senkrecht zur Patientenlagerfläche ausgerichtete Schwenkachse geschwenkt. Zusätzlich dazu kann es erforderlich sein, die Unterschenkelplatten jeweils um eine weitere senkrecht zu deren Längsachse ausgerichtete Schwenkachse zu verschwenken, um eine geeignete Positionierung des Patienten, wie z.B. eine Knie-Ellenbogen-Lage, zu erreichen. Bedingt durch die unterschiedliche Anatomie der Patienten verlaufen die Schwenkachsen der Patientenlagerfläche im Allgemeinen nicht durch die Gelenke des Patienten. Daraus kann eine nach einem Verschwenken der Unterschenkel- und/oder Oberschenkelplatten physiologisch unvorteilhafte Lagerung des Patienten resultieren, in der Bänder des Patienten gedehnt sind und die eine nachträgliche Positionskorrektur des Patienten notwendig macht.

Eine Knie-Ellenbogen-Lage des Patienten ist beispielsweise bei Wirbelsäuleneingriffen und bei rektalen Eingriffen erforderlich. Dabei wird der Patient hauptsächlich auf seinen Knien und seinem Oberkörper abgestützt. Dazu werden die Knie des Patienten auf den Unterschenkelplatten gelagert, die gegenüber dem die Ellenbogen und den Oberkörper stützenden Bereich der Patientenlagerfläche abgesenkt sind. Eine sichere und für die Operation günstige Lagerung des Patienten erfordert es, den Abstand der Unterschenkelplatten zu variieren, ohne deren parallele Ausrichtung zu dem den Oberkörper stützenden Bereich der Patientenlagerfläche zu verändern.

Aus dem Dokument DE 102 53 906 A1 ist eine Patientenlagerfläche bekannt, die eine lageveränderliche Schwenkachse zum Verschwenken einer Unterschenkelplatte gegenüber einer Oberschenkelplatte hat. Dabei ist ein Viergelenk vorgesehen, zu dem die lageveränderliche Schwenkachse in einem Abstand angeordnet ist. Durch den Abstand der Schwenkachse zu dem Viergelenk erfordert das Arretieren bzw. Lösen der Arretierung des Viergelenks und der Schwenkachse zwei Betätigungsschritte jeweils eines Bedienelements für das Viergelenk und die Schwenkachse. Weiterhin ermöglicht die Beinplattenanordnung keine Knie-Ellenbogen-Lagerung, bei der die Unterschenkelplatten in ihrer Lage derart verändert werden können, dass sie ihre Ausrichtung beibehalten.

Ferner ist es bei bekannten vierteiligen Beinplatten, die für die Knie-Ellenbogen-Lage geeignet sind, nicht möglich, die Beinplatten in einem Winkel größer als 100° relativ zur Längsachse der Patientenlagerfläche nach außen zu verschwenken. Dadurch müssen die Beinplatten bei medizinischen Eingriffen, bei denen die Beinplatten kurzzeitig nicht erforderlich sind, entfernt werden, wodurch weitere Arbeitsschritte des Fachpersonals notwendig sind.

Die Beinplatten sind also um verschiedene Gelenke verschwenkbar und sollen so weit wie möglich optimal zum lagernden Patienten eingestellt werden können. Aus diesem Grund sollten die Gelenke am besten stufenlos einstellbar ausgeführt werden. Stufenlos einstellbare Kupplungen werden meist als reibschlüssige Kupplungen ausgeführt. Diese haben aber die Nachteile, dass zum Einen zur Erzeugung der benötigten Reibkraft hohe Kräfte aufgeprägt und geschalten werden müssen, was zu hohen Betätigungskräften führen kann. Zum anderen unterliegen Reibkupplungen häufig dem Verschleiß, so dass sich die Eigenschaften im Laufe des Betriebs verändern. Aus diesem Grund werden für solche Gelenkblockaden gerne formschlüssige Kupplungen eingesetzt. Häufig werden hier Hirthverzahnte Teile bzw. Kronenradkupplungen eingesetzt. Diese haben aber den Nachteil, dass wenn man hohe Kräfte übertragen will, die einzelnen Zähne der Kupplungselemente groß werden müssen, während man für eine feinfühlige kleinwinklige Einstellung eine entsprechende Teilung wünscht, was zu sehr kleinen Zähnen führt. Ein häufig realisierter Kompromiss wird der Art realisiert, dass der Durchmesser des Kronenrades vergrößert wird, so dass man eine ausreichend hohe Anzahl von Zähnen mit ausreichend dimensionierten Zähnen aufbauen kann. Dies fordert aber Bauraum und führt zu einem Mehrgewicht der gesamten Vorrichtung.

Bei allen diesen Lagerungen sollte es zu keiner Zeit zu einer Gefahr für den Patienten kommen. Dies könnte sein, wenn zB: ein Bein unkontrolliert nach unten fällt, oder der ganze Patient von der Lagerfläche rutscht, weil der Anwender versehentlich eine Feststellung einer Gelenkmechanik öffnet. Eine andere Gefahr könnte entstehen, wenn Beinplatten welche an motorischen Gelenkmodulen angebracht werden können einzeln verstellt und übereinander positioniert werden. Da während der Operation nur ein kleiner Teil des Patienten nicht unter Tüchern abgedeckt ist, ist die Kontrolle dieser Fehleinstellungen für den Anwender nicht immer gegeben und sollte soweit als möglich von der Technik verhindert werden.

Aufgrund der vielen Gelenke und der Schnittstelle zwischen Beinplatte und Lagerfläche sowie Oberschenkelplatte und Unterschenkelplatte gibt es eine Vielzahl von Bedienelementen. Nun kann es vorkommen, dass ein Anwender, der eine Verstellung der Beinplatte vornehmen möchte, in den schlecht ausgeleuchteten Bereich unter die abdeckenden Tücher des OP-Tisches greift und ein Bedienelement betätigt. Dabei sollte es aber nicht vorkommen, dass versehentlich das falsche Bedienelement betätigt wird, bzw. falls doch, so sollte dies keine fatalen Folgen haben.

Aufgabe der Erfindung ist es, eine Vorrichtung anzugeben, mit der die Lagerflächensegmente eines Operationstisches für Patienten unterschiedlicher Anatomie vielseitig einsetzbar und einfach verstellbar sind, wobei Fehlbedienungen und unkontrollierte Bewegungen der Lagerflächensegmente weitgehend vermieden werden.

Diese Aufgabe wird durch eine Verstellvorrichtung zum Positionieren von Lagerflächensegmenten eines Operationstisches mit den Merkmalen des Anspruchs 1 gelöst. Vorteilhafte Weiterbildungen der Erfindung sind in den abhängigen Ansprüchen angegeben.

Durch eine Verstellvorrichtung mit den Merkmalen des Anspruchs 1, bei der das Lagerflächensegment um eine Drehachse des Viergelenks schwenkbar mit dem Viergelenk verbunden ist, ist das Lagerflächensegment gegenüber dem ersten Lenker des Viergelenks um eine zu der ersten Schwenkachse parallele, lageveränderliche Schwenkachse schwenkbar. Hierzu ist kein in einem Abstand zur lageveränderlichen Schwenkachse angeordnetes Drehlager erforderlich. Das Lagerflächensegment kann dadurch einfach entsprechend der Anatomie eines Patienten positioniert werden. Die Anzahl der Drehachsen der Verstellvorrichtung konnte gegenüber dem Stand der Technik reduziert werden, wodurch der Aufbau der Verstellvorrichtung kompakter und die Verstellung der Lagerflächensegmente vereinfacht wird.

Vorzugsweise ist das Viergelenk als Parallelogramm ausgebildet, so dass der erste Lenker und der zweite Lenker zwei gegenüberliegende parallele Seiten des Parallelogramms bilden und die Koppel eine der zwei anderen parallelen Seiten des Parallelogramms bildet.

Besonders vorteilhaft ist es, wenn die Verstellvorrichtung eine erste Arretierungseinheit zum Sperren einer Schwenkbewegung des Lagerflächensegments um die zweite Schwenkachse relativ zu dem ersten Lenker oder zu der Koppel hat. Dadurch ist es möglich, die Arretierung der Position des Lagerflächensegments zu vereinfachen, wenn nur eine Verschwenkung um die erste Schwenkachse erfolgen soll.

In einer besonders vorteilhaften Ausführungsform ist mit Hilfe des Viergelenks eine Schwenkbewegung der zweiten Schwenkachse um die erste Schwenkachse möglich. Weiterhin hat die Verstellvorrichtung eine zweite Arretierungseinheit zum Sperren der Schwenkbewegung der zweiten Schwenkachse um die erste Schwenkachse. Dadurch kann die Schwenkbewegung der zweiten Schwenkachse um die erste Schwenkachse gesperrt und somit verhindert werden. Das Verschwenken des Lagerflächensegments um die zweite Schwenkachse ist auch im gesperrten Zustand der zweiten Arretierungseinheit möglich, wenn die erste Arretierungseinheit diese Schwenkbewegung nicht sperrt. Dadurch ist eine einfache Positionierung des Lagerflächensegments bei einfacher Bedienbarkeit möglich. Vorzugsweise sind die erste Arretierungseinheit und die zweite Arretierungseinheit um die zweite Schwenkachse herum angeordnet. Vorzugsweise sind die Arretierungseinheiten in einem Drehlager zum Verschwenken des ersten Lenkers relativ zur Koppel um die zweite Drehachse, insbesondere um diese herum angeordnet.

Ferner ist es vorteilhaft, wenn die erste Arretierungseinheit in einer ersten Betätigungsposition eines Betätigungselements in einem unverriegelten Zustand ist, in dem die Schwenkbewegung des Lagerflächensegments um die zweite Schwenkachse freigegeben ist. Weiterhin ist die erste Arretierungseinheit in einer zweiten Betätigungsposition des Betätigungselements in einem verriegelten Zustand, in dem die Schwenkbewegung des Lagerflächensegments um die zweite Schwenkachse gesperrt ist. Dadurch ist die Sperrung der Schwenkbewegung des Lagerflächensegments um die zweite Schwenkachse auf einfache Weise durch eine entsprechende Betätigung des Betätigungselements möglich. Durch Vorsehen eines Indikators am Betätigungselement zur Anzeige des Arretierungszustands ist für einen Benutzer durch die Position des Indikators auf einfache Weise erkennbar, ob die erste Arretierungseinheit in dem verriegelten oder unverriegelten Zustand ist.

Besonders vorteilhaft ist es, wenn die zweite Arretierungseinheit in der ersten Betätigungsposition des Betätigungselements in einem unverriegelten Zustand ist, in dem die Schwenkbewegung der zweiten Schwenkachse um die erste Schwenkachse freigegeben ist. Weiterhin ist die zweite Arretierungseinheit in der zweiten Betätigungsposition des Betätigungselements in einem verriegelten Zustand, in dem die Schwenkbewegung der zweiten Schwenkachse um die erste Schwenkachse gesperrt ist. Dadurch können beide Arretierungseinheiten durch eine Betätigung des Betätigungselements gleichzeitig arretiert werden, was die Bedienung der Verstellvorrichtung erheblich vereinfacht.

Alternativ ist es vorteilhaft, wenn die zweite Arretierungseinheit in der ersten und der zweiten Betätigungsposition des Betätigungselements in einem unverriegelten Zustand ist, in dem die Schwenkbewegung der zweiten Schwenkachse um die erste Schwenkachse freigegeben ist. Weiterhin ist die zweite Arretierungseinheit in einer dritten Betätigungsposition des Betätigungselements in einem verriegelten Zustand, in dem die Schwenkbewegung der zweiten Schwenkachse um die erste Schwenkachse gesperrt ist. Dadurch ist es möglich, die Schwenkbewegung des Lagerflächensegments um die zweite Schwenkachse zu arretieren, ohne gleichzeitig die Schwenkbewegung der zweiten Schwenkachse um die erste Schwenkachse zu arretieren. Die Arretierung der Schwenkbewegung der zweiten Schwenkachse um die erste Schwenkachse ist durch eine weitere Betätigung des Betätigungselements möglich, wodurch eine einfache Bedienung der Verstellvorrichtung möglich und nur ein Betätigungselement erforderlich ist.

In einer vorteilhaften alternativen Ausführungsform ist die erste Arretierungseinheit in der ersten Betätigungsposition des Betätigungselements und in der zweiten Betätigungsposition des Betätigungselements in dem unverriegelten Zustand, in dem die Schwenkbewegung des Lagerflächensegments um die zweite Schwenkachse freigegeben ist. Ferner ist die erste Arretierungseinheit in der dritten Betätigungsposition des Betätigungselements in dem verriegelten Zustand, in dem die Schwenkbewegung des Lagerflächensegments um die zweite Schwenkachse gesperrt ist. Weiterhin ist die zweite Arretierungseinheit in der ersten Betätigungsposition des Betätigungselements in dem unverriegelten Zustand, in dem die Schwenkbewegung der zweiten Schwenkachse um die erste Schwenkachse freigegeben ist. In der zweiten und der dritten Betätigungsposition des Betätigungselements ist die zweite Arretierungseinheit in dem verriegelten Zustand, in dem die Schwenkbewegung der zweiten Schwenkachse um die erste Schwenkachse gesperrt ist. Dadurch ist es möglich, die Schwenkbewegung der zweiten Schwenkachse um die erste Schwenkachse zu arretieren, ohne gleichzeitig die Schwenkbewegung des Lagerflächensegments um die zweite Schwenkachse zu arretieren. Die Arretierung der Schwenkbewegung des Lagerflächensegments um die zweite Schwenkachse ist durch eine weitere Betätigung des Betätigungselements möglich, wodurch eine einfache Bedienung der Verstellvorrichtung möglich und nur ein Betätigungselement erforderlich ist.

In einer weiteren alternativen Ausgestaltung ist die erste Arretierungseinheit in der ersten und der zweiten Betätigungsposition des Betätigungselements in dem unverriegelten Zustand, in dem die Schwenkbewegung des Lagerflächensegments um die zweite Schwenkachse freigegeben ist. Weiterhin ist die erste Arretierungseinheit in der dritten Betätigungsposition des Betätigungselements in dem verriegelten Zustand, in dem die Schwenkbewegung des Lagerflächensegments um die zweite Schwenkachse gesperrt ist. Ferner ist in dieser Ausgestaltung die zweite Arretierungseinheit in der zweiten Betätigungsposition des Betätigungselements in dem verriegelten Zustand. Dadurch ist es möglich, die Schwenkbewegung der zweiten Schwenkachse um die erste Schwenkachse zu arretieren, ohne gleichzeitig die Schwenkbewegung des Lagerflächensegments um die zweite Schwenkachse zu arretieren. Die Arretierung der Schwenkbewegung des Lagerflächensegments um die zweite Schwenkachse ist durch eine weitere Betätigung des Betätigungselements möglich, wodurch eine einfache Bedienung der Verstellvorrichtung möglich und nur ein Betätigungselement erforderlich ist.

Bei einer vorteilhaften Ausgestaltung umfasst die erste Arretierungseinheit ein relativ zu dem ersten Lenker oder zu der Koppel drehfestes erstes Sperrelement. Weiterhin ist das Lagerflächensegment mit einem ersten Eingriffselement fest verbunden. Dabei steht das erste Eingriffselement im verriegelten Zustand der ersten Arretierungseinheit mit dem ersten Sperrelement in Eingriff. Weiterhin steht das erste Eingriffselement in dem unverriegelten Zustand nicht mit dem ersten Sperrelement in Eingriff. Dadurch kann das Verschwenken des Lagerflächensegments gegenüber dem ersten Lenker oder der Koppel des Viergelenks einfach gesperrt und freigegeben werden. Zudem kann durch eine entsprechende Arretierung auch eine Kopplung der Ausrichtung des Lagerflächensegments an die Ausrichtung des ersten Lenkers oder der Koppel ermöglicht werden, wodurch das Lagerflächensegment einfach für die Anatomie des Patienten günstig positioniert werden kann.

Besonders vorteilhaft ist es, wenn die zweite Arretierungseinheit ein relativ zu dem ersten Lenker drehfestes zweites Sperrelement hat. Weiterhin hat die Koppel ein fest mit diesem verbundenes zweites Eingriffselement. Dabei steht das zweite Eingriffselement in dem verriegelten Zustand der Arretierungseinheit mit dem zweiten Sperrelement in Eingriff. Weiterhin steht das zweite Eingriffselement in dem unverriegelten Zustand nicht mit dem zweiten Sperrelement in Eingriff. Dadurch wird ein Verschwenken der zweiten Schwenkachse um die erste Schwenkachse auf einfache Weise gesperrt. Weiterhin können die erste Arretierungseinheit und die zweite Arretierungseinheit dadurch unabhängig voneinander verriegelt werden.

Bei einer vorteilhaften Ausführungsform der vorstehend erläuterten Ausgestaltung ist in dem ersten Lenker ein zylinderförmiges Durchgangsloch ausgebildet. Das erste Sperrelement ist in dem Durchgangsloch angeordnet und hat eine einer ersten Öffnung des Durchgangslochs zugewandte erste Seite, auf der eine erste Zahnung des ersten Sperrelements ausgebildet ist. Weiterhin hat das erste Eingriffselement eine zu der ersten Zahnung des ersten Sperrelements komplementär ausgebildete Zahnung, über die das erste Eingriffselement in dem verriegelten Zustand der ersten Arretierungseinheit mit dem ersten Sperrelement in Eingriff steht. Zudem ist das zweite Sperrelement in dem Durchgangsloch angeordnet und hat eine der zweiten Öffnung des Durchgangslochs zugewandte erste Seite, auf der eine erste Zahnung des zweiten Sperrelements ausgebildet ist. Ferner hat das zweite Eingriffselement eine zu der ersten Zahnung des zweiten Sperrelements komplementär ausgebildete Zahnung, über die das zweite Eingriffselement in dem verriegelten Zustand der zweiten Arretierungseinheit mit dem zweiten Sperrelement in Eingriff steht. Dadurch können die zwei Arretierungseinheiten in dem Durchgangsloch kompakt angeordnet werden und gleichzeitig oder sequentiell unabhängig voneinander in dem verriegelten Zustand oder dem unverriegelten Zustand sein. Das Durchgangsloch ist dabei vorzugsweise am zweiten Ende des ersten Lenkers ausgebildet. Dadurch kann ein einfacher Eingriff der zweiten Arretierungseinheit mit der Koppel erreicht werden.

Ferner ist es vorteilhaft, wenn das erste Sperrelement und das zweite Sperrelement jeweils um die Längsachse des Durchgangslochs drehfest zu dem ersten Lenker angeordnet sind. Weiterhin sind das erste Sperrelement und das zweite Sperrelement jeweils entlang der Längsachse des Durchgangslochs verschiebbar angeordnet. Dadurch ist ein einfacher Aufbau der Arretierungseinheiten möglich. Die Sperrelemente können jeweils mit dem ersten Eingriffselement bzw. dem zweiten Eingriffselement durch eine Verschiebung der Sperrelemente einfach in Eingriff gebracht und aus diesem wieder gelöst werden.

In einer weiteren vorteilhaften Ausgestaltung ist in der Wandung des Durchgangslochs eine Zahnung ausgebildet, deren Zahnflanken parallel zu der Längsachse des Durchgangslochs sind. Das erste Sperrelement und das zweite Sperrelement sind dabei jeweils zylinderförmig ausgebildet und haben jeweils an ihrer Mantelfläche eine zu der Zahnung des Durchgangslochs komplementäre zweite Zahnung. Dabei stehen das erste Sperrelement und das zweite Sperrelement jeweils mit dem ersten Lenker über ihre zweite Zahnung in Eingriff und sind jeweils entlang der Längsachse des Durchgangslochs bewegbar. Durch das Vorsehen von derart ausgebildeten Zahnungen können das erste Sperrelement und das zweite Sperrelement entlang der Längsachsen des Durchgangslochs einfach verschoben und dennoch sicher drehfest zueinander gegenüber Drehungen angeordnet sein. Die zweiten Zahnungen sind dabei jeweils vorzugsweise nach Art eines Stirnrades ausgebildet.

In einer vorteilhaften Ausführungsform der vorstehend erläuterten Ausgestaltung umfasst die erste Arretierungseinheit ein erstes Schaltelement. Das Betätigungselement ist dabei mit einem zweiten Schaltelement verbunden, das mit dem ersten Schaltelement in Eingriff steht. Weiterhin bewegt das zweite Schaltelement bei einer Bewegung des Betätigungselements von einer Betätigungsposition, in der die erste Arretierungseinheit in dem unverriegelten Zustand ist, in eine Betätigungsposition, in der die erste Arretierungseinheit in dem verriegelten Zustand ist, das erste Schaltelement entlang der Längsachse des Durchgangslochs von einer ersten Schaltposition des ersten Schaltelements in eine zweite Schaltposition des ersten Schaltelements. Dabei ist die Zahnung des ersten Sperrelements in der ersten Schaltposition des ersten Schaltelements in einem Abstand zu der Zahnung des ersten Eingriffselements angeordnet, so dass die erste Arretierungseinheit in dem unverriegelten Zustand ist. Weiterhin wird die erste Zahnung des ersten Sperrelements bei der Bewegung des ersten Schaltelements von der ersten Schaltposition in die zweite Schaltposition entlang der Längsachse des Durchgangslochs bewegt und mit der Zahnung des ersten Eingriffselements in Eingriff gebracht, so dass die erste Arretierungseinheit dann in dem verriegelten Zustand ist. Dadurch wird auf einfache Weise eine Bewegung des ersten Sperrelements durch die Bewegung des Betätigungselements ermöglicht und das erste Sperrelement mit dem ersten Eingriffselement in Eingriff gebracht.

Ferner ist es vorteilhaft, wenn die zweite Arretierungseinheit ein drittes Schaltelement umfasst. Weiterhin bewegt das zweite Schaltelement bei einer Bewegung des Betätigungselements von einer Betätigungsposition, in der die zweite Arretierungseinheit in dem unverriegelten Zustand ist, in eine Betätigungsposition, in der die zweite Arretierungseinheit in dem verriegelten Zustand ist, das dritte Schaltelement entlang der Längsachse des Durchgangslochs von einer ersten Schaltposition des dritten Schaltelements in eine zweite Schaltposition des dritten Schaltelements. Dabei ist die erste Zahnung des zweiten Sperrelements in der ersten Schaltposition des dritten Schaltelements in einem Abstand von der Zahnung des zweiten Eingriffselements angeordnet, so dass die zweite Arretierungseinheit in dem unverriegelten Zustand ist. Weiterhin wird die erste Zahnung des zweiten Sperrelements bei der Bewegung des dritten Schaltelements von der ersten Schaltposition in die zweite Schaltposition entlang der Längsachse des Durchgangslochs bewegt und mit der Zahnung des zweiten Eingriffselements in Eingriff gebracht, so dass die zweite Arretierungseinheit in dem verriegelten Zustand ist. Dadurch ist es möglich, das Betätigungselement mit der ersten Arretierungseinheit und mit der zweiten Arretierungseinheit in Eingriff zu bringen und unterschiedliche Verriegelungszustände der Arretierungseinheiten zu realisieren. Die erste Arretierungseinheit und die zweite Arretierungseinheit befinden sich in einer ersten Betätigungsposition des Betätigungselements jeweils in dem unverriegelten Zustand und in einer dritten Position des Betätigungselements jeweils in dem verriegelten Zustand. In einer zweiten Betätigungsposition des Betätigungselements ist entweder die erste Arretierungseinheit oder die zweite Arretierungseinheit in dem verriegelten Zustand.

Ferner ist es vorteilhaft, wenn die Bewegung des Betätigungselements von der Betätigungsposition, in der die erste Arretierungseinheit in dem unverriegelten Zustand ist, in die Betätigungsposition, in der die erste Arretierungseinheit in dem verriegelten Zustand ist, eine Drehung des Betätigungselements um die Längsachse des Durchgangslochs ist. Weiterhin ist es vorteilhaft, wenn das zweite Schaltelement eine fest mit dem Betätigungselement verbundene Welle umfasst, deren Längsachse entlang der Längsachse des Durchgangslochs verläuft, und einen quer zu der Welle angeordneten und mit der Welle verbundenen Stift. Weiterhin kann das erste Schaltelement als eine erste Kurvenscheibe ausgebildet sein, deren Kurvenbahn auf der dem Stift zugewandten Seite um die Längsachse des Durchgangslochs herum angeordnet ist, wobei die Kurvenbahn mindestens einen geneigten Abschnitt mit einer Steigung hat. Dabei wird der Stift bei der Bewegung des Betätigungselements von der Betätigungsposition, in der die erste Arretierungseinheit in dem unverriegelten Zustand ist, in die Betätigungsposition, in der die erste Arretierungseinheit in dem verriegelten Zustand ist, entlang des geneigten Abschnitts der Kurvenbahn der ersten Kurvenscheibe bewegt. Dadurch wird eine Arretierung der ersten Arretierungseinheit durch eine Drehung des Betätigungselements auf einfache Weise ermöglicht. Der notwendige Grad der Verdrehung des Betätigungselements und dessen Drehrichtung können durch eine Variation der Ausbildung der ersten Kurvenscheibe einfach festgelegt werden. Vorzugsweise ist die erste Kurvenscheibe derart ausgebildet, dass die erste Arretierungseinheit entweder durch eine Achtel-, eine Viertel oder eine halbe Drehung des Betätigungselements um die Längsachse des Durchgangslochs arretierbar ist.

Bei einer vorteilhaften Ausführungsform ist das dritte Schaltelement als eine zweite Kurvenscheibe ausgebildet, deren Kurvenbahn auf der dem Stift zugewandten Seite um die Längsachse des Durchgangslochs herum angeordnet ist, wobei die Kurvenbahn mindestens einen geneigten Abschnitt mit einer Steigung hat. Die erste Kurvenscheibe und die zweite Kurvenscheibe sind dabei derart relativ zu dem Stift angeordnet, dass der Stift bei der Bewegung des Betätigungselements von der ersten Betätigungsposition in die zweite Betätigungsposition entlang des geneigten Abschnitts der Kurvenbahn der ersten Kurvenscheibe und entlang des geneigten Abschnitts der Kurvenbahn der zweiten Kurvenscheibe bewegt wird. Alternativ dazu wird der Stift bei der Bewegung des Betätigungselements von der ersten Betätigungsposition in die zweite Betätigungsposition entlang des geneigten Abschnitts der Kurvenbahn der ersten Kurvenscheibe und entlang eines Abschnitts der Kurvenbahn der zweiten Kurvenscheibe ohne Steigung bewegt und bei der Bewegung des Betätigungselements von der zweiten Betätigungsposition in die dritte Betätigungsposition entlang eines Abschnitts der Kurvenbahn der ersten Kurvenscheibe ohne Steigung und entlang des geneigten Abschnitts der Kurvenbahn der zweiten Kurvenscheibe bewegt. In einer weiteren Alternative wird der Stift bei der Bewegung des Betätigungselements von der ersten Betätigungsposition in die zweite Betätigungsposition entlang eines Abschnitts der Kurvenbahn der ersten Kurvenscheibe ohne Steigung und entlang des geneigten Abschnitts der Kurvenbahn der zweiten Kurvenscheibe bewegt und bei der Bewegung des Betätigungselements von der zweiten Betätigungsposition in die dritte Betätigungsposition entlang des geneigten Abschnitts der Kurvenbahn der ersten Kurvenscheibe und entlang eines Abschnitts der Kurvenbahn der zweiten Kurvenscheibe ohne Steigung bewegt. Dadurch können eine gleichzeitige Arretierung der ersten und der zweiten Arretierungseinheit durch Drehen des Betätigungselements bzw. eine aufeinanderfolgende Arretierung der Arretierungseinheiten durch Drehen des Betätigungselements in die zweite Betätigungsposition und die dritte Betätigungsposition erreicht werden. Dabei hängen die Betätigungspositionen von der konkreten Ausbildung der ersten Kurvenscheibe und der zweiten Kurvenscheibe und deren relativer Anordnung zueinander ab. Die erste Kurvenscheibe und die zweite Kurvenscheibe weisen dabei Abschnitte ohne Steigung auf, die in einer zur Längsachse des Durchgangslochs senkrecht verlaufenden Ebene liegen. Vorzugsweise sind die erste Kurvenscheibe und die zweite Kurvenscheibe derart ausgebildet, dass die erste Arretierungseinheit und die zweite Arretierungseinheit jeweils entweder durch eine Achtel-, eine Viertel oder eine halbe Drehung des Betätigungselements um die Längsachse des Durchgangslochs arretierbar sind.

Ferner ist es vorteilhaft, wenn eine Welle vorhanden ist, die ein erstes Außengewinde mit einer ersten Steigung und ein zweites Außengewinde mit einer zweiten Steigung hat, wobei das erste Außengewinde in einem ersten Bereich der Welle und das zweite Außengewinde in einem zweiten Bereich der Welle jeweils um die Längsachse der Welle angeordnet sind und die Richtungen der ersten Steigung und der zweiten Steigung einander entgegengesetzt sind. Das erste Sperrelement hat eine Öffnung mit einem Innengewinde, das komplementär zu dem ersten Außengewinde ausgebildet ist und zumindest teilweise mit dem ersten Außengewinde in Eingriff steht. Weiterhin hat das zweite Sperrelement eine Öffnung mit einem Innengewinde, das komplementär zu dem zweiten Außengewinde ausgebildet ist und zumindest teilweise mit dem zweiten Außengewinde in Eingriff steht. Das Betätigungselement ist mit der Welle verbunden und die Bewegung des Betätigungselements ist von der ersten Betätigungsposition in die zweite Betätigungsposition eine Drehung des Betätigungselements um die Längsachse des Durchgangslochs, wodurch die drehfest mit dem Betätigungselement verbundene Welle um deren Längsachse gedreht wird. Vorzugsweise sind das Außengewinde der Welle und die Innengewinde der Sperrelemente jeweils Regelgewinde, Grobgewinde oder, in einer weiteren beispielhaften Ausführung, Feingewinde. Beispielsweise sind die Steigungen des Außengewindes der Welle und der Innengewinde der Sperrelemente jeweils derart ausgeführt, dass die erste Arretierungseinheit und die zweite Arretierungseinheit jeweils entweder durch eine Achtel-, eine Viertel oder eine halbe Drehung des Betätigungselements um die Längsachse des Durchgangslochs arretierbar sind.

Ferner ist es vorteilhaft, wenn das zweite Schaltelement eine Welle umfasst. Die Welle hat ein erstes Außengewinde mit einer ersten Steigung und ein zweites Außengewinde mit einer zweiten Steigung, wobei das erste Außengewinde in einem ersten Bereich der Welle und das zweite Außengewinde in einem zweiten Bereich der Welle jeweils um die Längsachse der Welle angeordnet sind und die Richtungen der ersten Steigung und der zweiten Steigung einander entgegengesetzt sind. Ferner hat das erste Schaltelement eine Öffnung mit einem Innengewinde, das komplementär zu dem ersten Außengewinde ausgebildet ist und zumindest teilweise mit dem ersten Außengewinde in Eingriff steht. Das dritte Schaltelement hat eine Öffnung mit einem Innengewinde, das komplementär zu dem zweiten Außengewinde ausgebildet ist und zumindest teilweise mit dem zweiten Außengewinde in Eingriff steht. Weiterhin ist die Bewegung des Betätigungselements von der ersten Betätigungsposition in die zweite Betätigungsposition eine Drehung des Betätigungselements um die Längsachse des Durchgangslochs, wodurch die drehfest mit dem Betätigungselement verbundene Welle um deren Längsachse gedreht wird. Vorzugsweise sind das Außengewinde der Welle und die Innengewinde der Schaltelemente jeweils Regelgewinde, Grobgewinde oder, in einer weiteren beispielhaften Ausführung, Feingewinde. Beispielsweise sind die Steigungen des Außengewindes der Welle und der Innengewinde der Schaltelemente jeweils derart ausgeführt, dass die erste Arretierungseinheit und die zweite Arretierungseinheit jeweils entweder durch eine Achtel-, eine Viertel oder eine halbe Drehung des Betätigungselements um die Längsachse des Durchgangslochs arretierbar sind.

Gemäß einiger Ausführungsformen kann vorgesehen sein, dass eine kombinierte Arretierungseinheit vorgesehen ist, welche ein Kupplungsstück umfasst, das in einer ersten Schaltposition eine Schwenkbewegung des Lagerflächensegment mit dem Viergelenk um die zweite Schwenkachse und eine Schwenkbewegung der zweiten Schwenkachse um die erste Schwenkachse ermöglicht, in einer zweiten Schaltposition eine Schwenkbewegung der zweiten Schwenkachse um die erste Schwenkachse sperrt, und in einer dritten Schaltposition zusätzlich auch eine Schwenkbewegung des Lagerflächensegments um die zweite Schwenkachse relativ zu dem ersten Lenker oder der Koppel sperrt. Somit kann mit der kombinierten Arretierungseinheit wahlweise entweder die Bewegung des Viergelenks, oder die Drehung des Lagerflächensegments um den zusätzlichen Freiheitsgrad relativ zum Viergelenk, oder beide dieser Bewegungen arretiert werden. Die kombinierte Arretierungseinheit übernimmt somit die Funktion der ersten und zweiten Arretierungseinheiten der voranstehend beschriebenen Ausführungsformen.

Dabei kann die Verstellvorrichtung ferner ein Verbindungselement zur drehbaren Verbindung des Lagerflächensegments mit dem Viergelenk umfassen, und das Kupplungsstück kann axial in Richtung der zweiten Schwenkachse verschiebbar sein. Weiterhin kann vorgesehen sein, dass das Kupplungsstück wenigstens eine Außenverzahnung aufweist, die in eine Innenverzahnung des ersten Lenkers und/oder der Koppel und/oder des Verbindungselements eingreifen kann. Über den Eingriff der Außenverzahnung des Kupplungsstücks in entsprechende Innenverzahnungen am ersten Lenker, der Koppel und/oder des Verbindungselements kann eine sichere Arretierung der entsprechenden Komponenten relativ zum Kupplungsstück erreicht werden.

Weiterhin kann dabei vorgesehen sein, dass das Kupplungsstück ferner mindestens einen Zentrierfortsatz umfasst, auf welchem der erste Lenker und/oder die Koppel und/oder das Verbindungselement frei drehbar sind. Durch den Zentrierfortsatz können der erste Lenker, die Koppel und das Verbindungselement jeweils exakt im Drehlager zentriert gehalten werden, auch wenn einige oder alle dieser Bauteile nicht durch die Arretierungseinheit blockiert werden. Eine vorteilhafte Ausführung des Zentrierfortsatzes ist eine zylindrische Form. Allerdings sind auch andere Geometrien denkbar, bei denen der Zentrierfortsatz innerhalb der Mantelfläche des Zahnkopfkreises der Innenverzahnung zu liegen kommt. Demnach kann eine Ausführung auch so gestaltet sein, daß nur wenige zB. zwei oder drei Bereiche der Mantelfläche des Zentrierfortsatz mit der Zylinderfläche des maximal ausführbaren Zentrierfortsatzes zu liegen kommt.

Weiterhin kann wenigstens ein axialer Randbereich der Außenverzahnung des Kupplungsstücks derart ausgebildet sein, dass in diesem Randbereich die Seitenwände jeweils benachbarter Zähne derart relativ zueinander geneigt sind, dass trichterförmige Zwischenräume zwischen benachbarten Zähnen gebildet werden. Dadurch kann bei einer axialen Verschiebung des Kupplungsstücks sichergestellt werden, dass die Zähne der entsprechenden Innenverzahnung, in die die Außenverzahnung eingreift, jeweils in die trichterförmigen Zwischenräume eintreten können, ohne dass das Kupplungsstück innerhalb der Innenverzahnung des ersten Lenkers, der Koppel oder des Verbindungselements blockiert.

Am Kupplungsstück kann dabei ein federgelagertes Rastelement vorgesehen sein, das in die Innenverzahnung des ersten Lenkers und/oder der Koppel und/oder des Verbindungselements eingreift. Das Rastelement stellt dabei sicher, dass die Außenverzahnung des Kupplungsstücks immer passend relativ zur Innenverzahnung der anderen Bauteile ausgerichtet ist.

Die jeweiligen Innenverzahnungen des ersten Lenkers, der Koppel und des Verbindungselements können in axialer Richtung in beliebiger Reihenfolge hintereinander angeordnet sein. Das Kupplungsstück kann dabei wahlweise mit einem, zwei oder drei der Innenverzahnungen in Eingriff gebracht werden. Wenn das Kupplungsstück dabei die Relativbewegung des ersten Lenkers und der Koppel verhindert, ist das Viergelenk arretiert, und wenn das Kupplungsstück die Relativbewegung des Verbindungselement relativ zum ersten Lenker oder zur Koppel verhindert, ist die Drehung des Lagerflächensegments um die zweite Schwenkachse arretiert.

Gemäß einer weiteren Ausführungsform kann vorgesehen sein, dass das Lagerflächensegment ein erstes Teilsegment und ein zweites Teilsegment aufweist, welche relativ zueinander um eine weitere Schwenkachse verschwenkbar sind, wobei die weitere Schwenkachse im Wesentlichen senkrecht zur ersten und zweiten Schwenkachse verläuft. Eine Rotationssperrvorrichtung kann dabei in einem vorbestimmten Winkelbereich der Verschwenkung um die weitere Schwenkachse eine Rotation des Lagerflächensegments um die zweite Schwenkachse in wenigstens einer Richtung sperren. Bei den Teilsegmenten kann es sich beispielsweise um Auflageflächen für einen Unterschenkel und einen Oberschenkel eines Patienten handeln. Wenn für eine kniende Lagerung des Patienten die Unterschenkelplatte und die Oberschenkelplatte senkrecht zueinander ausgerichtet sind, wird durch die Rotationssperrvorrichtung eine ungewollte Rotation der Unterschenkelplatte gesperrt, so dass ein Absturz des Patienten verhindert werden kann. Hierbei kann vorgesehen sein, dass beispielsweise nur eine Rotation der Unterschenkelplatte nach außen gesperrt ist, da dies aufgrund der Kräfteverteilung bei einem auf der Unterschenkelplatte knienden Patienten die wahrscheinlichere Rotationsrichtung ist.

Die Rotationssperrvorrichtung kann dabei ein Kontaktelement aufweisen, welches mit dem zweiten Teilsegment fest verbunden ist. Ferner kann die Rotationssperrvorrichtung ein Anschlagselement aufweisen, welches mit der Koppel oder mit dem ersten Lenker des Viergelenks fest verbunden ist. Bei einer Verstellung des zweiten Teilsegments relativ zum ersten Teilsegment um die weitere Schwenkachse wird dann das Kontaktelement in Kontakt mit dem Vorsprung gebracht wird, und sperrt somit eine Verschwenkung des Lagerflächensegments um die zweite Schwenkachse in eine Richtung.

Gemäß einiger Ausführungsformen kann das Kontaktelement einen länglichen Vorsprung umfassen.

Weiterhin kann vorgesehen sein, dass die Rotationssperrvorrichtung in einem Winkelbereich von 75° bis 90° der Verstellung um die weitere Schwenkachse aktiv wird und ein Verschwenken des Lagerflächensegments um die zweite Schwenkachse sperrt. Dadurch kann auch dann, wenn die Unterschenkelplatte um etwas weniger als 90° gegenüber der Oberschenkelplatte verschwenkt ist, bereits eine Sperrung der ungewünschten Außenrotation der Unterschenkelplatte um die zweite Schwenkachse verhindert werden.

In einem Sperrzustand der Rotationssperrvorrichtung kann dabei die zweite Schwenkachse mittels des Viergelenks weiterhin um die erste Schwenkachse verschwenkbar sein, so dass eine Einstellung der Position des Lagerflächensegments mittels des Viergelenks weiterhin möglich ist.

Weitere Merkmale und Vorteile der Erfindung ergeben sich aus der nachfolgenden Beschreibung, die die Erfindung anhand von Ausführungsbeispielen in Zusammenhang mit den beigefügten Figuren näher erläutert. Es zeigen:
- Figur 1: eine perspektivische Darstellung einer mit einer Säule eines nicht dargestellten Operationstisches verbindbaren Patientenlagerfläche;
- Figur 2: eine perspektivische Darstellung einer Verstellvorrichtung mit einer Oberschenkelplatte und einer Unterschenkelplatte der Patientenlagerfläche nach Fig. 1;
- Figur 3: eine perspektivische Darstellung eines Befestigungselements und eines Viergelenks der Verstellvorrichtung nach Fig. 2;
- Figur 4: eine Seitenansicht der Verstellvorrichtung nach den Figuren 2 und 3;
- Figur 5: eine perspektivische Darstellung von Elementen zum Verschwenken eines Lagerflä-chensegments relativ zum Viergelenk und Elementen zum Sperren einer Schwenkbewegung des Lagerflächensegments und des Viergelenks;
- Figur 6: eine Explosionsdarstellung eines ersten Lenkers des Viergelenks und Elementen von einer mit dem ersten Lenker wirkverbundenen ersten und einer zweiten Arretierungseinheit sowie einem Schaltelement und einem Betätigungselement;
- Figur 7: eine Draufsicht auf Elemente der Verstellvorrichtung;
- Figur 8: eine Schnittdarstellung der Verstellvorrichtung entlang der Schnittlinie A-A nach Fig. 7, in der Elemente der ersten Arretierungseinheit, der zweiten Arretierungseinheit und des Betätigungselements sichtbar sind;
- Figur 9: eine perspektivische Darstellung einer Kurvenscheibe der ersten Arretierungseinheit;
- Figur 10: eine perspektivische Darstellung einer Kurvenscheibe der zweiten Arretierungseinheit;
- Figur 11: eine perspektivische Darstellung eines Gelenkelements der ersten Arretierungseinheit;
- Figur 12: eine perspektivische Darstellung eines ersten Sperrelements der ersten Arretierungseinheit;
- Figur 13: eine weitere Draufsicht auf Elemente der Verstellvorrichtung;
- Figur 14: eine Schnittdarstellung entlang der Schnittlinie B-B nach Fig. 13;
- Figur 15: eine Vorderansicht der Verstellvorrichtung mit einer orthogonal zu einer Oberschenkelplatte angeordneten Unterschenkelplatte,
- Figur 16: eine Schnittdarstellung entlang der Schnittlinie C-C nach Fig. 15;
- Figur 17: eine vergrößerte Darstellung des in Fig. 16 gekennzeichneten Bereichs D;
- Figur 18: eine Seitenansicht von Elementen der Verstellvorrichtung, wobei die zur Darstellungsperspektive nach Fig. 16 gegenüberliegende Seite dieser Elemente dargestellt ist;
- Figur 19: eine Vorderansicht der in Figur 18 gezeigten Elemente;
- Figur 20: eine Schnittdarstellung entlang der Schnittlinie E-E nach Fig. 19;
- Figur 21: eine perspektivische Darstellung der Patientenlagerfläche, wobei die Oberschenkelplatte und die Unterschenkelplatte gegenüber der in Figur 1 gezeigten Position verschwenkt sind;
- Figur 22: eine schematische Darstellung des Viergelenks und des ersten Verbindungselements in einer Draufsicht;
- Figur 23: eine schematische Draufsicht des Viergelenks und des ersten Verbindungselements in einer weiteren Position, wobei die Oberschenkelplatte und die Unterschenkelplatte relativ zu der in Figur 22 dargestellten Position verschwenkt worden sind;
- Figur 24: eine schematische Draufsicht des Viergelenks und des ersten Verbindungselements, wobei das erste Verbindungselement relativ zu der in Figur 22 dargestellten Position um die zweite Schwenkachse verschwenkt worden ist;
- Figur 25: eine perspektivische Darstellung der Patientenlagerfläche, wobei die Oberschenkelplatte und die Unterschenkelplatte gegenüber der in Figur 21 gezeigten Stellung in eine weitere Position verschwenkt sind;
- Figur 26: eine schematische Draufsicht des Viergelenks und des ersten Verbindungselements in der in Figur 25 gezeigten Stellung der Oberschenkelplatte und der Unterschenkelplatte;
- Figur 27: eine perspektivische Darstellung der Patientenlagerfläche, wobei die Lagerflächensegmente der Patientenlagerfläche in einer für eine Knie-Ellenbogen-Lage des Patienten geeigneten Position angeordnet sind;
- Figur 28: eine perspektivische Darstellung der Patientenlagerfläche, wobei die Oberschenkelplatte und die Unterschenkelplatte relativ zu der in Figur 27 gezeigten Position parallel verschoben sind;
- Figur 29: eine schematische Draufsicht des Viergelenks und des ersten Verbindungselements in der in Figur 28 gezeigten Position;
- Figur 30: eine perspektivische Darstellung einer Anordnung von Sperrelementen einer Verstellvorrichtung gemäß einer zweiten Ausführungsform;
- Figur 31: eine perspektivische Darstellung der zweiten Kurvenscheibe gemäß der zweiten Ausführungsform der Verstellvorrichtung;
- Figur 32: eine perspektivische Darstellung einer Anordnung aus Kurvenscheiben und eines Betätigungsstifts gemäß der zweiten Ausführungsform, wobei sich der Betätigungsstift in einer zweiten Betätigungsposition befindet;
- Figur 33: eine perspektivische Darstellung einer Anordnung aus den Kurvenscheiben und des Betätigungsstifts gemäß der zweiten Ausführungsform, wobei sich der Betätigungsstift in einer dritten Betätigungsposition befindet;
- Figur 34: eine Seitenansicht eines ersten Lenkers, eines ersten Verbindungselements und eines Betätigungselements einer Verstellvorrichtung gemäß einer dritten Ausführungsform;
- Figur 35: ein Schnitt durch die Schnittlinie F-F nach Figur 34;
- Figur 36: eine perspektivische Ansicht einer Welle der Verstellvorrichtung gemäß der dritten Ausführungsform;
- Figur 37: eine perspektivische Ansicht eines ersten Gewinderings der Verstellvorrichtung gemäß der dritten Ausführungsform;
- Figur 38: eine Seitenansicht einer Verstellvorrichtung gemäß einer vierten Ausführungsform;
- Figur 39: ein Schnitt entlang der Schnittlinie G-G nach Figur 38;
- Figur 40: eine Draufsicht auf eine Verstellvorrichtung gemäß einer fünften Ausführungsform;
- Figur 41: eine Ansicht der Verstellvorrichtung nach Figur 40 in einer unterschiedlichen Stellung des Viergelenks;
- Figur 42: eine Ansicht der Verstellvorrichtung nach Figur 41, bei der zusätzlich das Verbindungselement zum Lagerflächensegment relativ zum Viergelenk verschwenkt wurde;
- Figur 43: eine Ansicht der Verstellvorrichtung nach Figur 40, bei der das Verbindungselement zum Lagerflächensegment relativ zum Viergelenk verschwenkt wurde
- Figur 44: eine Ansicht der Verstellvorrichtung nach Figur 40, wobei das Verbindungselement ausgeblendet ist, so dass nur die Bauteile des Viergelenks zu sehen sind;
- Figur 45: eine perspektivische Ansicht der Verstellvorrichtung nach Figur 40;
- Figur 46: zeigt eine aufgebrochene perspektivische Ansicht einer kombinierten Arretierungseinheit, welche bei der fünften Ausführungsform verwendet werden kann, wobei die Arretierungseinheit in einer ersten Schaltposition ist;
- Figur 47: zeigt die Arretierungseinheit nach Figur 46 in einer zweiten Schaltposition;
- Figur 48: zeigt die Arretierungseinheit nach Figur 46 in einer dritten Schaltposition;
- Figur 49: zeigt die Arretierungseinheit nach Figur 46 in einer vierten Schaltposition;
- Figur 50: zeigt eine Ansicht eines Kuppungstücks der Arretierungseinheit nach Figur 46;
- Figur 51: zeigt eine weitere Ausführung des Kupplungsstücks nach Figur 50;
- Figur 52: zeigt eine weitere Ausführungsform der Verstellvorrichtung am Beispiel eines Beinplattenpaares;
- Figur 53: zeigt eine Beinplatte des in Figur 52 dargestellten Beinplattenpaares;
- Figur 54: zeigt die Beinplatte nach Figur 53, bei der die Oberschenkelauflage entfernt wurde, um die darunterliegende Verstellvorrichtung sichtbar zu machen;
- Figur 55: zeigt eine perspektivische Ansicht der Verstellvorrichtung nach Figur 54;
- Figur 56: zeigt eine perspektivische Ansicht der Beinplatte nach Figur 54, wobei die Unterschenkelplatte relativ zur Oberschenkelplatte verschwenkt wurde;
- Figur 57: zeigt die Beinplatte nach Figur 56 in einer unterschiedlichen Winkelstellung;
- Figur 58: zeigt eine perspektivische Ansicht der Verstellvorrichtung gemäß der sechsten Ausführungsform, wobei Bauteile ausgeblendet sind, um die in Kontakt tretenden Wirkflächen aufzuzeigen; und
- Figur 59: zeigt die Verstellvorrichtung nach Figur 58 aus einer anderen Richtung.

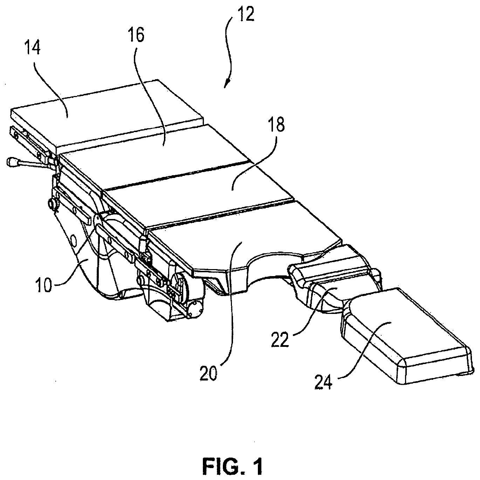

Figur 1 zeigt eine perspektivische Darstellung einer an einer Schnittstelle 10 eines nicht dargestellten Operationstisches befestigten Patientenlagerfläche 12, die vielseitig bei Operationen, die insbesondere eine Knie-Ellenbogen-Lage eines Patienten erfordern, einsetzbar ist. Die Patientenlagerfläche 12 hat eine Kopfplatte 14, eine Rückenplatte 16, eine Rumpfplatte 18, eine Gelenkmodulplatte 20, eine Oberschenkelplatte 22 und eine Unterschenkelplatte 24. Die Unterschenkelplatte 24 und die Oberschenkelplatte 22 sind über eine Verstellvorrichtung 26 miteinander und mit der Gelenkmodulplatte 20 verbunden. Auf der Gelenkmodulplatte 20 wird bei einer Rückenlage des Patienten dessen Becken angeordnet.

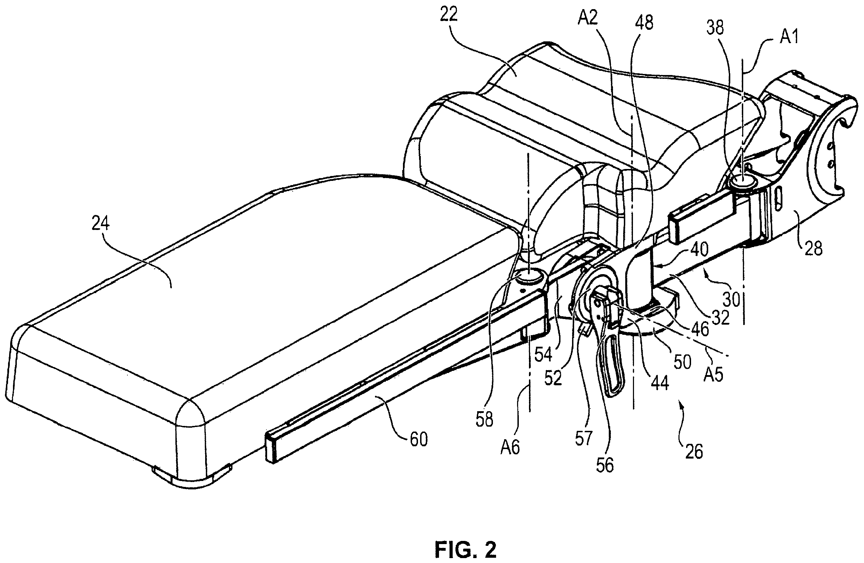

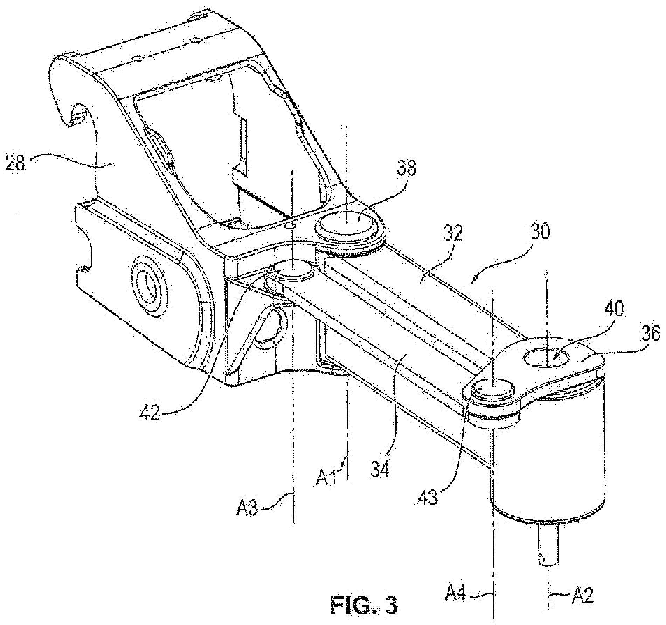

Figur 2 zeigt eine perspektivische Darstellung der Verstellvorrichtung 26 mit der Oberschenkelplatte 22 und der Unterschenkelplatte 24 der Patientenlagerfläche 12 nach Fig. 1. Die Verstellvorrichtung 26 umfasst ein Befestigungselement 28 und ein Viergelenk 30, die separat in einer perspektivischen Darstellung in Figur 3 gezeigt sind.

Das Viergelenk 30 hat einen ersten Lenker 32, einen zweiten Lenker 34, eine Koppel 36 und ein Basiselement, wobei das Befestigungselement 28 als Basiselement des Viergelenks 30 dient. Ein erstes Ende des ersten Lenkers 32 ist über ein erstes Drehlager 38 um eine erste Schwenkachse A1 schwenkbar mit dem Befestigungselement 28 verbunden. Der erste Lenker 32 ist an seinem zweiten Ende über ein zweites Drehlager 40 mit einem ersten Ende der Koppel 36 um eine zu der ersten Schwenkachse A1 parallele zweite Schwenkachse A2 schwenkbar verbunden. Des Weiteren ist der parallel zu dem ersten Lenker 32 angeordnete zweite Lenker 34 an seinem ersten Ende über ein drittes Drehlager 42 mit dem Befestigungselement 28 um eine zu der ersten Schwenkachse A1 parallele dritte Schwenkachse A3 und an seinem zweiten Ende über ein viertes Drehlager 43 mit einem dem ersten Ende der Koppel 36 gegenüberliegenden zweiten Ende der Koppel 36 um eine zu der ersten Schwenkachse A1 parallele vierte Schwenkachse A4 schwenkbar verbunden.

Ferner ist der erste Lenker 32, wie in Figur 2 gezeigt ist, an dessen zweitem Ende mit einem gabelförmig ausgebildeten ersten Verbindungselement 44 der Verstellvorrichtung 26 um die zweite Schwenkachse A2 schwenkbar verbunden. Das erste Verbindungselement 44 hat einen ersten Gabelarm 46 und einen zweiten Gabelarm 48, die das zweite Ende des ersten Lenkers 32 und das erste Ende der Koppel 36 umgreifen. Ferner ist die Oberschenkelplatte 22 fest mit dem zweiten Gabelarm 48 verbunden. Weiterhin sind der erste Gabelarm 46 und der zweite Gabelarm 48 gegenüber der Koppel 36 um die zweite Schwenkachse A2 schwenkbar, so dass das erste Verbindungselement 44 gegenüber dem ersten Lenker 32 und gegenüber der Koppel 36 verschwenkt werden kann.

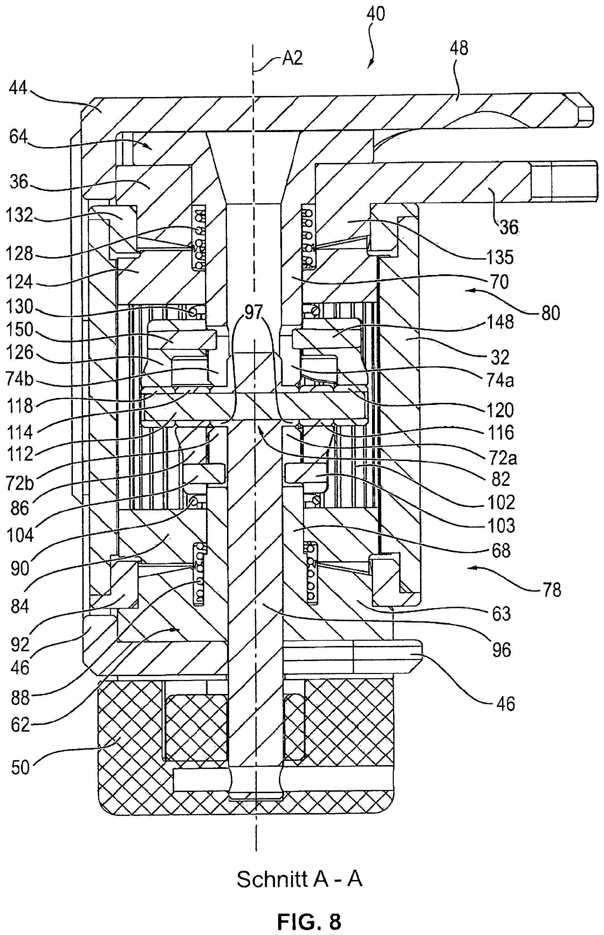

Ferner hat die Verstellvorrichtung 26 ein in Figur 2 dargestelltes Betätigungselement 50, das mit einer in das zweite Drehlager 40 integrierten ersten Arretierungseinheit und einer in das zweite Drehlager 40 integrierten zweiten Arretierungseinheit der Verstellvorrichtung 26 verbunden ist. Die erste Arretierungseinheit ist in Figur 8 mit dem Bezugszeichen 78 und die zweite Arretierungseinheit mit dem Bezugszeichen 80 bezeichnet. Das Betätigungselement 50 ist sowohl gegenüber dem ersten Verbindungselement 44 als auch gegenüber dem ersten Lenker 32 um die Schwenkachse A2 drehbar. Das erste Verbindungselement 44 ist über ein fünftes Drehlager 52 mit einem zweiten Verbindungselement 54 der Verstellvorrichtung 26 um eine fünfte Schwenkachse A5 schwenkbar verbunden. Die fünfte Schwenkachse A5 ist orthogonal windschief zur zweiten Schwenkachse A2. Das fünfte Drehlager 52 umfasst eine Schnellspannvorrichtung 56, die das fünfte Drehlager 52 wahlweise sperrt oder freigibt.

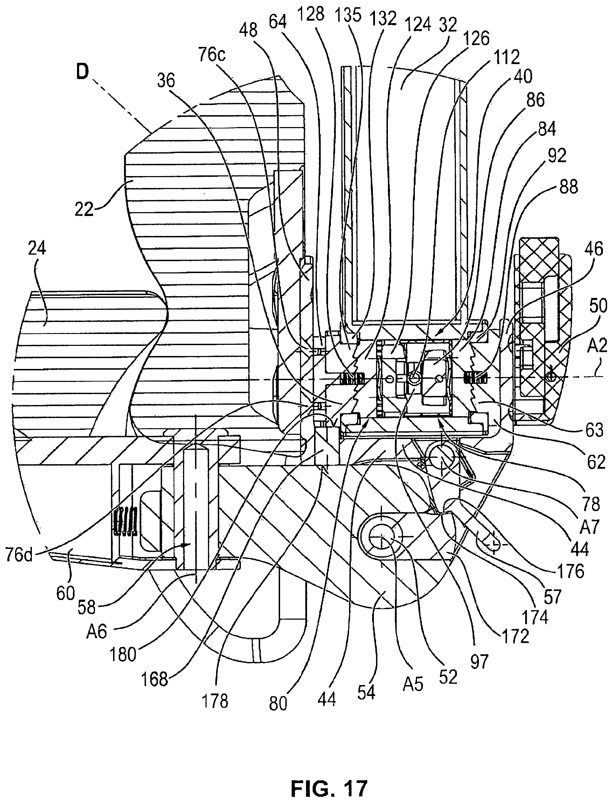

Die Schnellspannvorrichtung 56 umfasst einen Arretierungshebel 57, der in einer in Figur 17 dargestellten gegenüber der Unterschenkelplatte 24 um die fünfte Schwenkachse A5 verschwenkten Stellung der Oberschenkelplatte 22 für ein Verschwenken des zweiten Verbindungselements 54 um die fünfte Schwenkachse A5 zusätzlich zum Lösen der Schnellspannvorrichtung 56 betätigt werden muss. Funktion und Aufbau des Arretierungshebels 57 werden nachfolgend insbesondere in Verbindung mit Figur 17 näher erläutert.

Die Verstellvorrichtung 26 umfasst einen Holm 60, der über ein sechstes Drehlager 58 mit dem zweiten Verbindungselement 54 um eine sechste Schwenkachse A6 schwenkbar verbunden ist und in einer gewünschten Winkelposition arretiert werden kann. Die Unterschenkelplatte 24 ist fest mit dem Holm 60 verbunden. Eine alternative Ausführungsform unterscheidet sich davon durch eine feste Verbindung des Holms 60 mit dem zweiten Verbindungselement 54.

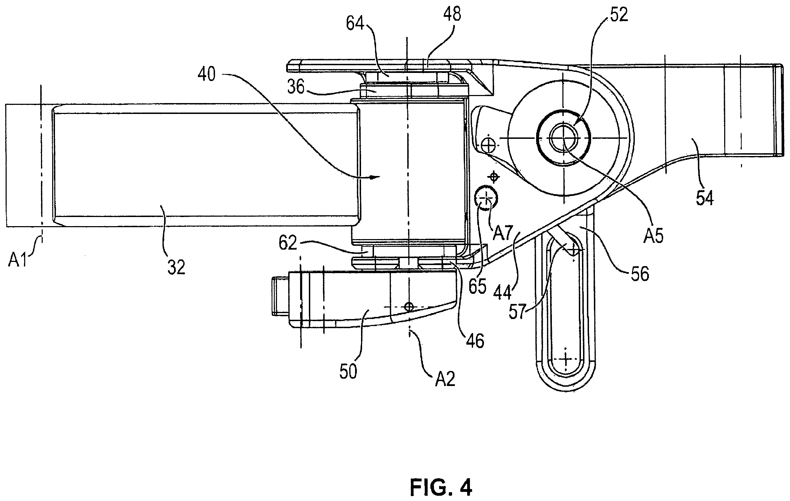

In Figur 4 ist eine Seitenansicht der Verstellvorrichtung 26 nach den Figuren 2 und 3 gezeigt, in der der erste Lenker 32, das erste Verbindungselement 44 und das zweite Verbindungselement 54 der Verstellvorrichtung 26 dargestellt sind. Der erste Gabelarm 46 des ersten Verbindungselements 44 ist mit einem ersten Gelenkelement 62 und der zweite Gabelarm 48 mit einem zweiten Gelenkelement 64 fest verbunden. Das zweite Gelenkelement 64 ist um die zweite Schwenkachse A2 schwenkbar zur Koppel 36 angeordnet. Der Arretierungshebel 57 ist um einen mit dem ersten Verbindungselement 44 verbundenen Stift 65 um eine siebte Schwenkachse A7 schwenkbar gelagert.

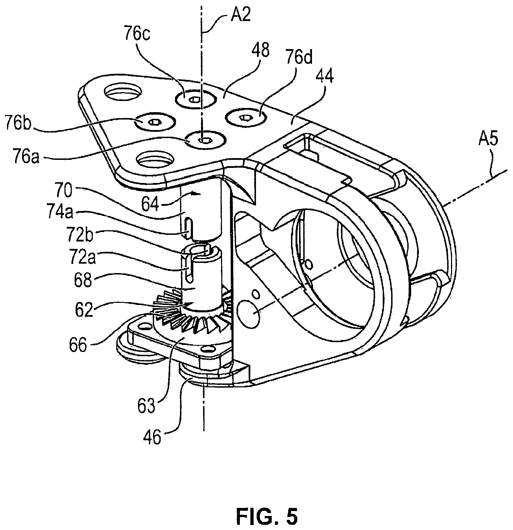

Figur 5 zeigt eine perspektivische Darstellung des ersten Verbindungselements 44 zusammen mit dem ersten Gelenkelement 62 und dem zweiten Gelenkelement 64, die jeweils fest mit dem ersten Verbindungselement 44 über Schrauben verbunden sind, von denen in Figur 5 die das zweite Gelenkelement 64 mit dem zweiten Gabelarm 48 verbindenden Schrauben 76a bis 76d sichtbar sind.

Das erste Gelenkelement 62 hat einen Lagerzapfen 68 und das zweite Gelenkelement 64 hat einen Lagerzapfen 70, deren Längsachsen jeweils mit der zweiten Schwenkachse A2 zusammenfallen und die jeweils ein zylinderförmiges und konzentrisch um die zweite Schwenkachse A2 ausgebildetes Durchgangsloch haben. Die Wandung des in dem Lagerzapfen 68 ausgebildeten Durchgangslochs weist eine erste Aussparung 72a und eine zweite Aussparung 72b auf. Das den Aussparungen 72a und 72b gegenüberliegende Ende der Wandung des in dem Lagerzapfen 70 ausgebildeten Durchgangslochs weist zwei den Aussparungen des Lagerzapfens 68 des ersten Gelenkelements 62 jeweils gegenüberliegende Aussparungen auf, von denen die erste Aussparung 74a in Figur 5 und die zweite Aussparung 74b in Figur 8 gezeigt ist. Das erste Gelenkelement 62 hat auf der dem zweiten Gabelarm 48 gegenüberliegenden Seite ein als Kronrad ausgebildetes Lager- und Eingriffselement 63, an dessen Stirnseite eine Zahnung 66 ausgebildet ist und das als erstes Eingriffselement dient.

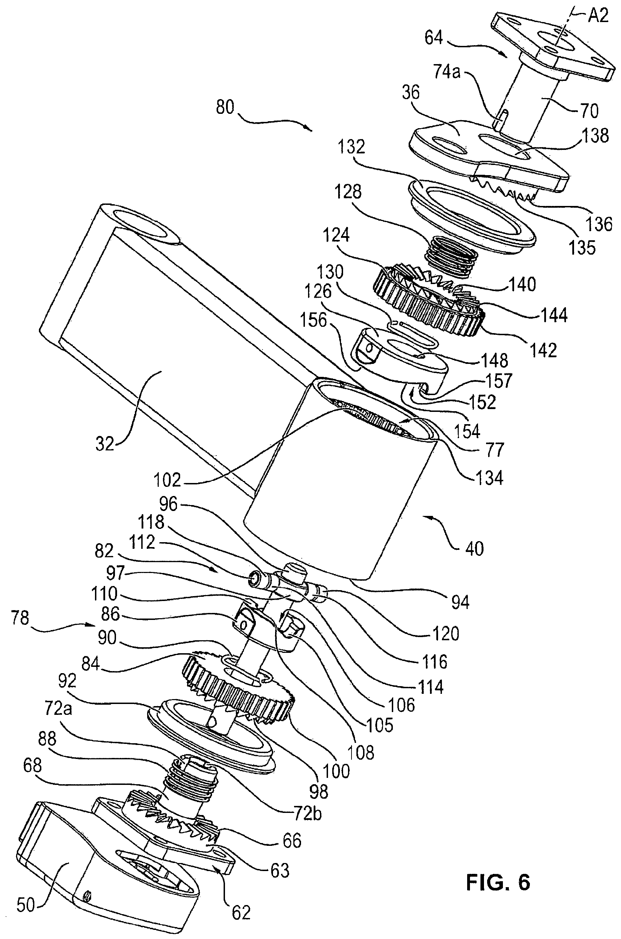

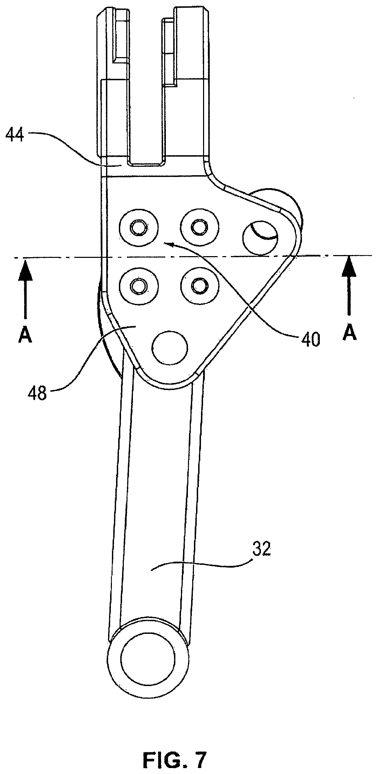

In Figur 6 ist eine Explosionsdarstellung des ersten Lenkers 32 des Viergelenks 30 und Elementen der mit dem ersten Lenker 32 wirkverbundenen ersten und zweiten Arretierungseinheit 78, 80 sowie ein Schaltelement 82 gezeigt. In Figur 7 ist eine Draufsicht auf den ersten Lenker 32 und das erste Verbindungselement 44 gezeigt. Figur 8 zeigt eine Schnittdarstellung der Verstellvorrichtung 26 entlang der Schnittlinie A-A nach Fig. 7, wobei Elemente der ersten Arretierungseinheit 78 und der zweiten Arretierungseinheit 80 dargestellt sind.

Wie in Figur 6 gezeigt, umfasst das zweite Drehlager 40 ein in dem zweiten Ende des ersten Lenkers 32 ausgebildetes zylinderförmiges Durchgangsloch 77, durch dessen Längsachse die zweite Schwenkachse A2 verläuft.

Die erste Arretierungseinheit 78 umfasst das erste Gelenkelement 62, ein erstes Sperrelement 84, eine erste Kurvenscheibe 86, eine erste Schraubendruckfeder 88, eine erste Wellenfeder 90 und einen ersten Lagerring 92. Die in einem Abstand entlang der zweiten Schwenkachse A2 zur ersten Arretierungseinheit 78 angeordnete zweite Arretierungseinheit 80 umfasst das zweite Gelenkelement 64, die Koppel 36, ein zweites Sperrelement 124, eine zweite Kurvenscheibe 126, eine zweite Schraubendruckfeder 128, eine zweite Wellenfeder 130 und einen zweiten Lagerring 132.

Das Schaltelement 82 umfasst eine Welle 96, einen Betätigungsstift 112, eine erste Rolle 114, eine zweite Rolle 116, eine dritte Rolle 118 und eine vierte Rolle 120, wobei die Rollen 114, 116, 118 und 120 jeweils ringförmig ausgebildet sind und jeweils einen Abschnitt des Betätigungsstifts 112 umschließen. Die Welle 96 ist durch das Durchgangsloch des ersten Gelenkelements 62 geführt und in diesem um die zweite Schwenkachse A2 schwenkbar gelagert. Die Welle 96 ist an ihrem ersten Ende mit dem Betätigungselement 50 drehfest verbunden. Ferner ist an dem dem ersten Ende der Welle 96 entgegengesetzten zweiten Ende der Welle 96 ein Vorsprung 97 ausgebildet, der zwischen dem ersten Gelenkelement 62 und dem zweiten Gelenkelement 64 angeordnet und über den die Welle 96 axial gelagert ist.

Wie in Figur 8 gezeigt ist, kontaktiert der erste Lagerring 92 mit einem Bereich seiner Mantelfläche die Wandung des Durchgangslochs 77 an dessen erster Öffnung 94. Das Lager- und Eingriffselement 63 des ersten Gelenkelements 62 ist innen im Lagerring 92 gleitend zu diesem angeordnet. In dem Durchgangsloch 77 ist ferner ein ringförmiges erstes Sperrelement 84 konzentrisch um die zweite Schwenkachse A2 angeordnet. Der Lagerzapfen 68 des ersten Gelenkelements 62 ist innen durch das erste Sperrelement 84 geführt und drehbar zu diesem angeordnet. Das erste Sperrelement 84 hat an seiner äußeren Mantelfläche eine Kerbverzahnung 100 nach Art eines Stirnrades. Die Kerbverzahnung 100 steht mit einer an der inneren Wandung des Durchgangslochs 77 komplementär ausgebildeten Kerbverzahnung 102, deren Zahnflanken parallel zur zweiten Schwenkachse A2 ausgerichtet sind, in Eingriff.

Ferner hat das erste Sperrelement 84 an seiner der Zahnung 66 des ersten Gelenkelements 62 gegenüberliegenden Stirnseite eine zu der Zahnung 66 des ersten Gelenkelements 62 komplementär ausgebildete Zahnung 98. Die Zahnungen 66 und 98 greifen in einem in Figur 8 gezeigten verriegelten Zustand der ersten Arretierungseinheit 78 ineinander, so dass das erste Gelenkelement 62 und das erste Sperrelement 84 dann drehfest verbunden sind.

Um den Lagerzapfen 68 des ersten Gelenkelements 62 herum ist eine erste Schraubendruckfeder 88 angeordnet. Die erste Schraubendruckfeder 88 ist vorgespannt zwischen dem ersten Gelenkelement 62 und dem ersten Sperrelement 84 angeordnet, so dass die Federkraft der ersten Schraubendruckfeder 88 das erste Gelenkelement 62 und das erste Sperrelement 84 entlang der zweiten Schwenkachse A2 auseinanderdrückt.

In einem Abstand zu dem ersten Sperrelement 84 ist die ringförmig ausgebildete erste Kurvenscheibe 86 um den Lagerzapfen 68 herum angeordnet und über die zwischen dem ersten Sperrelement 84 und der ersten Kurvenscheibe 86 angeordnete erste Wellenfeder 90 mit dem ersten Sperrelement 84 derart federnd verbunden, dass die erste Wellenfeder 90 die erste Kurvenscheibe 86 und das erste Sperrelement 84 entlang der zweiten Schwenkachse A2 auseinanderdrückt.

Die erste Kurvenscheibe 86 ist über einen in die erste Aussparung 72a des Lagerzapfens 68 ragenden ersten Stift 103 und einen in die zweite Aussparung 72b des Lagerzapfens 68 ragenden zweiten Stift 104 drehfest jedoch in Richtung der zweiten Schwenkachse A2 verschiebbar zum Lagerzapfen 68 angeordnet.

Wie in Figur 6 gezeigt ist, hat die erste Kurvenscheibe 86 an ihrer von dem ersten Sperrelement 84 abgewandten Seite einen um die Welle 96 herum angeordneten Kurvenverlauf 106 mit einer ersten Senke 105, einer ersten Steigung 108 und einem ersten steigungslosen Bereich 110. Der Kurvenverlauf 106 wird auch als Kurvenbahn bezeichnet. Bei einer Drehung des Betätigungselements 50 wird das Schaltelement 82 gedreht, so dass die um den Betätigungsstift 112 angeordneten Rollen 114 und 116 entlang des Kurvenverlaufs 106 bewegt werden. Die Rollen 114, 116, 118 und 120 sind jeweils drehbar an dem Betätigungsstift 112 gelagert.

Wie in Figur 8 gezeigt, ist der zweite Lagerring 132 an einer zweiten Öffnung 134 des Durchgangslochs 77 des ersten Lenkers 32 angeordnet. An der Innenseite des zweiten Lagerrings 132 ist ein mit der Koppel 36 drehfest verbundener zylinderförmiger Zapfen 135 angeordnet, durch den die Koppel 36 über den Lagerring 132 um die Schwenkachse A2 drehbar zum ersten Lenker 32 ist. An der Stirnseite des Zapfens 135 ist eine Zahnung 136 konzentrisch um die zweite Schwenkachse A2 herum angeordnet. Der Zapfen 135 mit der Zahnung 136 bilden ein zweites Eingriffselement. Die Koppel 36 und der Zapfen 135 haben ein konzentrisch um die zweite Schwenkachse A2 ausgebildetes kreisförmiges Durchgangsloch 138, durch das der Lagerzapfen 70 des zweiten Gelenkelements 64 geführt und um die zweite Schwenkachse A2 schwenkbar gelagert ist.

Ferner ist der Lagerzapfen 70 durch ein konzentrisch um die zweite Schwenkachse A2 ausgebildetes Durchgangsloch 140 des zweiten Sperrelements 124 geführt, so dass das zweite Sperrelement 124 in Richtung der zweiten Schwenkachse A2 relativ zum Lagerzapfen 70 verschiebbar ist. Das zweite Sperrelement 124 ist ringförmig und hat an seiner äußeren Mantelfläche eine Kerbverzahnung 142, die komplementär zu der an der Innenseite des Durchgangslochs 77 ausgebildeten Kerbverzahnung 102 ausgebildet ist und mit dieser in Eingriff steht. Dadurch ist das zweite Sperrelement 124 drehfest zum ersten Lenker 32.

Ferner hat das zweite Sperrelement 124 eine der Zahnung 136 des Zapfens 135 der Koppel 36 gegenüberliegende Zahnung 144, die komplementär zu der Zahnung 136 ist. In einem in Figur 8 gezeigten verriegelten Zustand der zweiten Arretierungseinheit 80 ist das zweite Sperrelement 124 über die in Eingriff stehenden Zahnungen 136 und 144 mit der Koppel 36 drehfest verbunden.

Um den Lagerzapfen 70 des zweiten Gelenkelements 64 herum ist eine zweite Schraubendruckfeder 128 angeordnet. Die zweite Schraubendruckfeder 128 ist vorgespannt zwischen dem zweiten Gelenkelement 64 und dem zweiten Sperrelement 124 angeordnet, so dass die Federkraft der zweiten Schraubendruckfeder 128 das zweite Gelenkelement 64 und das zweite Sperrelement 124 entlang der zweiten Schwenkachse A2 auseinanderdrückt.

In einem Abstand zu dem zweiten Sperrelement 124 ist die ringförmig ausgebildete zweite Kurvenscheibe 126 um den Lagerzapfen 70 herum angeordnet und über die zwischen dem zweiten Sperrelement 124 und der zweiten Kurvenscheibe 126 angeordnete zweite Wellenfeder 130 mit dem zweiten Sperrelement 124 derart federnd verbunden, dass die zweite Wellenfeder 130 die zweite Kurvenscheibe 126 und das zweite Sperrelement 124 entlang der zweiten Schwenkachse A2 auseinanderdrückt.

Die zweite Kurvenscheibe 126 ist über einen in die erste Aussparung 74a des Lagerzapfens 70 ragenden ersten Stift 148 und einen in die zweite Aussparung 74b des Lagerzapfens 70 ragenden zweiten Stift 150 drehfest jedoch in Richtung der zweiten Schwenkachse A2 verschiebbar zum Lagerzapfen 70 angeordnet.

Die mit dem Lagerzapfen 70 in Eingriff stehende zweite Kurvenscheibe 126 hat an ihrer dem Betätigungsstift 112 des Schaltelements 82 zugewandten Seite einen um die zweite Schwenkachse A2 herum angeordneten Kurvenverlauf 152, der auch als Kurvenbahn bezeichnet wird. Der Kurvenverlauf 152 hat eine erste Senke 157, eine erste Steigung 154 und einen ersten steigungslosen Bereich 156. Wie in Figur 8 gezeigt ist, kontaktieren die dritte Rolle 118 und die vierte Rolle 120 den Kurvenverlauf 152, an dem sie bei einer Relativbewegung abrollen.

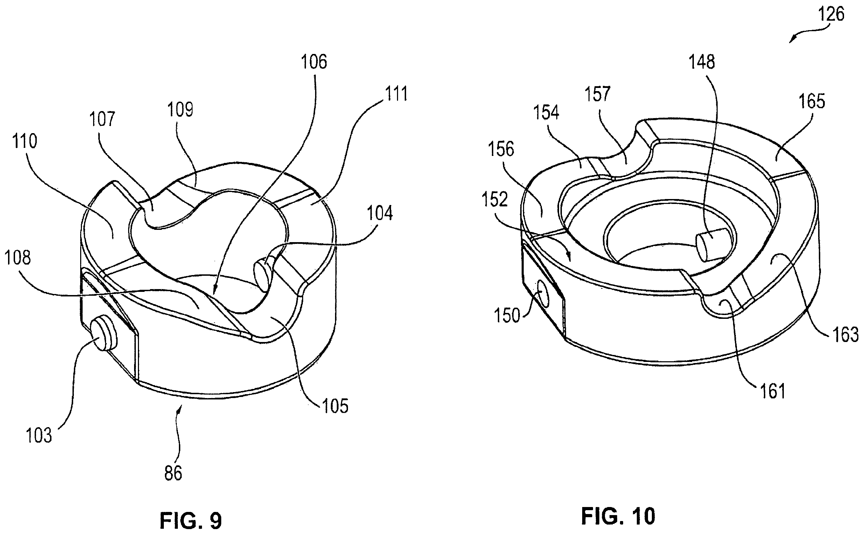

Figur 9 zeigt eine perspektivische Darstellung einer ersten Kurvenscheibe 86 der ersten Arretierungseinheit 78. Der Kurvenverlauf 106 der ersten Kurvenscheibe 86 hat neben der bereits erwähnten ersten Senke 105, der ersten Steigung 108 und dem ersten steigungslosen Bereich 110 eine zweite Senke 107, eine zweite Steigung 109 und einen zweiten steigungslosen Bereich 111, die jeweils zur mit der zweiten Schwenkachse A2 zusammenfallenden Längsachse der ersten Kurvenscheibe 86 achsensymmetrisch zu der ersten Senke 105, der ersten Steigung 108 und dem ersten steigungslosen Bereich 110 angeordnet sind. Die zweite Senke 107 ist dabei an dem Fußpunkt der zweiten Steigung 109 angeordnet.

Figur 10 zeigt eine perspektivische Darstellung der zweiten Kurvenscheibe 126. Der Kurvenverlauf 152 der zweiten Kurvenscheibe 126 hat ähnlich wie der Kurvenverlauf 106 der ersten Kurvenscheibe 86 eine zweite Senke 161, eine zweite Steigung 163 und einen zweiten steigungslosen Bereich 165, die jeweils zur zweiten Schwenkachse A2 achsensymmetrisch zu der ersten Senke 157, der ersten Steigung 154 und dem ersten steigungslosen Bereich 156 sind.

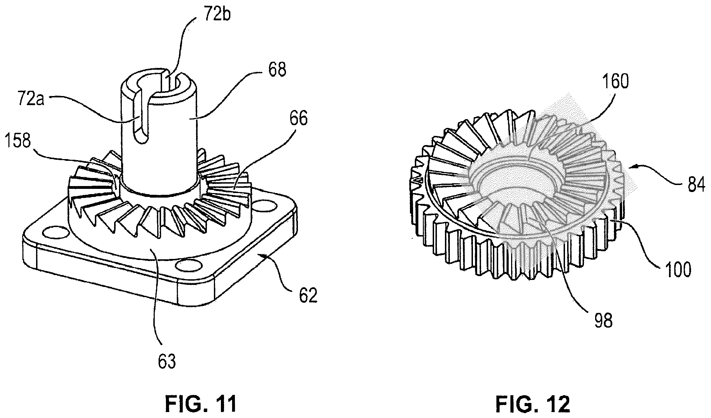

Figur 11 zeigt eine perspektivische Darstellung des ersten Gelenkelements 62. Zwischen dem Lagerzapfen 68 und dem Lager- und Eingriffselement 63 mit der Zahnung 66 ist ein Spalt 158 ausgebildet, in dem ein erstes Ende der ersten Schraubendruckfeder 88 angeordnet ist.

In Figur 12 ist eine perspektivische Darstellung des ersten Sperrelements 84 gezeigt. Dabei ist ein Vorsprung 160 sichtbar, an dem das zweite Ende der ersten Schraubendruckfeder 88 anliegt.

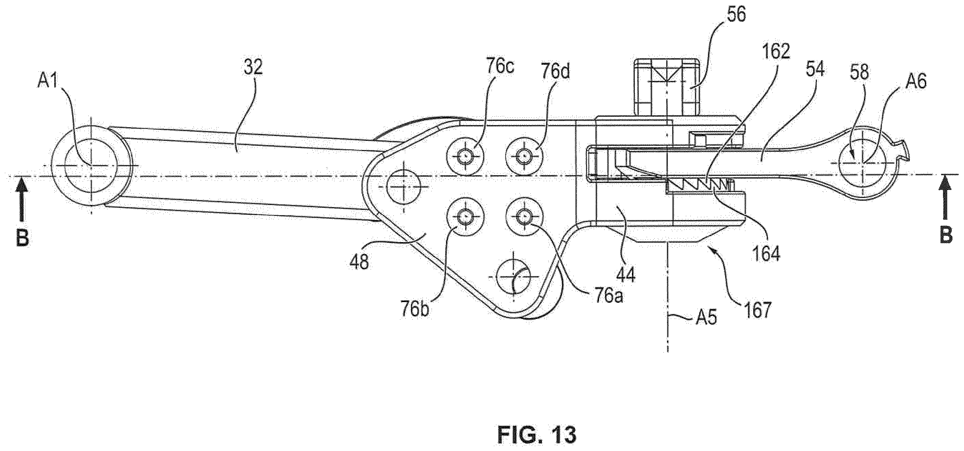

Figur 13 zeigt eine weitere Draufsicht auf Elemente der Verstellvorrichtung 26, in der der erste Lenker 32, das erste Verbindungselement 44, die Schnellspannvorrichtung 56 und das zweite Verbindungselement 54 dargestellt sind, das im Bereich des fünften Drehlagers 52 eine Zahnung 162 hat. Weiterhin hat das erste Verbindungselement 44 ein Rastelement 167, das um die fünfte Schwenkachse A5 drehfest und entlang der fünften Schwenkachse A5 verschiebbar gelagert ist. Das Rastelement 167 hat eine zu der Zahnung 162 komplementär ausgebildete Zahnung 164, die in einem in Figur 13 gezeigten verriegelten Zustand der Schnellspannvorrichtung 56 mit der Zahnung 162 derart in Eingriff steht, dass die Verbindungselemente 44 und 54 drehfest zueinander sind. Im Übrigen ist die Verbindung des ersten Verbindungselements 44 mit dem zweiten Verbindungselement 54 so ausgestaltet, wie es in dem Dokument DE 10 2005 054 175 A1 beschrieben ist, dessen Inhalt hiermit durch Bezugnahme aufgenommen wird.

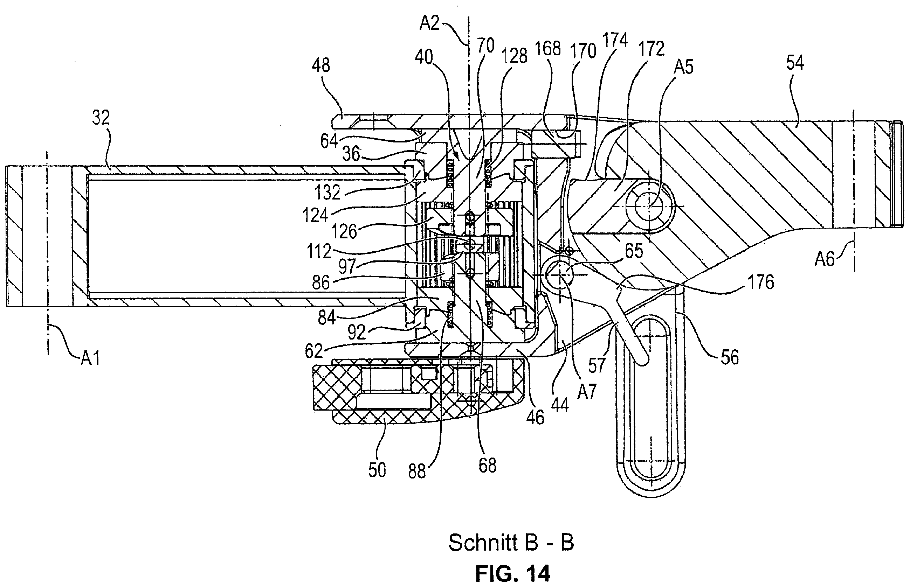

In Figur 14 ist eine Schnittdarstellung entlang der Schnittlinie B-B nach Fig. 13 gezeigt, bei dem die erste Arretierungseinheit 78 und die zweite Arretierungseinheit 80 in einer Längsrichtung geschnitten sind. Dadurch tritt der Vorsprung 97 der Welle 96 hervor, durch den der Betätigungsstift 112 hindurchgeführt ist. Der Lagerzapfen 70 des zweiten Gelenkelements 64 kontaktiert den Vorsprung 97 an seiner der ersten Seite gegenüberliegenden zweiten Seite.

Ferner weist das erste Verbindungselement 44 ein Rotationssperrelement 168 auf, das durch eine längliche Aussparung 170 des ersten Verbindungselements 44 geführt und in dieser entlang deren Längsachse verschiebbar gelagert ist. Vorzugsweise steht das Rotationssperrelement 168 aus der Aussparung 170 an dessen dem zweiten Verbindungselement 54 zugewandten Seite hervor.

In der gezeigten Schnittdarstellung ist zudem ein Sperrkörper 172 des zweiten Verbindungselements 54 mit einer Sperrfläche 174 und ein Vorsprung 176 des Arretierungshebels 57 dargestellt. Der Vorsprung 176 und der Sperrkörper 172 bilden ein formschlüssiges Gesperre, das bei einem Verschwenken des zweiten Verbindungselements 54 relativ zu dem ersten Verbindungselement 44 um die fünfte Schwenkachse A5 arretiert werden kann, so dass die eine Gegendruckfläche bildende Sperrfläche 174 und der Vorsprung 176 einander kontaktieren. In der gezeigten relativen Position des ersten Verbindungselements 44 zu dem zweiten Verbindungselement 54 ist das Gesperre nicht arretiert.

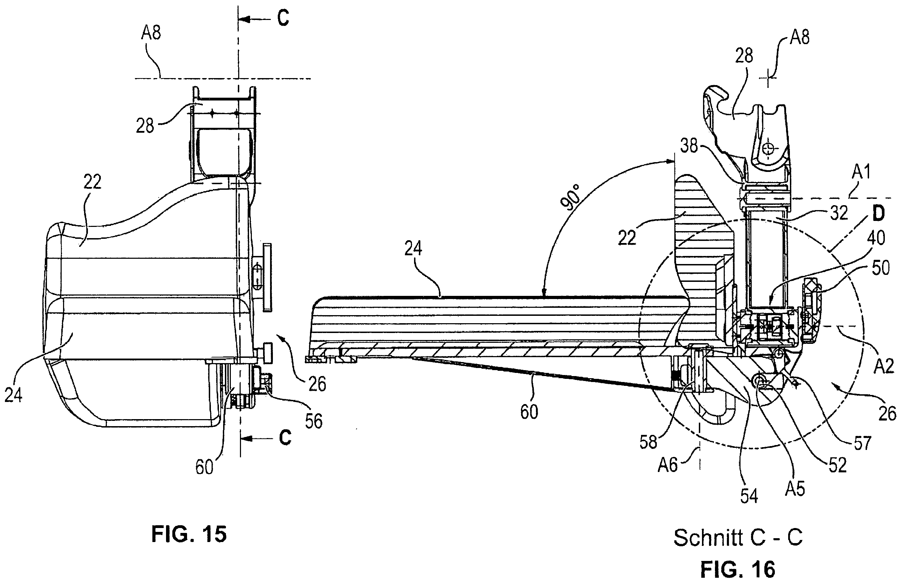

Figur 15 zeigt eine Ansicht der Verstellvorrichtung 26 von vorn, in der die Unterschenkelplatte 24 orthogonal zu der Oberschenkelplatte 22 angeordnet ist. Gegenüber der in Figur 2 gezeigten Position ist das Befestigungselement 28 relativ zu der Gelenkmodulplatte 20 um eine achte Schwenkachse A8 und die Unterschenkelplatte 24 relativ zu der Oberschenkelplatte 22 um die fünfte Schwenkachse A5 verschwenkt.

In Figur 16 ist eine Schnittdarstellung entlang der Schnittlinie C-C nach Fig. 15 gezeigt. Die Oberschenkelplatte 22 ist derart ausgebildet, dass ein Teil deren Stirnseite die Unterschenkelplatte 24 in einem dafür vorgesehenen Bereich kontaktiert.

Figur 17 zeigt eine vergrößerte Darstellung des in Fig. 16 gekennzeichneten Bereichs D. Ein erstes Ende 178 des Rotationssperrelements 168 kontaktiert das zweite Verbindungselement 54, wenn dieses gegenüber dem ersten Verbindungselement 44 um die fünfte Schwenkachse A5 um 90° verschwenkt worden ist. Das dem ersten Ende 178 gegenüberliegende zweite Ende 180 des Rotationssperrelements 168 kontaktiert die Koppel 36. Dadurch ist ein Verschwenken der Unterschenkelplatte 24 um die zweite Schwenkachse A2 relativ zu der Koppel 36 in dieser Position nicht mehr möglich, so dass sich die Unterschenkelplatte 24 in einer für die Knie-Ellenbogenlage des Patienten gesicherten Position unabhängig von der Aktivierung der Arretierungseinheiten 78 und 80 befindet.

Der Sperrkörper 172 des zweiten Verbindungselements 54 steht mit dem an dem Arretierungshebel 57 ausgebildeten Vorsprung 176 in formschlüssigem Eingriff, so dass das durch den Vorsprung 176 und den Sperrkörper 172 gebildete Gesperre arretiert und eine Betätigung des Arretierungshebels 57 für eine Verschwenkung des zweiten Verbindungselements 54 um die fünfte Schwenkachse A5 gegenüber dem ersten Verbindungselement 44 erforderlich ist. Der Arretierungshebel 57 wird bei der dafür erforderlichen Betätigung so weit um die siebte Schwenkachse A7 verschwenkt, bis der Vorsprung 176 nicht mehr den Sperrkörper 172 kontaktiert und die Arretierung des Gesperres aufgehoben ist. Nachdem ein Verschwenken des zweiten Verbindungselements 54 um die fünfte Drehachse A5 durch die Schnellspannvorrichtung 56 freigegeben ist, kann anschließend das zweite Verbindungselement 54 um die fünfte Schwenkachse A5 verschwenkt werden.

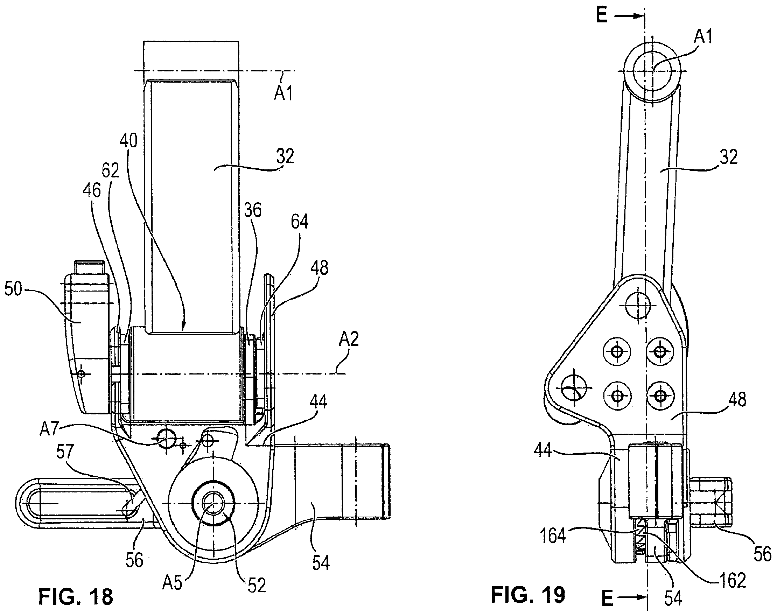

Figur 18 zeigt eine Seitenansicht von Elementen der Verstellvorrichtung 26, in der der erste Lenker 32, das Betätigungselement 50, das erste Verbindungselement 44 und das zweite Verbindungselement 54 aus einer zu Figur 17 entgegengesetzten Richtung in ihrem in Figur 17 dargestellten verschwenkten Zustand dargestellt sind. Das Betätigungselement 50 ist in derselben Betätigungsposition angeordnet.

Figur 19 zeigt eine Vorderansicht der in Figur 18 dargestellten Elemente. Ausgehend von dem in Figur 2 gezeigten Zustand ist das zweite Verbindungselement 54 zusammen mit der nicht dargestellten Unterschenkelplatte 24 gegenüber dem mit der nicht dargestellten Oberschenkelplatte 22 verbundenen ersten Verbindungselement 44 um die fünfte Schwenkachse A5 um 90° verschwenkt. Zum Verschwenken des zweiten Verbindungselements 54 gegenüber dem ersten Verbindungselements 44 ist die sich in dem verriegelten Zustand befindliche Schnellspannvorrichtung 56 zu lösen. Die Zahnungen 162 und 164 stehen im verriegelten Zustand der Schnellspannvorrichtung 56 in Eingriff.

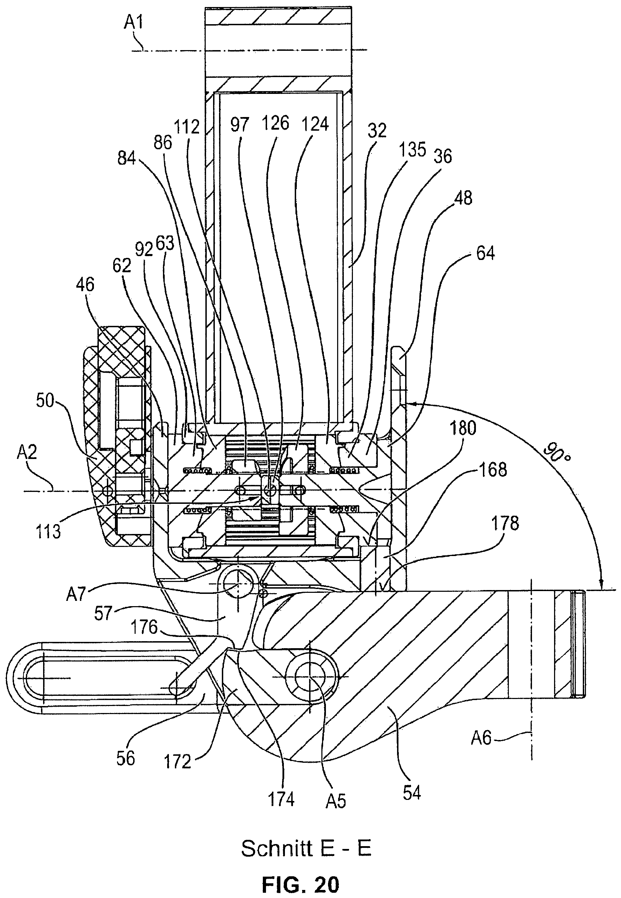

Figur 20 zeigt eine Schnittdarstellung entlang der Schnittlinie E-E nach Fig. 19, in der die relative Position des Betätigungsstifts 112 zu den Kurvenverläufen 106 und 152 dargestellt ist. Der Betätigungsstift 112 liegt in einer ersten Betätigungsposition 113 sowohl an dem ersten steigungslosen Bereich 110 und dem zweiten steigungslosen Bereich 111 des Kurvenverlaufs 106 als auch an dem ersten steigungslosen Bereich 156 und an dem zweiten steigungslosen Bereich 165 des Kurvenverlaufs 152 an. In der ersten Betätigungsposition 113 des Betätigungsstifts 112 sind die erste Arretierungseinheit 78 und die zweite Arretierungseinheit 80 jeweils im verriegelten Zustand.

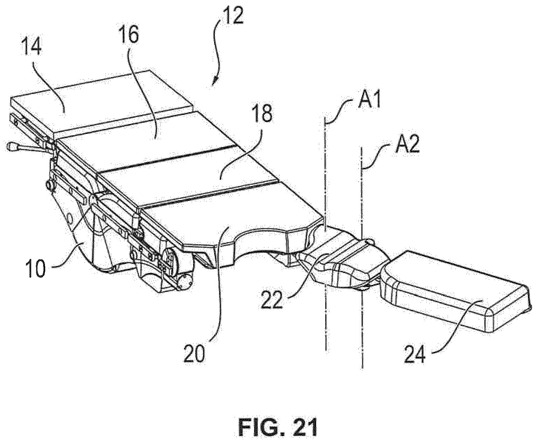

In Figur 21 ist eine perspektivische Darstellung der Patientenlagerfläche 12 gezeigt, wobei die Oberschenkelplatte 22 und die Unterschenkelplatte 24 gegenüber der in Figur 1 gezeigten Position um die erste Schwenkachse A1 verschwenkt sind. Die Unterschenkelplatte 24 ist nicht gegenüber der Oberschenkelplatte 22 verschwenkt, so dass die Längsachsen der Unterschenkelplatte 24 und der Oberschenkelplatte 22 zusammenfallen. Beim Verschwenken der Oberschenkelplatte 22 und der Unterschenkelplatte 24 wird die zweite Schwenkachse A2 durch eine Bewegung des Viergelenks 30 auf einer Kreisbahn um die erste Schwenkachse A1 verschwenkt.

Zum Positionieren der Oberschenkelplatte 22 und der Unterschenkelplatte 24 in der in Figur 21 gezeigten Position ausgehend von ihrer in Figur 1 gezeigten Position ist die zweite Arretierungseinheit 80 von ihrem verriegelten Zustand in einen entriegelten Zustand zu bringen, wodurch die Oberschenkelplatte 22 und die Unterschenkelplatte 24 zusammen um die erste Schwenkachse A1 schwenkbar sind.

Um die zweite Arretierungseinheit 80 von ihrem verriegelten Zustand in ihren entriegelten Zustand zu bringen, wird das Betätigungselement 50 um die zweite Schwenkachse A2 gedreht. In dem in Figur 8 gezeigten verriegelten Zustand der zweiten Arretierungseinheit 80 befindet sich der Betätigungsstift 112 in der ersten Betätigungsposition 113, in der die dritte Rolle 118 an dem ersten steigungslosen Bereich 156 des Kurvenverlaufs 152 und die vierte Rolle 120 an dem zweiten steigungslosen Bereich 165 des Kurvenverlaufs 152 anliegen.

Ausgehend von der ersten Betätigungsposition 113 des Betätigungsstifts 112 wird dieser bei einer Drehung des Betätigungselements 50 um die zweite Schwenkachse A2 gedreht. Dabei rollt die dritte Rolle 118 von dem ersten steigungslosen Bereich 156 entlang der ersten Steigung 154 in die erste Senke 157 und die vierte Rolle 120 von dem zweiten steigungslosen Bereich 165 entlang der zweiten Steigung 163 in die zweite Senke 161.

In einer durch diese Drehung erreichten zweiten Betätigungsposition des Betätigungsstifts 112, in der die dritte Rolle 118 die erste Senke 157 und die vierte Rolle 120 die zweite Senke 161 kontaktieren, befindet sich die zweite Arretierungseinheit 80 in ihrem entriegelten Zustand.

Bei dem Übergang von dem verriegelten Zustand in den entriegelten Zustand der zweiten Arretierungseinheit 80 drückt die zweite Schraubendruckfeder 128 das zweite Sperrelement 124 entlang der zweiten Schwenkachse A2 von der zweiten Öffnung 134 des Durchgangslochs 77 weg, bis dessen Zahnung 144 nicht mehr mit der Zahnung 136 des Zapfens 135 in Eingriff steht. Durch die Federkraft der zweiten Schraubendruckfeder 128 wird die zweite Kurvenscheibe 126 kontinuierlich gegen die dritte Rolle 118 und die vierte Rolle 120 gedrückt.

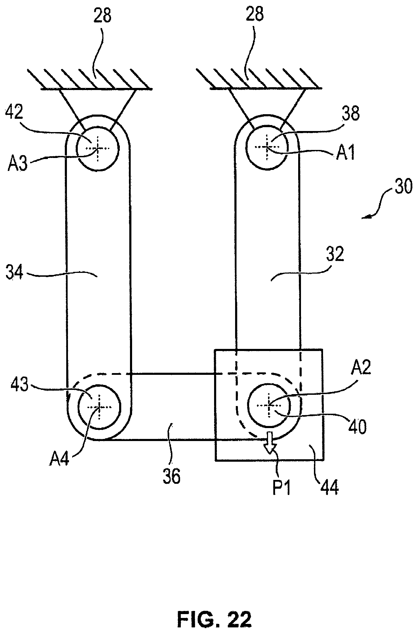

In dem entriegelten Zustand der zweiten Arretierungseinheit 80, in dem die Zahnungen 136 und 144 nicht in Eingriff stehen, kann die Koppel 36 relativ zu dem ersten Lenker 32, dem zweiten Sperrelement 124 und dem Betätigungselement 50 um die zweite Schwenkachse A2 verschwenkt werden, so dass ein in Figur 22 näher erläutertes Verschwenken der zweiten Schwenkachse A2 um die erste Schwenkachse A1 ermöglicht ist.

Ferner wird die erste Rolle 114 bei der Drehung des Betätigungsstifts 112 von der ersten Betätigungsposition 113 entlang der ersten Steigung 108 in die erste Senke 105 und die zweite Rolle 116 entlang der zweiten Steigung 109 in die zweite Senke 107 bewegt, in der sich der Betätigungsstift 112 in der zweiten Betätigungsposition befindet.

Bei der Drehung des Betätigungsstifts 112 von der ersten Betätigungsposition 113 in die zweite Betätigungsposition wird das erste Sperrelement 84 durch die erste Schraubendruckfeder 88 von der Zahnung 66 des ersten Gelenkelements 62 weggedrückt, bis die Zahnung 98 des ersten Sperrelements 84 nicht mehr mit der Zahnung 66 des ersten Eingriffselements 63 in Eingriff steht. Dabei werden das erste Sperrelement 84, die erste Wellenfelder 90 und die erste Kurvenscheibe 86 von der ersten Öffnung 94 des Durchgangslochs 77 entlang der zweiten Schwenkachse A2 wegbewegt, so dass der Kurvenverlauf 106 der ersten Kurvenscheibe 86 weiterhin die erste Rolle 114 und die zweite Rolle 116 kontaktiert.

In dem entriegelten Zustand der ersten Arretierungseinheit 78, in dem die Zahnungen 66 und 98 nicht in Eingriff stehen, können das erste Verbindungselement 44, das erste Gelenkelement 62, das zweite Gelenkelement 64, die erste Kurvenscheibe 86, die zweite Kurvenscheibe 126, der Betätigungsstift 112, die Welle 96 und das Betätigungselement 50 gegenüber dem ersten Lenker 32 zusammen um die zweite Schwenkachse A2 verschwenkt werden.

Der Stift 112 ist in der zweiten Betätigungsposition, in der die erste Arretierungseinheit 78 entriegelt ist, wenn sich das Betätigungselement 50 in der in den Ansprüchen genannten ersten Betätigungsposition befindet. Ferner ist der Stift 112 in der ersten Betätigungsposition 113, in der die erste Arretierungseinheit 78 verriegelt ist, wenn sich das Betätigungselement 50 in der in den Ansprüchen genannten zweiten Betätigungsposition befindet.

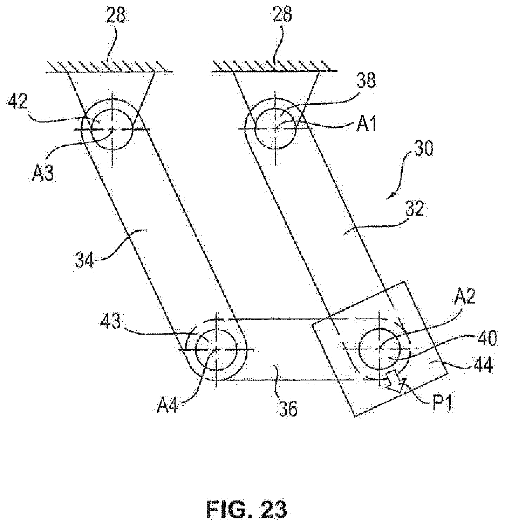

In Figur 22 ist eine schematische Darstellung des Viergelenks 30 und des ersten Verbindungselements 44 in einer Draufsicht gezeigt, wobei die Ausrichtung des ersten Verbindungselements 44 durch einen Pfeil P1 dargestellt ist. Figur 23 zeigt eine schematische Draufsicht des Viergelenks 30 und des ersten Verbindungselements 44 in der in Figur 21 eingenommenen Position. Das erste Verbindungselement 44 ist zusammen mit dem ersten Lenker 32 relativ zu der in Figur 22 gezeigten Position derart um die erste Schwenkachse A1 verschwenkt worden, dass sich seine durch den Pfeil P1 dargestellte Ausrichtung relativ zu dem ersten Lenker 32 nicht geändert hat. Beim Verschwenken der zweiten Schwenkachse A2 um die erste Schwenkachse A1 wird der erste Lenker 32 um die erste Schwenkachse A1 und der zweite Lenker 34 um die dritte Schwenkachse A3 jeweils um den gleichen Winkel verschwenkt. Die Koppel 36 wird bei diesem Verschwenken derart verschoben, dass sie ihre Ausrichtung zu dem Basiselement 28 beibehält. Die Koppel 36 wird dementsprechend bei diesem Verschwenken parallel verschoben. Dabei wird die Koppel 36 jeweils relativ zum ersten Lenker 32 um die zweite Schwenkachse A2 und zum zweiten Lenker 34 um die vierte Schwenkachse A4 verschwenkt.

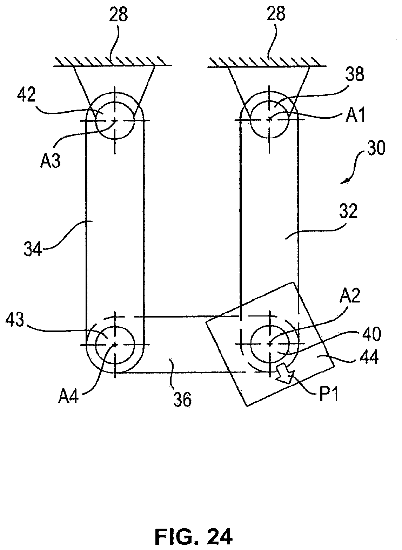

Figur 24 zeigt eine schematische Draufsicht des Viergelenks 30 und des ersten Verbindungselements 44, wobei das erste Verbindungselement 44 relativ zu der in Figur 22 dargestellten Position um die zweite Schwenkachse A2 verschwenkt worden ist. Bei diesem Verschwenken ist die durch den Pfeil P1 dargestellte Ausrichtung des ersten Verbindungselements 44 relativ zu dem ersten Lenker 32 geändert worden, im Gegensatz zu der in Figur 23 dargestellten Verschwenkung der zweiten Schwenkachse A2 um die erste Schwenkachse A1.

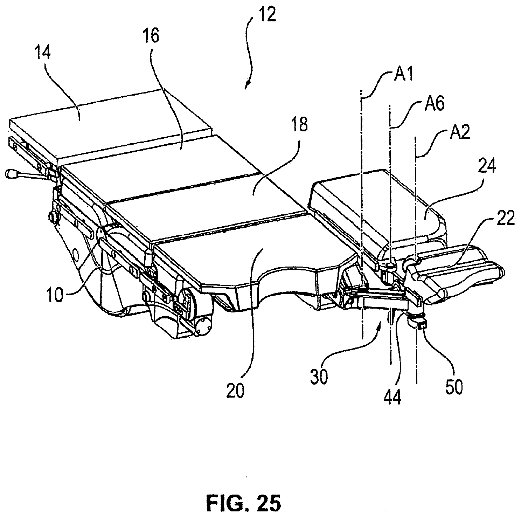

Figur 25 zeigt eine perspektivische Darstellung der Patientenlagerfläche 12, bei der die Oberschenkelplatte 22 und die Unterschenkelplatte 24 gegenüber der in Figur 21 gezeigten Stellung weiter um die erste Schwenkachse A1 und um die zweite Schwenkachse A2 verschwenkt sind. Zum Verändern der Position der Oberschenkelplatte 22 und der Unterschenkelplatte 24 von der in Figur 21 gezeigten Position in die in Figur 25 dargestellte Position ist das erste Verbindungselement 44 mit der Oberschenkelplatte 22 gegenüber dem ersten Lenker 32 und der Koppel 36 um die zweite Schwenkachse A2 und die zweite Schwenkachse A2 um die erste Schwenkachse A1 verschwenkt worden. Das Betätigungselement 50 behält bei diesem Verschwenken seine Orientierung relativ zu der Oberschenkelplatte 22 bei.

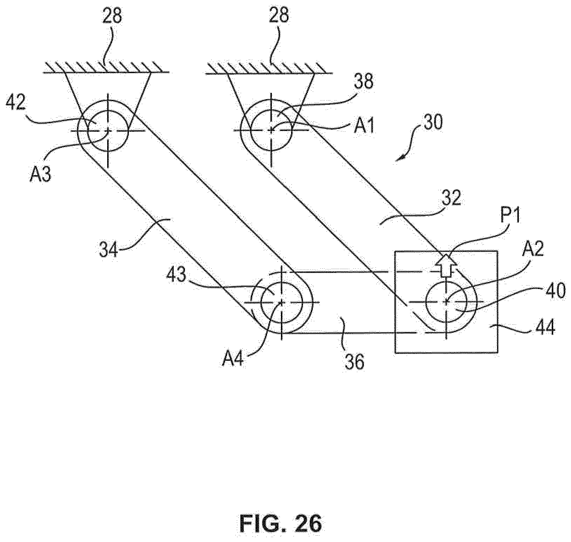

In Figur 26 ist eine schematische Draufsicht des Viergelenks 30 und des ersten Verbindungselements 44 in der in Figur 25 gezeigten Stellung der Beinplatten 22 und 24 gezeigt. Das erste Verbindungselement 44 ist dabei relativ zu dessen in Figur 23 gezeigten Stellung so weit um die zweite Schwenkachse A2 verschwenkt worden, dass das erste Verbindungselements 44 zu seiner in Figur 22 gezeigten Ausrichtung entgegengesetzt ausgerichtet ist, wie dies Pfeil P1 zeigt.

Das durch den entriegelten Zustand der ersten Arretierungseinheit 78 ermöglichte Verschwenken um die zweite Schwenkachse A2 ist unabhängig von dem durch den entriegelten Zustand der zweiten Arretierungseinheit 80 ermöglichten Verschwenken der zweiten Schwenkachse A2 um die erste Schwenkachse A1 über das Viergelenk 30.

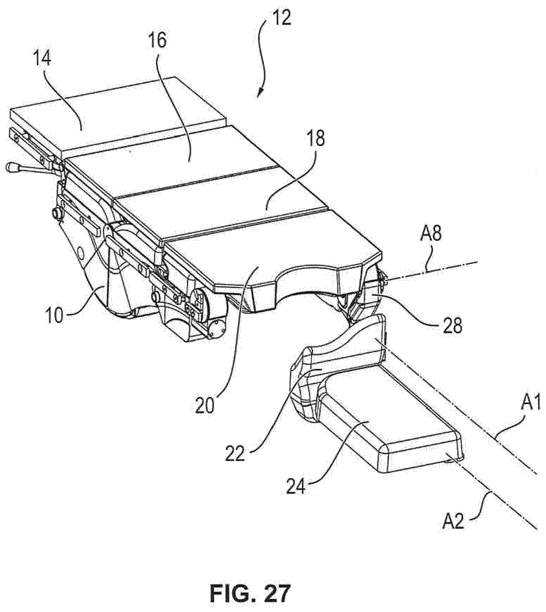

Figur 27 zeigt eine perspektivische Darstellung der Patientenlagerfläche 12, wobei die Oberschenkelplatte 22 und die Unterschenkelplatte 24 der Patientenlagerfläche 12 in einer für die Knie-Ellenbogen-Lage des Patienten geeigneten Position angeordnet sind, die schematisch in Figur 22 dargestellt ist. Die Oberschenkelplatte 22 und die Unterschenkelplatte 24 dienen zur knieenden Auflage des rechten Beins des Patienten. Eine weitere nicht dargestellte Oberschenkelplatte und eine weitere nicht dargestellte Unterschenkelplatte sind jeweils in gleicher Weise neben der Oberschenkelplatte 22 und der Unterschenkelplatte 24 angeordnet und dienen zur knieenden Auflage des linken Beins des Patienten. Die bei einem Verschwenken des Befestigungselements 28 um die achte Schwenkachse A8 und der Unterschenkelplatte 24 um die fünfte Schwenkachse A5 erreichte Stellung der Unterschenkelplatte 24, der Oberschenkelplatte 22 und der Verstellvorrichtung 26 entspricht der in den Figuren 15 bis 20 gezeigten Position. Wie vorstehend beschrieben, verhindert in dieser Position der flächige Kontakt des zweiten Endes 180 des Rotationssperrelements 168 mit der Koppel 36 und dem zweiten Verbindungselement 54 ein Verschwenken des ersten Verbindungselements 44, der Unterschenkelplatte 24 und der Oberschenkelplatte 22 um die zweite Schwenkachse A2. Wenn die erste Arretierungseinheit 78 und die zweite Arretierungseinheit 80 sich jeweils in dem unverriegelten Zustand befinden, ist in dieser Position nur ein Verschwenken der zweiten Schwenkachse A2 um die erste Schwenkachse A1 möglich, da sich dabei die relative Ausrichtung der Koppel 36 zu dem ersten Verbindungselement 44 und dem zweiten Verbindungselement 54 nicht ändert.

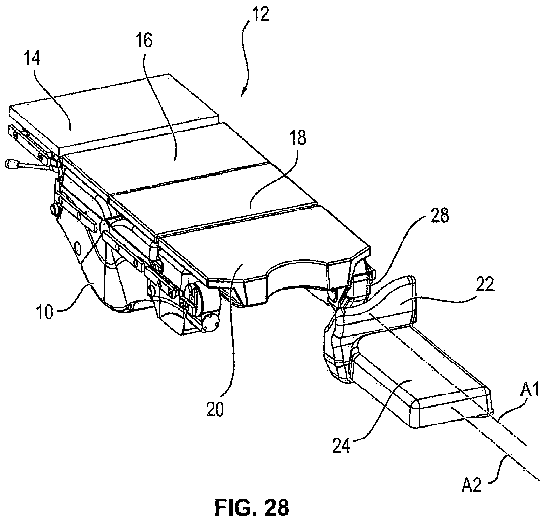

Figur 28 zeigt eine perspektivische Darstellung der Patientenlagerfläche 12, wobei die Oberschenkelplatte 22 und die Unterschenkelplatte 24 relativ zu der in Figur 27 gezeigten Position parallel verschoben sind. Die parallel zu der Unterschenkelplatte 24 ausgerichtete zweite Schwenkachse A2 ist dabei relativ zu der in Figur 27 gezeigten Stellung um die erste Schwenkachse A1 verschwenkt, so dass das erste Verbindungselement 44 und das zweite Verbindungselement 54 zusammen mit der Koppel 36 parallel verschoben sind und die Unterschenkelplatte 24 zu der Gelenkmodulplatte 20 parallel ausgerichtet bleibt.

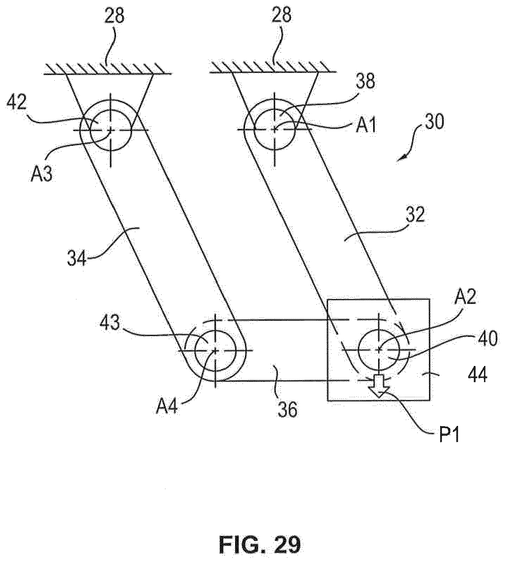

Figur 29 zeigt eine schematische Draufsicht des Viergelenks 30 und des ersten Verbindungselements 44 in der in Figur 28 gezeigten Position. Das erste Verbindungselement 44 hat in Figur 29 relativ zu dem Befestigungselement 28 die gleiche Ausrichtung wie in Figur 22, wie durch den Pfeil P1 verdeutlicht ist.

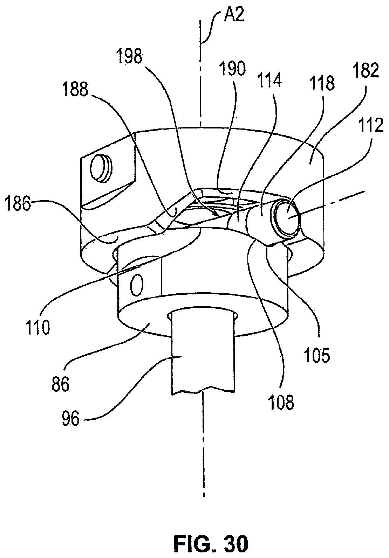

In Figur 30 ist eine perspektivische Darstellung einer Anordnung von Schaltelementen einer Verstellvorrichtung gemäß einer zweiten Ausführungsform gezeigt. Anstelle der zweiten Kurvenscheibe 126 der zweiten Arretierungseinheit 80 ist eine zweite Kurvenscheibe 182 mit einem von dem Kurvenverlauf 152 der zweiten Kurvenscheibe 126 abweichenden Kurvenverlauf 184 vorgesehen. Der Aufbau, der Kurvenverlauf und die Funktion der ersten Kurvenscheibe 86 und des mit einem nicht dargestellten Betätigungselement drehfest verbundenen Betätigungsstifts 112 stimmen mit dem Aufbau und der Funktion der Verstellvorrichtung der ersten Ausführungsform überein. Der Betätigungsstift 112 befindet sich dabei in einer dritten Betätigungsposition 198 relativ zu der ersten Kurvenscheibe 86 und der zweiten Kurvenscheibe 182.

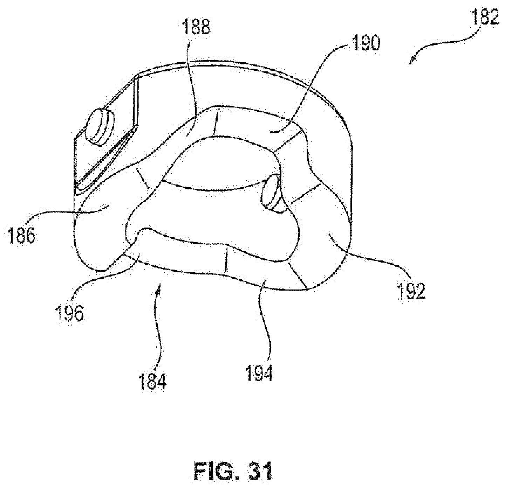

In Figur 31 ist eine perspektivische Darstellung der zweiten Kurvenscheibe 182 gemäß der zweiten Ausführungsform der Verstellvorrichtung gezeigt. Die zweite Kurvenscheibe 182 hat einen Kurvenverlauf 184, der einen ersten steigungslosen Bereich 186, einen zweiten steigungslosen Bereich 190, einen dritten steigungslosen Bereich 192, einen vierten steigungslosen Bereich 196, eine erste Steigung 188 und eine zweite Steigung 194 aufweist. Im Unterschied zu der zweiten Kurvenscheibe 126 gemäß der ersten Ausführungsform ist der zweite steigungslose Bereich 190 der zweiten Kurvenscheibe 182 anstelle der an die erste Steigung 154 des Kurvenverlaufs 152 anschließenden ersten Senke 157 der zweiten Kurvenscheibe 126 angeordnet. Der dritte steigungslose Bereich 192, die zweite Steigung 194 und der vierte steigungslose Bereich 196 sind zu der Längsachse der zweiten Kurvenscheibe 182 jeweils achsensymmetrisch gegenüber dem ersten steigungslosen Bereich 186, der ersten Steigung 188 und dem zweiten steigungslosen Bereich 190 ausgebildet.

In der in Figur 30 gezeigten Anordnung kontaktieren die Rollen 114 und 116 des Betätigungsstifts 112 den Kurvenverlauf 106 der ersten Kurvenscheibe 86 in der dritten Betätigungsposition 198 jeweils in der ersten Senke 105 und der zweiten Senke 107. Ferner kontaktiert die dritte Rolle 118 den zweiten steigungslosen Bereich 190 an dessen von der ersten Steigung 188 abgewandtem Ende und die vierte Rolle 120 den vierten steigungslosen Bereich 196 an dessen von der zweiten Steigung 194 abgewandtem Ende. In der dritten Betätigungsposition 198 sind die Arretierungseinheiten 78 und 80 jeweils im unverriegelten Zustand.

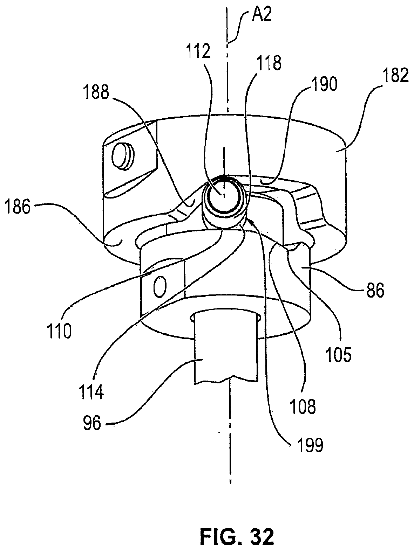

In Figur 32 ist eine weitere perspektivische Darstellung einer Anordnung aus der ersten Kurvenscheibe 86, der zweiten Kurvenscheibe 182 und des Betätigungsstifts 112 gemäß der zweiten Ausführungsform gezeigt, wobei sich der Betätigungsstift 112 in einer vierten Betätigungsposition 199 befindet. Hierzu ist der Betätigungsstift 112 gegenüber der in Figur 30 gezeigten Stellung um die zweite Schwenkachse A2 relativ zu den Kurvenscheiben 86 und 182 gedreht worden.

Der Kurvenverlauf 106 der ersten Kurvenscheibe 86 wird in der vierten Betätigungsposition 199 des Betätigungsstifts 112 von der ersten Rolle 114 des Betätigungsstifts 112 an dem ersten steigungslosen Bereich 110 und von der zweiten Rolle 116 an dem zweiten steigungslosen Bereich 111 kontaktiert. Ferner wird der Kurvenverlauf 184 der zweiten Kurvenscheibe 182 von der dritten Rolle 118 an dem der ersten Steigung 188 zugewandten Ende des zweiten steigungslosen Bereichs 190 und von der vierten Rolle 120 an dem der zweiten Steigung 194 zugewandten Ende des vierten steigungslosen Bereichs 196 kontaktiert.

Die zweite Kurvenscheibe 182 bleibt bei der Drehung des Betätigungsstifts 112 von der dritten Betätigungsposition 198 in die vierte Betätigungsposition 199 an ihrer Position. Die erste Kurvenscheibe 86 wird dabei entlang ihrer Längsachse verschoben. Dementsprechend befindet sich die erste Arretierungseinheit 78 in der vierten Betätigungsposition 199 des Betätigungsstifts 112 in dem verriegelten Zustand und die zweite Arretierungseinheit 80 verbleibt in dem entriegelten Zustand.

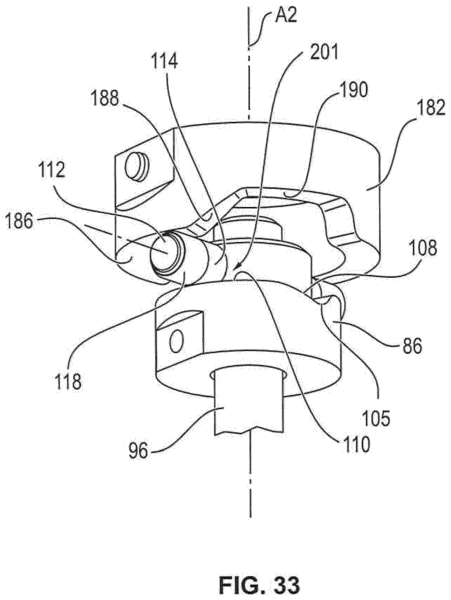

In Figur 33 ist eine perspektivische Darstellung einer Anordnung aus der ersten Kurvenscheibe 86, der zweiten Kurvenscheibe 182 und des Betätigungsstifts 112 gemäß der zweiten Ausführungsform gezeigt, wobei sich der Betätigungsstift 112 in einer fünften Betätigungsposition 201 befindet. Hierzu ist der Betätigungsstift 112 gegenüber der in Figur 32 gezeigten Stellung weiter um die zweite Schwenkachse A2 relativ zu den Kurvenscheiben 86 und 182 gedreht worden.

Der Kurvenverlauf 106 der ersten Kurvenscheibe 86 wird von der ersten Rolle 114 an dem ersten steigungslosen Bereich 110 und von der zweiten Rolle 116 an dem zweiten steigungslosen Bereich 111 kontaktiert. Ferner wird der Kurvenverlauf 184 der zweiten Kurvenscheibe 182 von der dritten Rolle 118 an dem ersten steigungslosen Bereich 186 und von der vierten Rolle 120 an dem dritten steigungslosen Bereich 192 kontaktiert.

Die zweite Kurvenscheibe 182 wird bei der Drehung des Betätigungsstifts 112 von der vierten Betätigungsposition 199 in die fünfte Betätigungsposition 201 entlang der zweiten Schwenkachse A2 verschoben. Die erste Kurvenscheibe 86 bleibt dabei an ihrer Position. Dementsprechend befinden sich die erste Arretierungseinheit 78 und die zweite Arretierungseinheit 80 in der fünften Betätigungsposition 201 des Betätigungsstifts 112 jeweils in ihrem verriegelten Zustand.

Im Übrigen entsprechen Funktion und Aufbau der Verstellvorrichtung gemäß der zweiten Ausführungsform denen der ersten Ausführungsform.

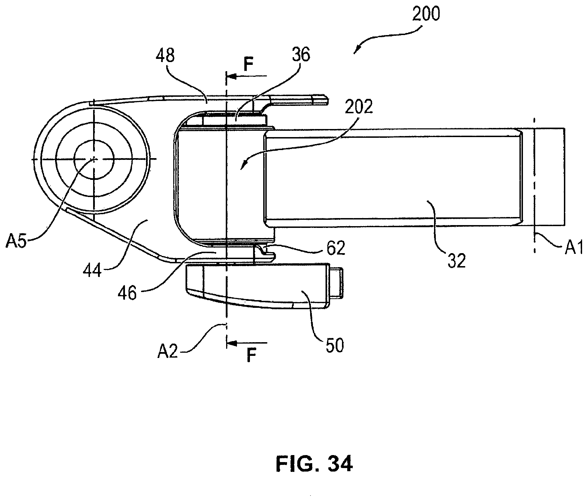

In Figur 34 ist eine Seitenansicht des ersten Lenkers 32, des ersten Verbindungselements 44 und des Betätigungselements 50 einer Verstellvorrichtung 200 gemäß einer dritten Ausführungsform gezeigt. Anstelle des zweiten Drehlagers 40 der Verstellvorrichtung 26 ist ein zweites Drehlager 202 vorgesehen. Der weitere Aufbau und die Funktion der Verstellvorrichtung 200 stimmen mit dem Aufbau und der Funktion der Verstellvorrichtung 26 überein.

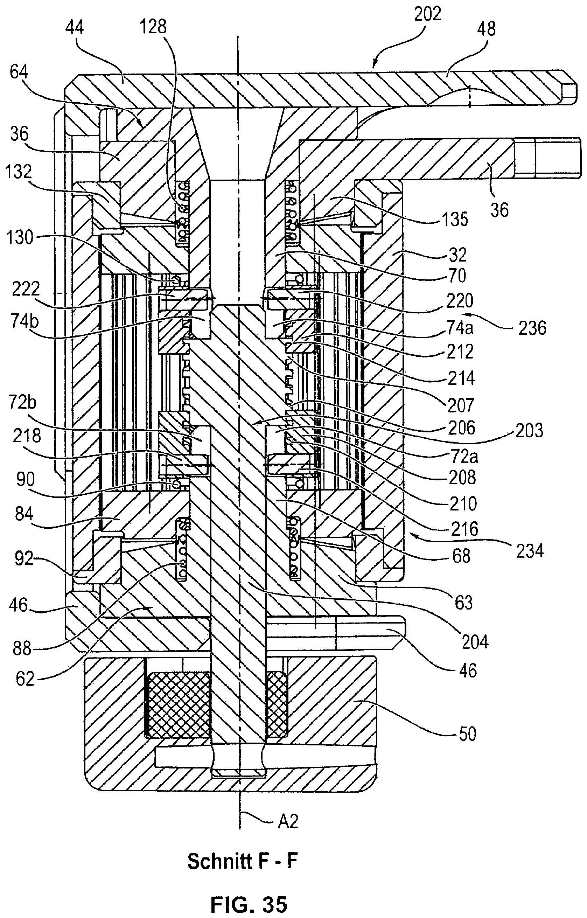

Figur 35 ist eine Schnittdarstellung der in Figur 34 gezeigten Elemente der Verstellvorrichtung 200 entlang der eingezeichneten Schnittlinie F-F, in der die Elemente des zweiten Drehlagers 202 gezeigt sind. Anstelle des Schaltelements 82 ist ein Schaltelement 203 vorgesehen, das eine Welle 204 mit einem ersten Außengewinde 206 und einem zweiten Außengewinde 207 umfasst. Ferner hat das zweite Drehlager 202 eine erste Arretierungseinheit 234 und eine zweite Arretierungseinheit 236, die die erste Arretierungseinheit 78 und die zweite Arretierungseinheit 80 der ersten und der zweiten Ausführungsform ersetzen.

Bei der ersten Arretierungseinheit 234 ist anstelle der ersten Kurvenscheibe 86 der ersten und zweiten Ausführungsform ein erster Gewindering 208 mit einem komplementär zu dem ersten Außengewinde 206 ausgebildeten Innengewinde 210 vorgesehen, das mit dem ersten Außengewinde 206 in Eingriff steht. Der erste Gewindering 208 ist über einen in die erste Aussparung 72a des Lagerzapfens 68 ragenden ersten Stift 216 und einen in die zweite Aussparung 72b des Lagerzapfens 68 ragenden zweiten Stift 218 drehfest jedoch in Richtung der zweiten Schwenkachse A2 verschiebbar zum Lagerzapfen 68 angeordnet.

Ferner ist bei der zweiten Arretierungseinheit 236 anstelle der bei der ersten und zweiten Ausführungsform vorgesehenen zweiten Kurvenscheibe 126 ein zweiter Gewindering 212 mit einem komplementär zu dem zweiten Außengewinde 207 ausgebildeten Innengewinde 214 vorgesehen, das mit dem zweiten Außengewinde 207 der Welle 204 in Eingriff steht. Der zweite Gewindering 212 ist über einen in die erste Aussparung 74a des Lagerzapfens 70 ragenden ersten Stift 220 und einen in die zweite Aussparung 74b des Lagerzapfens 70 ragenden zweiten Stift 222 drehfest jedoch in Richtung der zweiten Schwenkachse A2 verschiebbar zum Lagerzapfen 70 angeordnet.

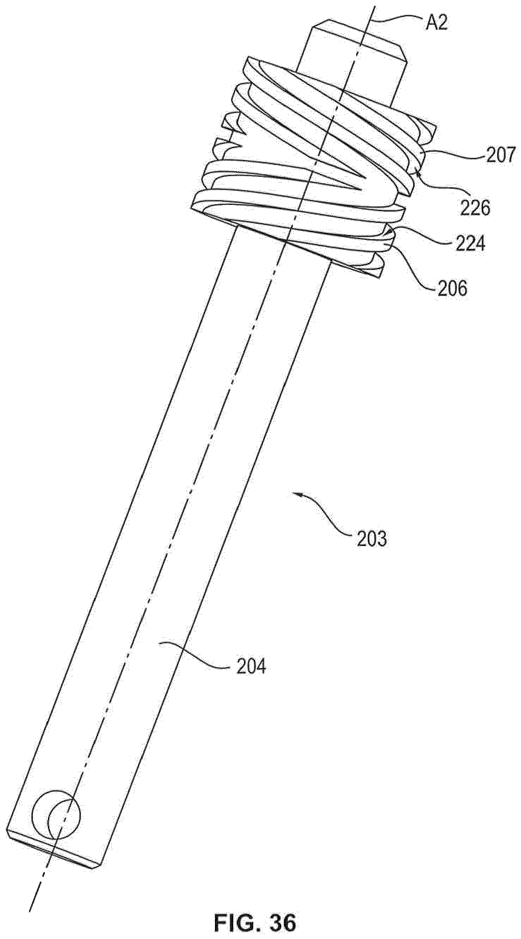

In Figur 36 ist eine perspektivische Ansicht der Welle 204 gezeigt. Das erste Außengewinde 206 der Welle 204 hat eine erste Steigung 224 und das zweite Außengewinde 207 eine zweite Steigung 226, deren Richtung der ersten Steigung 224 entgegengesetzt ist, sodass eines der Außengewinde 206, 207 rechtssteigend und das andere linkssteigend ist. Die Beträge der Steigungen 224 und 226 sind vorzugsweise gleich, sodass die Außengewinde 206 und 207 jeweils den gleichen Hub pro Umdrehung bewirken.

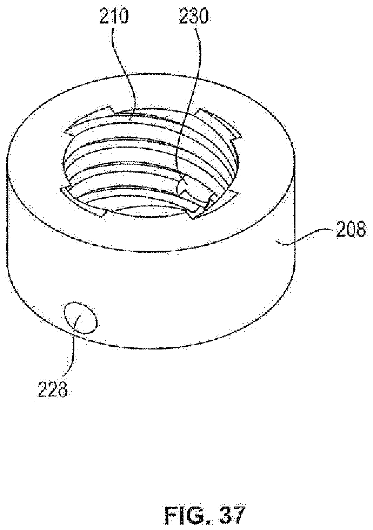

In Figur 37 ist eine perspektivische Ansicht des ersten Gewinderings 208 gezeigt. Der erste Gewindering 208 hat ein erstes Durchgangsloch 228 und ein zweites Durchgangsloch 230, in die jeweils der erste Stift 216 bzw. der zweite Stift 218 geführt sind. Der über die Stifte 216 und 218 um die zweite Schwenkachse A2 drehfest angeordnete erste Gewindering 208 wird bei einer Drehung der Welle 204 entsprechend der Steigung 224 des ersten Außengewindes 206 entlang der zweiten Schwenkachse A2 verschoben. Ferner wird der zweite Gewindering 212 bei dieser Drehung der Welle 204 entsprechend der Steigung 226 des zweiten Außengewindes 207 entlang der zweiten Schwenkachse A2 in der zu der Verschiebungsrichtung des ersten Gewinderings 208 entgegengesetzten Richtung verschoben.

Durch das Verschieben des ersten Gewinderings 208 und des zweiten Gewinderings 212 bei einer Drehung des Betätigungselements 50 werden die erste Arretierungseinheit 234 und die zweite Arretierungseinheit 236 wie durch das Verschieben der ersten Kurvenscheibe 86 bzw. der zweiten Kurvenscheibe 126 der Verstellvorrichtung 26 entriegelt.

Im Übrigen entsprechen Aufbau und Funktion des zweiten Drehlagers 202 denen des zweiten Drehlagers 40.

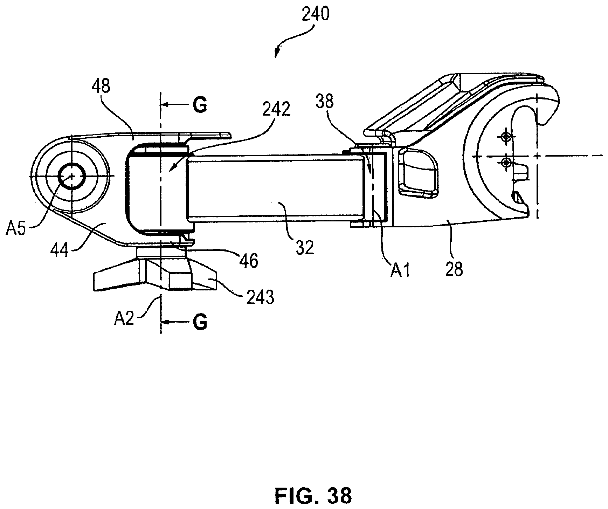

In Figur 38 ist eine Seitenansicht einer Verstellvorrichtung 240 gemäß einer vierten Ausführungsform gezeigt. Anstelle des zweiten Drehlagers 40 der Verstellvorrichtung 26 ist ein zweites Drehlager 242 und anstelle des Betätigungselements 50 ein sternförmiges Betätigungselement 243 vorgesehen.

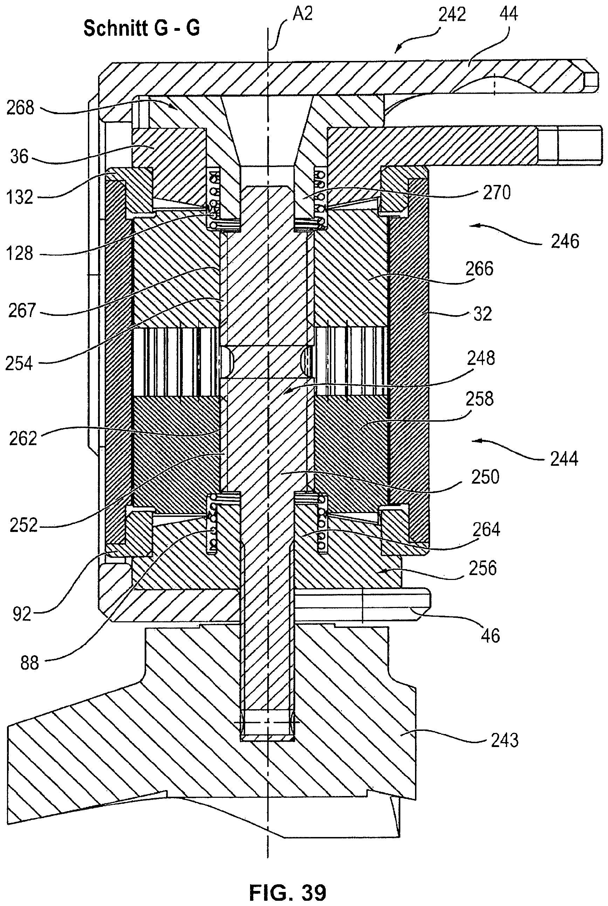

In Figur 39 ist eine Schnittdarstellung der in Figur 38 gezeigten Verstellvorrichtung 240 entlang der Schnittlinie G-G gezeigt. Anstelle der ersten Arretierungseinheit 78 der ersten und zweiten Ausführungsform ist eine erste Arretierungseinheit 244, anstelle der zweiten Arretierungseinheit 80 der ersten und zweiten Ausführungsform ist eine zweite Arretierungseinheit 246 und anstelle des Schaltelements 82 der ersten und zweiten Ausführungsform ein Schaltelement 248 vorgesehen.

Das Schaltelement 248 umfasst eine Welle 250 mit einem ersten Außengewinde 252 und einem zweiten Außengewinde 254. Die Steigungen des ersten Außengewindes 252 und des zweiten Außengewindes 254 sind entgegensetzt. Die Beträge der Steigungen der Außengewinde 252 und 254 sind vorzugsweise gleich, sodass sich nur die Richtung der Steigungen unterscheiden.

Die erste Arretierungseinheit 244 unterscheidet sich von der ersten Arretierungseinheit 78 durch ein anstelle des ersten Gelenkelements 62 vorgesehenes erstes Gelenkelement 256, durch ein anstelle des ersten Sperrelements 84 und der Wellenfeder 90 vorgesehenes erstes Sperrelement 258.

Das erste Sperrelement 258 hat ein Durchgangsloch mit einem Innengewinde 262, das komplementär zu dem ersten Außengewinde 252 ausgebildet ist. Ferner ist das erste Sperrelement 258 derart um die Welle 250 angeordnet, dass dessen Innengewinde 262 mit dem ersten Außengewinde 252 zumindest teilweise in Eingriff steht. Ferner hat das erste Sperrelement 258 eine wie bei dem ersten Sperrelement 84 ausgebildete stirnseitige Zahnung.

Das erste Gelenkelement 256 hat eine wie bei dem ersten Gelenkelement 62 der ersten und zweiten Ausführungsform ausgebildete Zahnung, die mit der stirnseitigen Zahnung des ersten Sperrelements 258 in dem gezeigten verriegelten Zustand der ersten Arretierungseinheit 244 in Eingriff steht. Im Unterschied zu dem ersten Gelenkelement 62 der ersten und zweiten Ausführungsform hat das erste Gelenkelement 256 einen kürzer ausgebildeten Lagerzapfen 264, der keine den Aussparungen 72a und 72b entsprechenden Aussparungen aufweist. Ansonsten entsprechen Aufbau und Anordnung des ersten Gelenkelements 256 und des ersten Sperrelements 258 jeweils denen der Verstellvorrichtung 26.

Ferner unterscheidet sich die zweite Arretierungseinheit 246 der vierten Ausführungsform von der zweiten Arretierungseinheit 80 durch ein anstelle des zweiten Sperrelements 124 vorgesehenes zweites Sperrelement 266 und durch ein anstelle des zweiten Gelenkelements 64 und der Wellenfeder 130 vorgesehenes zweites Gelenkelement 268.

Das zweite Gelenkelement 268 hat einen Lagerzapfen 270, der keine den Aussparungen 74a und 74b entsprechenden Aussparungen aufweist.

Das zweite Sperrelement 266 hat ein Durchgangsloch, in dem ein Innengewinde 267 komplementär zu dem zweiten Außengewinde 254 ausgebildet ist und zumindest teilweise mit diesem in Eingriff steht. Das Innengewinde 267 des zweiten Sperrelements 266 kann sowohl als Feingewinde als auch wie das Innengewinde 214 des zweiten Gewinderings 212 grob ausgeführt sein. An der Stirnseite des zweiten Sperrelements 266 ist eine dem zweiten Sperrelement 124 entsprechende Zahnung ausgebildet, die mit der Zahnung 136 der Koppel 36 in dem gezeigten verriegelten Zustand der zweiten Arretierungseinheit 246 in Eingriff steht. Ansonsten entsprechen Aufbau und Anordnung des zweiten Sperrelements 266 und des zweiten Gelenkelements 268 jeweils denen der Verstellvorrichtung 26.

Die Arretierungseinheiten 244 und 246 können durch eine Drehung des Betätigungselements 243 jeweils entriegelt werden. Bei der Drehung des Betätigungselements 243 wird die Welle 250 zusammen mit dem Betätigungselement 243 um die zweite Schwenkachse gedreht, wodurch das erste Sperrelement 258 und das zweite Sperrelement 266 aufeinander zubewegt werden. In der erreichten Endposition der Sperrelemente 258 und 266 stehen ihre stirnseitigen Zahnungen jeweils nicht mehr mit der Zahnung des ersten Gelenkelements 256 bzw. der Koppel 36 in Eingriff, sodass die Arretierungseinheiten 244 und 246 jeweils in ihrem unverriegelten Zustand sind.

Im Übrigen entsprechen Aufbau und Funktion der Verstellvorrichtung 240 gemäß der vierten Ausführungsform denen der Verstellvorrichtung 26.

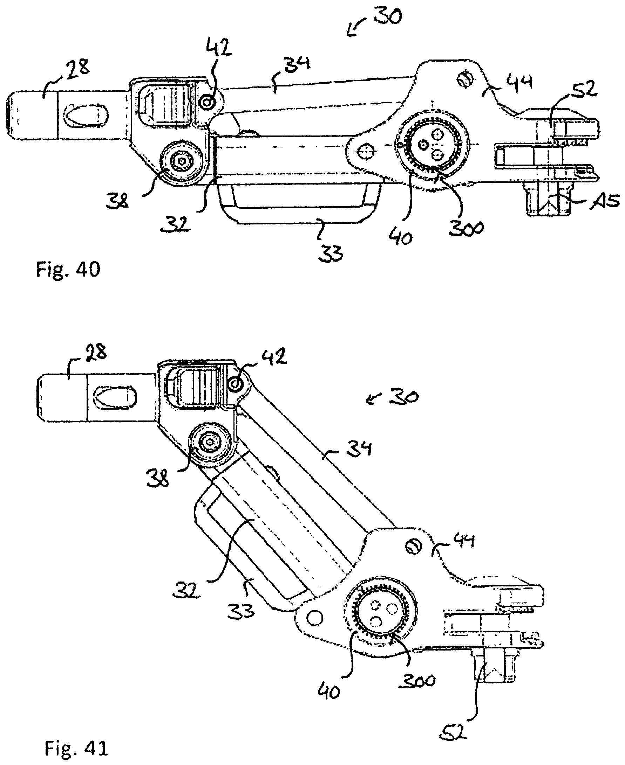

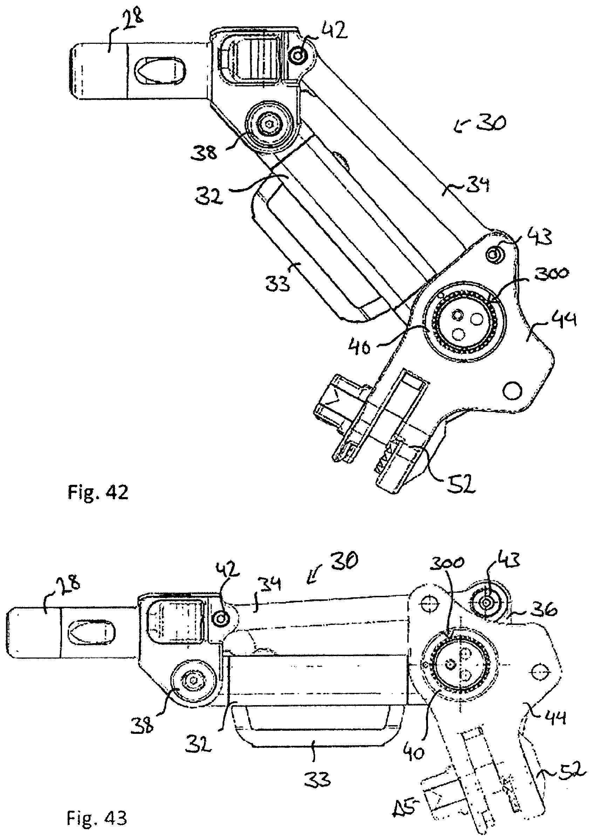

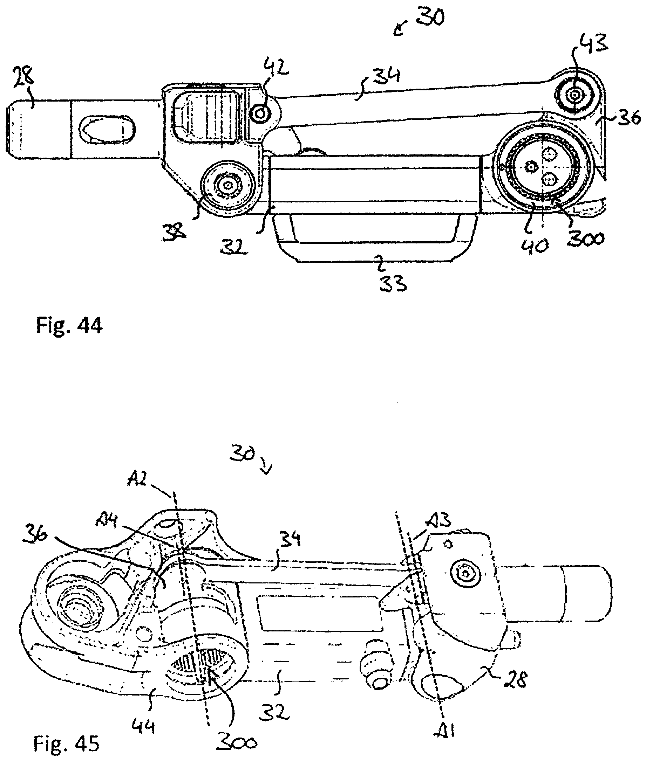

In Fig. 40 bis 51 wird eine fünfte Ausführungsform der Verstellvorrichtung gezeigt, die sich von den voranstehend beschriebenen Ausführungsformen vor allem im Hinblick auf die Ausgestaltung der Arretierungseinheiten unterscheidet. Das Viergelenk 30 der fünften Ausführungsform ist dabei gleich aufgebaut wie für die voranstehenden Ausführungsformen beschrieben. Wie in Fig. 40 bis 45 gezeigt, weist das Viergelenk 30 der fünften Ausführungsform somit auch die gleichen Freiheitsgrade der Bewegung auf wie voranstehend beschrieben, wobei die zweite Schwenkachse A2 mittels des Viergelenks 30 um die erste Schwenkachse A1 verschwenkt werden kann, und zusätzlich das erste Verbindungselement 44, an dem das Lagerflächensegment befestigt ist, um die zweite Schwenkachse A2 verschwenkt werden kann.

Sofern bei dem Viergelenk 30 die Achsabstände der sich gegenüberliegenden Bauteile gleich lang sind, handelt es sich um ein Parallelogramm-Getriebe, mit dem man einen parallelen Versatz der beiden Anschlußgeometrien erreichen kann. Die hier beschriebenen und in den Figuren gezeigten Ausführungsformen des Viergelenks 30 haben jeweils ein solches Achsabstandsverhältnis. Alternativ kann es jedoch in manchen Fällen vorteilhaft sein, unterschiedlich lange Achsabstände zu realisieren, was zu einer Überlagerung von Rotation und seitlichem Versatz der beiden endständigen Elemente bei der Bewegung des Viergelenks führt.

Bei dem in Fig. 40 bis 45 gezeigten Viergelenk 30 ist ein Bügel 33 zur Befestigung von Zubehörteilen integral mit dem ersten Lenker 32 ausgebildet oder an diesem befestigt. Ein derartiger Bügel 33 kann auch jeweils am ersten Lenker 32 gemäß der anderen voranstehend beschriebenen Ausführungsformen vorgesehen sein.

Um ein Viergelenkgetriebe wirksam zu blockieren, sind verschiedenartige Möglichkeiten gegeben. Eine einfache Lösung ist die bei, der zwei Lenker des Viergelenks, welche mit einer gemeinsamen Achse verbunden sind, zueinander winklig blockiert werden. Die Lage der Achse ist dabei frei wählbar.

Gemäß der voranstehend beschriebenen ersten bis vierten Ausführungsformen wird eine Blockierung des Viergelenks 30 mittels kronenverzahnten Bauteilen realisiert. Die zu blockierenden Elemente weisen dann auf den zueinander zugewandten Seiten entsprechende Kronenverzahnungen auf, welche mittels eines Exzentergetriebes oder mittels einer Knebelschraube zusammengefügt und getrennt werden können. Die fünfte Ausführungsform betrifft eine alternative Lösung des Problems der wirksamen Blockierung des Viergelenks 30.

Hierbei weisen die zu blockierenden Bauteile anstatt einer Kronenverzahnung jeweils eine innenliegende Strinradverzahnung, also ein sogenanntes Hohlrad auf. Als vorteilhaft wird hier eine Keilwellen oder Kerbzahnwellenverzahnung angesehen, da diese in einem besonders wirtschaftlichen Verfahren einfach hergestellt werden kann und keine Spezialwerkzeuge verwendet werden müssen. Wird nun ein entsprechendes Stirnrad, welches im Eingriff mit einem Hohlrad des ersten Lenkers 32 steht, derart axial verschoben, daß es auch mit dem Hohlrad der Koppel 36 als zweitem Lenkerelement des Viergelenks 30 in Eingriff steht, so ist das Viergelenk 30 zwischen dem ersten Lenker 32 und der Koppel 36 wirksam blockiert. Die Breite des Stirnrades sollte vorteilhafter Weise mindestens so breit sein, dass es in beiden Hohlrädern die Kräfte sicher aufnehmen und weiterleiten kann.

Die Arretierungseinheit 300 der fünften Ausführungsform basiert auf einem verzahnten Wellenelement, welches als Kupplungsstück in einer entsprechenden innenverzahnten Bohrung entlang der Bohrungsachse verschieblich gelagert ist. Die innenverzahnte Bohrung ist in einer bevorzugten Ausführung zentrisch zu einer Achse des zu blockierenden Viergelenks ausgeführt. In Fig. 40 bis 45 ist jeweils die Anordnung der entsprechenden Verzahnungen im zweiten Drehlager 40 des Viergelenks 30 zu sehen.

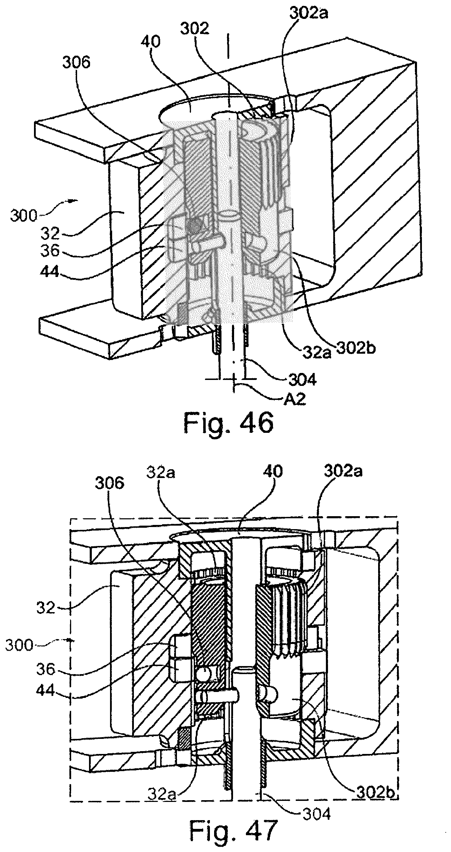

Fig. 46 bis 49 zeigen jeweils die Arretierungseinheit 300 in unterschiedlichen Schaltpositionen. Dabei ist im zweiten Drehlager 40 des Viergelenks 30, konzentrisch zur zweiten Schwenkachse A2, ein Kupplungsstück 302 der Arretierungseinheit 300 angeordnet.

Das Kupplungsstück 302 umfasst hierbei einen Abschnitt mit einer Außenverzahnung 302a und in axialer Richtung daran anschließend einen Zentrierfortsatz 302b. Die Außenverzahnung 302a greift in entsprechende Innenverzahnungen am ersten Lenker 32, der Koppel 36 und am ersten Verbindungselement 44 ein, von denen in Fig. 46 bis 49 jeweils nur die Innenverzahnung 32a am ersten Lenker sichtbar ist. Mittels eines Betätigungselements 304 kann das Kupplungsstück 302 axial verschoben werden.

In der in Fig. 46 gezeigten ersten Schaltposition der Arretierungseinheit 300 dient der Zentrierfortsatz 302b dazu, die Koppel 36 des Viergelenks und das Verbindungselement 44 in Position im zweiten Drehlager 40 zu halten, während diese Elemente frei drehbar um die Gelenkachse A2 rotiert werden können. In der ersten Schaltposition ist somit die Bewegung des Viergelenks 30 und der zusätzliche Freiheitsgrad der Bewegung des ersten Verbindungselements 44 um die zweite Schwenkachse A2 nicht eingeschränkt.

Fig. 47 zeigt eine zweite Schaltposition, bei der das Kupplungsstück 302 in axialer Richtung derart verschoben wurde, dass die Außenverzahnung 302a sowohl mit der Innenverzahnung 32a des ersten Lenkers 32, als auch mit der Innenverzahnung der Koppel 36 in Eingriff steht. Dadurch ist die Bewegung des Viergelenks 30 blockiert. Das erste Verbindungselement 44 kann jedoch weiterhin auf dem Zentrierfortsatz 302b des Kupplungsstücks 302 frei rotieren, so dass der zusätzliche Freiheitsgrad der Bewegung des Lagerflächensegments um die zweite Schwenkachse A2 relativ zum Viergelenk 30 weiterhin freigegeben ist.

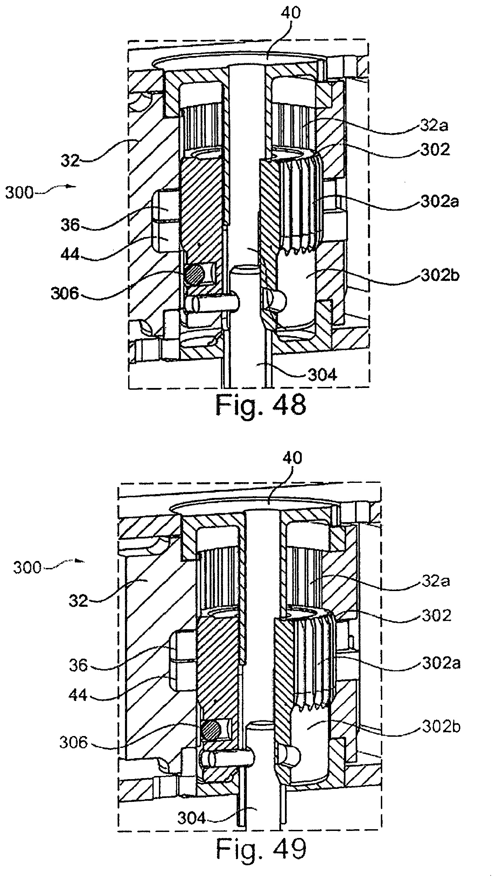

Fig. 48 und 49 zeigen eine dritte bzw. eine vierte Schaltposition der Arretierungseinheit 300. In der dritten und in der vierten Schaltposition stehen die Verzahnungen 302a des Kupplungsstücks 302 mit der Verzahnung aller drei beweglichen Elemente des zweiten Drehlagers 40 in Kontakt und blockiert wirksam die Rotationsbewegungen des Viergelenks 30 und des zusätzlichen Freheitsgrades des ersten Verbindungselements 44. Der dargestellte erste Lenker 32 ist bei der hier gezeigten Ausführungsform in einer vorteilhaften Weise ausgeführt, in der die Verzahnung 32a in einem oberen Abschnitt und in einem unteren Abschnitt des ersten Lenkers 32 im zweiten Drehlager 40 angeordnet ist. Dadurch können die Momente, die über die Arretierungseinheit 300 übertragen werden können, in der vierten gezeigten Schaltposition (siehe Fig. 49) höher ausfallen als in der dritten Schaltposition (siehe Fig. 48). Auch reduziert sich in der vierten Schaltposition das Spiel zwischen den zu blockierenden Lenkern merklich, da durch die notwenige Spielpassung der Kupplungselemente (Verzahnungen) zueinander das mögliche Verkippen des verzahnten Kupplungsstücks geringer ausfällt. Gleichzeitig vergrößert sich die zur Verfügung stehende Scherfläche der belasteten Zähne des Kupplungsstücks.

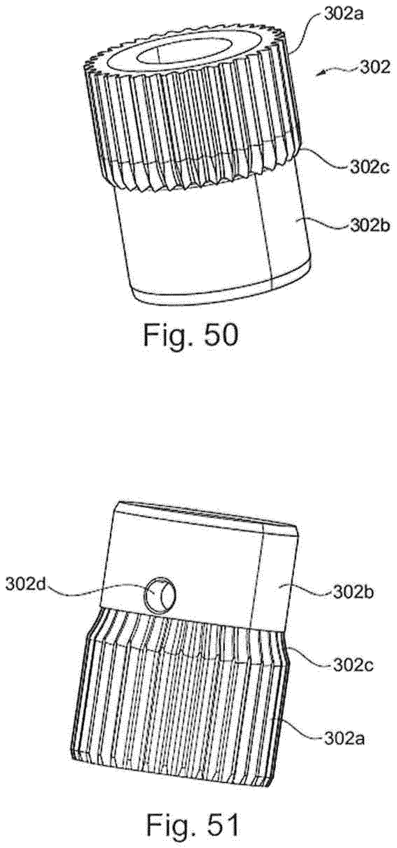

Fig. 50 und 51 zeigen ein Beispiel für ein Kupplungsstück 302, das bei der voranstehend beschriebenen Ausführungsform der Arretierungseinheit 300 verwendet werden kann. Wie voranstehend beschrieben, umfasst das Kupplungsstück 320 einen ersten Abschnitt mit einer Außenverzahnung 302a, und einen daran anschließenden zweiten Abschnitt, welcher als Zentrierfortsatz 302b dient. Beim Schalten des Kupplungsstücks 302 zwischen den in Fig. 46 bis 49 gezeigten ersten bis vierten Schaltpositionen kann das Problem auftreten, dass je nach dem unter welchem Winkel der erste Lenker 32, die Koppel 36 und/oder das erste Verbindungselement 44 gerade zueinander eingestellt sind, die Zähne 302a des Kupplungsstücks 302 nicht zu den Zahnlücken der Innenverzahnung des jeweils zu kuppelnden Elements fluchten. Ein Versperren des Viergelenkgetriebes 30 und seines zusätzlichen Freiheitsgrades ist dann nicht mehr gegeben und kann nur erreicht werden, wenn der Anwender / Betätiger die Lenker so zueinander positioniert, daß die Flucht von Zahn zu Zahnlücke gegeben ist. Da der Anwender aber diese Elemente der Kupplung nicht sehen, sondern nur die Bedienelemente betätigen kann, muss diese Art von Ausrichtung blind erfolgen. Bei dem in Fig. 50 und 51 gezeigten Beispiel werden daher mehrere Möglichkeiten aufgezeigt, eine zuverlässige Ausrichtung der Außenverzahnung 302a des Kupplungsstücks 302 relativ zu den jeweiligen Innenverzahnungen zu erreichen.

Gemäß einer ersten Ausführungsform können beispielsweise an dem Zentrierfortsatz 302b des Kupplungsstücks 302 in einer Bohrung 302d entsprechende Rastelemente 306 (siehe Fig. 46-49), wie z.B. kugelförmige Rastelemente 306 angeordnet sein. Die Kugeln 306 können federvorgespannt in die Innenverzahnung des Hohlrades des jeweils zu schaltenden Elements gedrückt werden. Dabei entsteht die besondere Situation, daß die Rastelemente 306 jeweils in die Zahnlücken der Innenverzahnung des zu kuppelnden Lenkers einrasten und so dem Anwender ein haptisches und ggf. akustisches Signal liefern, so daß dieser die Kupplung einfach blind betätigen kann. In den aufgebrochenen Darstellungen in Fig. 46-49 ist beispielhaft eine solche Rastkugel 306 in einer Bohrung 302d in dem zylindrischen Zentrierfortsatz 302b geschnitten gezeigt. Alternativ könnten die Rastelemente auch an einer anderen Stelle zwischen den zu kuppelnden Elementen angeordnet sein, und dann beispielsweise in eine zusätzlich angebrachte Raststruktur einrasten.

Gemäß anderer Ausführungsformen kann gänzlich auf die Rastelemente 306 verzichtet werden, um eine einfachere Montage der Arretierungseinheit 300 zu ermöglichen. Hierbei kann die Gestaltung der Geometrie des Überganges der Zahnspitze zu den Seitenflächen des Stirnradsegmentes des Kupplungsstücks 302 so gestaltet sein, daß eine Art Fangtrichter entsteht, so daß die Zähne des Hohlrades in einer sich verjüngenden Nut zwischen den Zähnen der Außenverzahnung 302a des Kupplungsstücks 302 aufgenommen werden. Dadurch wird die Wahrscheinlichkeit, dass die seitliche Begrenzung der Zähne des verzahnten Kupplungsstücks 320 mit den seitlichen Begrenzungen der Zähne des zu kuppelnden Elements aufeinander treffen und so den Schaltvorgang blockieren, wesentlich verringert. In Fig. 50 und 51 sind derartige Fangtrichter in einem Bereich 302c des Kupplungsstücks 302 gezeigt, der sich in axialer Richtung an die Außenverzahnung 302a anschließt.

Da bei der zuletzt genannten Ausführungsform kein haptisches Feedback für den Benutzer gegeben ist, um ein erfolgreiches Einführen der Innenverzahnung des zu koppelnden Elements in die Außenverzahnung des Kupplungsstücks 302 zu signalisieren, ist gemäß einiger Ausführungsformen auch eine Kombination aus den beiden Lösungsansätzen zum einfachen zentrieren von Zahn zu Zahnlücke möglich. Dadurch kann der Anwender die optimale Ausrichtung der Elemente zueinander schnell finden und die Bewegung des Viergelenks 30 und/oder des zusätzlichen Freiheitsgrads der Bewegung um die zweite Schwenkachse A2 fehlerfrei sperren.

Die Ausführung der sperrenden Geometrie basiert vorzugsweise auf einer Kerbwellenverzahnung. Andere Verzahnungsarten zB: Evolventen-, Zykloiden-, Kreisbogen-, Wildhaber/Novikovverzahnung oder sperrende Geometrien, welche eine kleine Teilung zulassen sind auch möglich. Der Vorteil der Kerbwellenverzahnung liegt darin, daß man hier mit kleinen Zähnen aufgrund der großen Ritzelbreite hohe Momente übertragen kann und zum anderen, daß man für den Schaltvorgang geometirsch sehr kleine, von der Patientenlast unabhängige Vorrichtung aufbauen kann. Da man hier mit kleinen Zähnen arbeiten kann, ist der zu erwartende Durchmesser der Gelenkkupplung kleiner im Vergleich zu Kronenradlösungen mit gleicher Winkelteilung.

Als weiterhin vorteilhaft wird es angesehen, daß ein Teil des Stirnzahnrades auf mindestens einer Seite einen zylindrischen Fortsatz aufweist, mit dem man in einem nicht blockierten Zustand den zweiten Lenker zur Achse zentriert lagert. Natürlich kann der Zentrierdorn auch mit balligen, tonnenförmigen, kegeligen oder eine Kombination der unterschiedlichen geometrischen Formelemente realisiert werden.

Durch diese bevorzugte Ausführung des verzahnten Kupplungsstücks kann die Lagerung des zu schaltenden Hebelelements einfacher ausgeführt werden.

Ein weiterer Vorteil bei der Realisierung der Kupplung mittels eines axial verschiebbaren Stirnradsegments liegt darin, dass neben dem Blockieren der beiden Elemente des Viergelenkgetriebes auch zusätzliche Elemente, wie beispielsweise das erste Verbindungselement 44, ebenfalls sehr leicht blockiert werden können.

Da die Beinplatte nicht nur optimal im Raum unter dem Patienten verstellt werden soll, sondern auch die Massen der auf der Beinplatte liegenden Körperteile eines Patienten sicher unterstützen muss, bietet es sich an, diese beiden Funktionen miteinander zu koppeln. Daher sind die Bauelemente des Viergelenkgetriebes mit dem zusätzlichen Freiheitsgrad derart ausgeführt, dass die einzelnen Lenker die durch die Patientenlast aufgeprägten Kräfte und Momente sicher weiterleiten können.

Gemäß einiger Ausführungsformen können die beiden endständigen Elemente sowie ein erster Lenker 32 besonders stabil ausgeführt sein, so da die Biege- und Torsionsmomente sicher übertragen werden können, während die Koppel 36 und das erste Verbindungselement 44 nur die Kräfte aufnehmen und weiterleiten müssen, welche die winklige Ausrichtung der Beinplatte im Raum fixiert.

Zusammenfassend ermöglicht es die Verstellvorrichtung der voranstehend beschriebenen Ausführungsformen somit, so weit wie möglich die Gefahren für den Patienten und Anwender zu verringern. Das Viergelenkgetriebe 30 mit einem zusätzlichen Freiheitsgrad um eine Achse A2 des Viergelenkgetriebes 30 ermöglicht dabei eine Einstellung der Lagerflächensegmente in eine Vielzahl von unterschiedlichen Positionen und Stellungen, um die entsprechenden Anforderungen an eine Lagerung des Patienten für unterschiedliche chirurgische Eingriffe zu erfüllen.

Dabei können weiterhin mechanische Anschläge bei der Verstellvorrichtung vorgesehen sein, welche ein Einstellen der Beinplatten übereinander wirksam verhindert. Weiterhin kann vorgesehen sein, dass eine automatische Blockade des zusätzlichen Freiheitsgrades bei einer speziellen Einstellung der Beinplatte erfolgt, und zwar unabhängig von der manuell betätigbaren Verriegelung des Beinplattengetriebes. Eine Blockade des Viergelenks 30 und des zusätzlichen Freiheitsgrades kann mittels eines Bedienelements 304 erreicht werden, wobei eine sequentielle Freigabe der einzelnen Bewegungen ermöglicht werden kann.

Bei der Verstellvorrichtung der voranstehend beschriebenen Ausführungsformen ist nur ein Bedienelement zum Lösen und Blockieren des Mehrgelenkgetriebes notwendig. Selbst beim Öffnen des Mehrgelenkgetriebes findet dabei nur eine Parallelverschiebung statt, der Patient stürzt auch bei einer Fehlbedienung nicht ab. Die voranstehend beschriebenen Arretierungseinheit 300 ermöglicht dabei ein annähernd kraftfreies betätigen der Blockiervorrichtung und eine von der Patientenlast unabhängige Schließkraft. Weiterhin ist die Arretierungseinheit 300 montagefreundlich, da im Vergleich zu Kronenrad-Blockiervorrichtungen keine aufwändige Einstellung eines Toleranzausgleiches notwendig ist.

Durch den Eingriff der Außenverzahnung des Kupplungsstücks 302 in entsprechende Innenverzahnungen der zu blockierenden Elemente wird ein Überspringen der Verzahnung bei Überlast wirksam verhindert. Weiterhin kann die Arretierungseinheit 300 in einem kleinen Bauraum realisiert werden, umfasst wenige Bauteile und hat ein geringes Gesamtgewicht.

Das Getriebe und die oben beschriebenen Eigenschaften der Vorrichtung wurden beispielhaft für eine mehrgliedrige Beinplatte beschrieben. Eine solche Vorrichtung könnte aber auch bei anderen Lagerungsmöglichkeiten, wie z.B. bei Armlagerungen, angewendet werden.

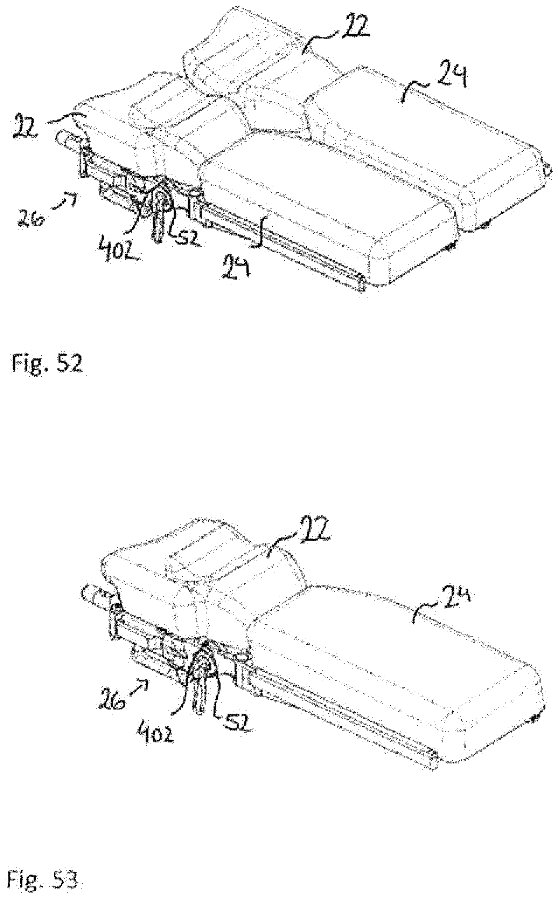

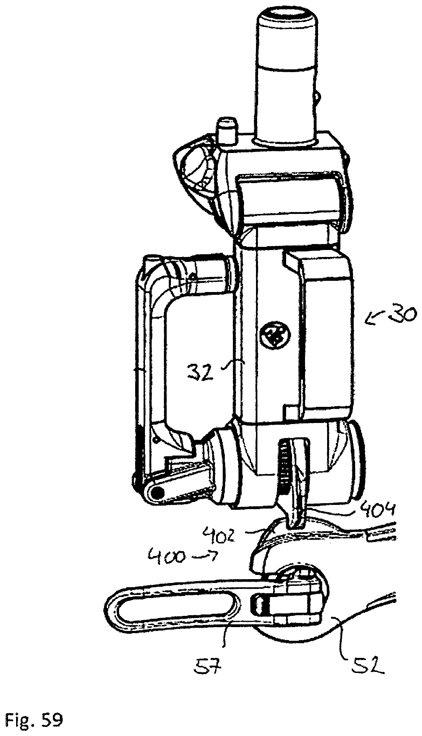

Fig. 52 bis 59 sind auf eine sechste Ausführungsform gerichtet, bei der mittels einer Rotationssperrvorrichtung 400 ein zusätzlicher Freiheitsgrad an einer Achse des Viergelenks in definierten Einstellungen einer Beinplatte wirksam gesperrt und freigegeben werden kann.

Wie in Fig. 52 bis 57 illustriert, wird die voranstehend beschriebene Verstellvorrichtung vorzugsweise bei einer Beinplatte 22, 24 angewendet. Neben einfachen Beinplatten, welche nur seitlich abgespreizt und um eine oder mehrere Achsen seitlich verschwenkt werden können, gibt es auch solchen bei denen zwischen dem Anteil 22 zur Lagerung des Oberschenkels und dem Anteil 24 zur Lagerung des Unterschenkels ein Gelenk 52 angeordnet ist, mit dem man die Platten winklig um eine Achse A5 verstellen kann, welche vorzugsweise parallel zur Polsteroberfläche der Lagerfläche ausgerichtet ist.

In der sogenannten Knie-Ellenbogen-Lagerung eines Patienten auf der Lagerfläche wird die Unterschenkelplatte bei bekannten Verstellvorrichtungen durch das Viergelenkgetriebe zwangsgeführt und daher immer annähernd so ausgerichtet, dass ein Oberschenkel des Patienten annähernd rechtwinklig zur Oberfläche der Unterschenkelplatte ausgerichtet ist. Dadurch ist ein Abrutschen des knienden Patienten von der Unterschenkelplatte unwahrscheinlich.

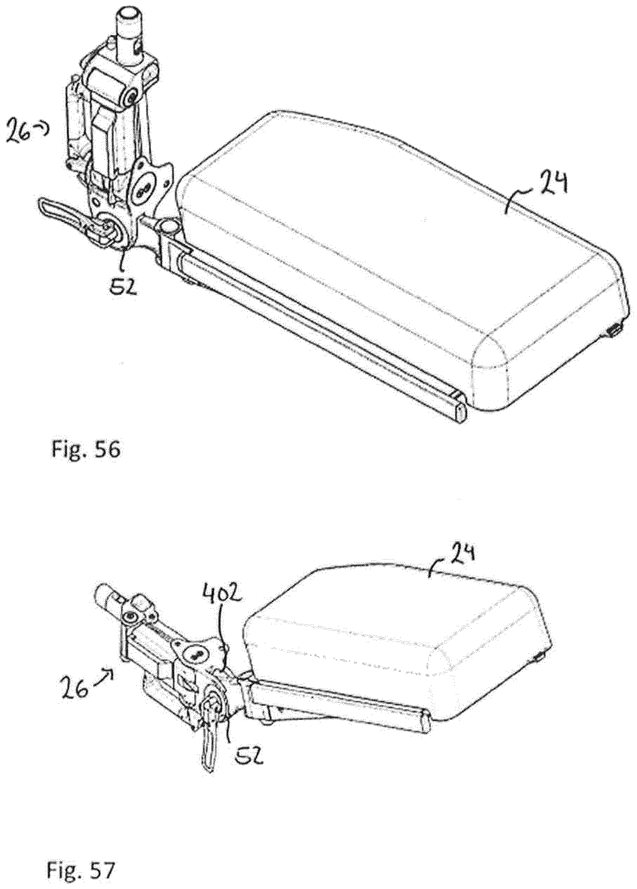

Durch den neuen zusätzlichen Freiheitsgrad an einer Achse des Viergelenks 30 bei der voranstehend beschriebenen Verstellvorrichtung 26 kann der Anteil 24, der als Unterschenkelplatte verwendet werden kann, um diesen zusätzlichen Freiheitsgrad bewegt werden. (Siehe Fig. 56 für eine Darstellung einer Unterschenkelplatte 24 für eine Knie-Ellenbogen-Lage mit der Verstellvorrichtung 26 wie voranstehend beschrieben). Dies könnte dazu führen, dass, wenn der Anwender die Gelenkblockade des zweiten Drehlagers 40 versehentlich öffnet, die Polsteroberfläche der Unterschenkelplatte 24 um mehr als 60° rotieren kann und ein Patient nicht mehr sicher darauf knien kann.

In Zusammenhang der in Fig. 13 bis 20 gezeigten Ausführungsform ist bereits ist eine wirksame Lösung zur Blockierung dieses Freiheitsgrades in einer bestimmten winkligen Einstellung der Unterschenkelplatte zur Oberschenkelplatte beschrieben. Ein Nachteil dieser Lösung ist aber, daß diese Blockade nur in der extremalen Einstellung bei Einhaltung sehr feiner Fertigungs- und Montagetoleranzen wirksam funktioniert.

Die im Folgenden unter Bezugnahme auf Fig. 52 bis 59 beschriebene sechste Ausführungsform stellt eine wirksame, und gegenüber geometrischen Toleranzen unempfindlichere Rotationssperrvorrichtung 400 für diesen Freiheitsgrad bereit.

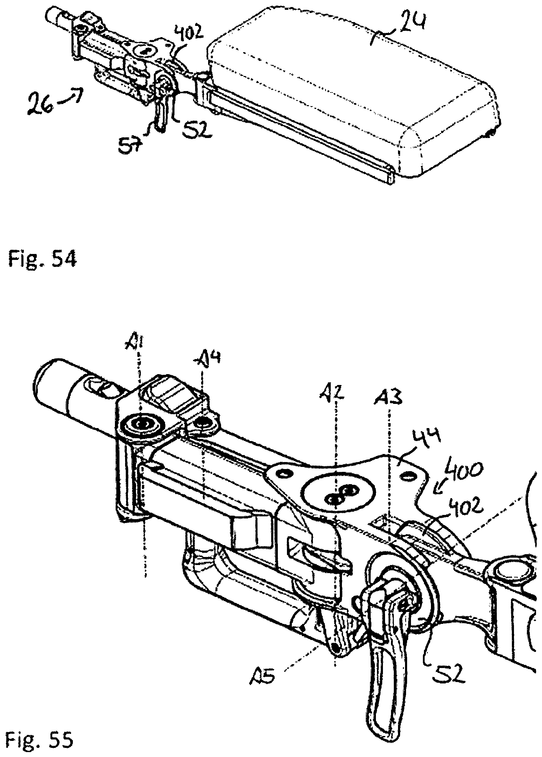

Wie beispielsweise in Fig. 55 gezeigt, ist dabei an dem Anteil des Gelenks 52, welches relativ zu dem ersten Verbindungselement 44 bewegt wird, das den zusätzlichen Freiheitsgrad der Bewegung relativ zur zweiten Schwenkachse A2 des Viergelenks 30 ermöglicht, ein Kontaktelement 402 ausgebildet, beispielsweise als ein länglicher Vorsprung 402 in Form eines Hahnenkamms. Dieses Kontaktelement 402 tritt in bestimmten Einstellungen des Gelenks 52 um die fünfte Schwenkachse A5 wirksam mit einem Teil des Viergelenkgetriebes 30 derart in Kontakt, dass der zusätzliche Freiheitsgrad der Rotation um die zweite Schwenkachse A2 wirksam verhindert wird.

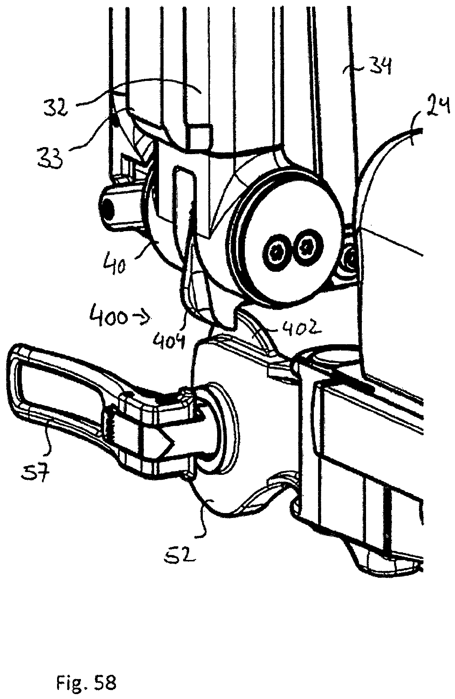

Wie in Fig. 58 gezeigt ist, tritt bei der Sperrung der Rotation um die zweite Schwenkachse A2 ein Anschlag 404, welcher beispielsweise an der Koppel 36 des Viergelenks 30 ausgebildet sein kann, in Kontakt mit dem Vorsprung 402. Sollte nun der Anwender eine Blockiervorrichtung für das Viergelenk 30 lösen, so kann das Viergelenk 30 als solches verschwenkt werden. Dabei wird der Anteil der Unterschenkelplatte dann entsprechend der Längenverhältnisse der Lenker und Koppeln im Raum verschwenkt. Ein zusätzliches Rotieren der Unterschenkelplatte 24 um die zweite Schwenkachse A2 mittels des zusätzlichen Freiheitsgrades wird jedoch durch die Rotationssperrvorrichtung 400 wirksam verhindert.

In Fig. 58 ist weiterhin erkennbar, dass die Ausgestaltung des Kontaktelements 402 als ein länglicher Vorsprung in Form eines Hahnenkamms gewährleistet ist, dass das Kontaktelement 402 auch bei kleineren eingestellten Winkeln zwischen Oberschenkelplatte 22 und Unterschenkelplatte 24 in Kontakt mit dem Anschlag 404 tritt. Daher ist die Rotationssperrvorrichtung 400 gemäß der sechsten Ausführungsform besonders unempfindlich auf Toleranzausprägungen der Bauteile.

### Bezugszeichenliste

- 10: Schnittstelle
- 12: Patientenlagerfläche
- 14: Kopfplatte
- 16: Rückenplatte
- 18: Rumpfplatte
- 20: Gelenkmodulplatte
- 22: Oberschenkelplatte
- 24: Unterschenkelplatte
- 26, 200, 240: Verstellvorrichtungen
- 28: Befestigungselement
- 30: Viergelenk
- 32: erster Lenker
- 32a: Innenverzahnung des ersten Lenkers
- 33: Bügel
- 34: zweiter Lenker
- 36: Koppel
- 38: erstes Drehlager
- 40, 202, 242: zweite Drehlager
- 42: drittes Drehlager
- 43: viertes Drehlager
- 44: erstes Verbindungselement
- 46, 48: Gabelarme
- 50, 243: Betätigungselemente
- 52: fünftes Drehlager
- 54: zweites Verbindungselement
- 56: Schnellspannvorrichtung
- 57: Arretierungshebel
- 58: sechstes Drehlager
- 60: Holm
- 62, 64, 256, 168: Gelenkelemente
- 63: Lager- und Eingriffselement
- 65, 103, 104, 112, 148, 150, 216 bis 222: Stifte
- 66, 98, 102, 136, 144, 162, 164: Zahnungen
- 68, 70, 264, 270: Lagerzapfen
- 72a, 72b, 74a, 74b, 170: Aussparungen
- 76a bis 76d: Schraubverbindungen
- 77, 138, 140, 228, 230: Durchgangslöcher
- 78, 80, 234, 236, 244, 246, 300: Arretierungseinheiten
- 82, 203, 248: Schaltelemente
- 84, 124, 258, 266: Sperrelemente
- 86, 126, 182: Kurvenscheiben
- 88, 128: Schraubendruckfedern
- 90, 130: Wellenfedern
- 92, 132: Lagerringe
- 94, 134: Öffnungen
- 96, 204, 250: Wellen
- 97: Vorsprung
- 100, 142: Kerbverzahnungen
- 106, 152, 184: Kurvenverläufe
- 108, 109, 154, 163, 188, 194, 224, 226: Steigungen
- 110, 111, 156, 165, 186, 190, 192, 196: steigungslose Bereiche
- 105, 107, 157, 161: Senken
- 113, 198, 199, 201: Betätigungspositionen
- 114 bis 120: Rollen
- 135: Zapfen
- 160, 176: Vorsprünge
- 158: Spalt
- 167: Rastelement
- 168: Rotationssperrelement
- 172: Sperrkörper
- 174, 178, 180: Flächen
- 206, 207, 210, 214, 252, 254, 262, 267: Gewinde
- 208, 212: Gewinderinge
- 302: Kupplungsstück
- 302a: Außenverzahnung
- 302b: Zentrierfortsatz
- 302c: Fangtrichter
- 302d: Bohrung
- 304: Betätigungselement
- 306: Rastelement
- 400: Rotationssperrvorrichtung
- 402: Vorsprung
- 404: Anschlagelement
- A1 bis A8: Schwenkachsen
- P1: Pfeil

## Patentansprüche

1. Verstellvorrichtung (26) zum Positionieren von Lagerflächensegmenten (22, 24) eines Operationstisches,
mit einem Viergelenk (30), über das ein Basiselement (28) des Operationstisches und ein Lagerflächensegment (22, 24) einer Patientenlagerfläche (12) des Operationstisches verbunden sind,
wobei das Viergelenk (30) einen ersten Lenker (32) hat, der an seinem ersten Ende mit dem Basiselement (28) um eine erste Schwenkachse (A1) und an seinem zweiten Ende mit einem ersten Ende einer Koppel (36) um eine zu der ersten Schwenkachse (A1) parallele zweite Schwenkachse (A2) schwenkbar verbundenen ist, und
wobei das Viergelenk (30) einen zweiten Lenker (34) hat, der an seinem ersten Ende mit dem Basiselement (28) um eine zu der ersten Schwenkachse (A1) parallele dritte Schwenkachse (A3) und an seinem zweiten Ende mit der Koppel (36) um eine zu der ersten Schwenkachse (A1) parallele vierte Schwenkachse (A4) schwenkbar verbunden ist, **dadurch gekennzeichnet,**
**dass** das Lagerflächensegment (22, 24) mit dem Viergelenk (30) um die zweite Schwenkachse (A2) schwenkbar verbunden ist.

2. Verstellvorrichtung (26) nach Anspruch 1, **dadurch gekennzeichnet, dass** die Verstellvorrichtung (26) eine erste Arretierungseinheit (78) zum Sperren einer Schwenkbewegung des Lagerflächensegments (22, 24) um die zweite Schwenkachse (A2) relativ zu dem ersten Lenker (32) oder der Koppel (36) hat.

3. Verstellvorrichtung (26) nach Anspruch 1 oder 2, **dadurch gekennzeichnet, dass** mit Hilfe des Viergelenks (30) eine Schwenkbewegung der zweiten Schwenkachse (A2) um die erste Schwenkachse (A1) möglich ist, und
dass die Verstellvorrichtung (26) eine zweite Arretierungseinheit (80) zum Sperren der Schwenkbewegung der zweiten Schwenkachse (A2) um die erste Schwenkachse (A1) hat.

4. Verstellvorrichtung (26) nach Anspruch 2 oder 3, **dadurch gekennzeichnet, dass** die erste Arretierungseinheit (78) in einer ersten Betätigungsposition eines Betätigungselements (50) in einem unverriegelten Zustand ist, in dem die Schwenkbewegung des Lagerflächensegments (22, 24) um die zweite Schwenkachse (A2) freigegeben ist, und
dass die erste Arretierungseinheit (78) in einer zweiten Betätigungsposition des Betätigungselements (50) in einem verriegelten Zustand ist, in dem die Schwenkbewegung des Lagerflächensegments (22, 24) um die zweite Schwenkachse (A2) gesperrt ist.

5. Verstellvorrichtung (26) nach Anspruch 4, **dadurch gekennzeichnet, dass** die zweite Arretierungseinheit (80) in der ersten Betätigungsposition des Betätigungselements (50) in einem unverriegelten Zustand ist, in dem die Schwenkbewegung der zweiten Schwenkachse (A2) um die erste Schwenkachse (A1) freigegeben ist, und
dass die zweite Arretierungseinheit (80) in der zweiten Betätigungsposition des Betätigungselements (50) in einem verriegelten Zustand ist, in dem die Schwenkbewegung der zweiten Schwenkachse (A2) um die erste Schwenkachse (A1) gesperrt ist.

6. Verstellvorrichtung (26) nach Anspruch 4, **dadurch gekennzeichnet, dass** die zweite Arretierungseinheit (80) in der ersten und der zweiten Betätigungsposition des Betätigungselements (50) in einem unverriegelten Zustand ist, in dem die Schwenkbewegung der zweiten Schwenkachse (A2) um die erste Schwenkachse (A1) freigegeben ist, und
dass die zweite Arretierungseinheit (80) in einer dritten Betätigungsposition des Betätigungselements (50) in einem verriegelten Zustand ist, in dem die Schwenkbewegung der zweiten Schwenkachse (A2) um die erste Schwenkachse (A1) gesperrt ist.

7. Verstellvorrichtung (26) nach Anspruch 3, **dadurch gekennzeichnet, dass** die erste Arretierungseinheit (78) in einer ersten Betätigungsposition eines Betätigungselements (50) und in einer zweiten Betätigungsposition des Betätigungselements (50) in einem unverriegelten Zustand ist, in dem die Schwenkbewegung des Lagerflächensegments (22, 24) um die zweite Schwenkachse (A2) freigegeben ist,
dass die erste Arretierungseinheit (78) in einer dritten Betätigungsposition des Betätigungselements (50) in einem verriegelten Zustand ist, in dem die Schwenkbewegung des Lagerflächensegments (22, 24) um die zweite Schwenkachse (A2) gesperrt ist,
dass die zweite Arretierungseinheit (80) in der ersten Betätigungsposition des Betätigungselements (50) in einem unverriegelten Zustand ist, in dem die Schwenkbewegung der zweiten Schwenkachse (A2) um die erste Schwenkachse (A1) freigegeben ist, und
dass die zweite Arretierungseinheit (80) in der zweiten und der dritten Betätigungsposition des Betätigungselements (50) in einem verriegelten Zustand ist, in dem die Schwenkbewegung der zweiten Schwenkachse (A2) um die erste Schwenkachse (A1) gesperrt ist.

8. Verstellvorrichtung (26) nach einem der Ansprüche 4 bis 7, **dadurch gekennzeichnet, dass** die erste Arretierungseinheit (78) ein relativ zu dem ersten Lenker (32) oder der Koppel (36) drehfestes erstes Sperrelement (84) umfasst,
dass das Lagerflächensegment (22, 24) ein fest mit diesem verbundenes erstes Eingriffselement (63) hat,
dass das erste Eingriffselement (63) in dem verriegelten Zustand der ersten Arretierungseinheit (78) mit dem ersten Sperrelement (84) in Eingriff steht, und
dass das erste Eingriffselement (63) in dem unverriegelten Zustand nicht mit dem ersten Sperrelement (84) in Eingriff steht.

9. Verstellvorrichtung (26) nach einem der Ansprüche 5 bis 8, **dadurch gekennzeichnet, dass** die zweite Arretierungseinheit (80) ein relativ zu dem ersten Lenker (32) drehfestes zweites Sperrelement (124) hat,
dass die Koppel (36) ein fest mit dieser verbundenes zweites Eingriffselement (135) hat,
dass das zweite Eingriffselement (135) in dem verriegelten Zustand der zweiten Arretierungseinheit (80) mit dem zweiten Sperrelement (124) in Eingriff steht, und
dass das zweite Eingriffselement (135) in dem unverriegelten Zustand nicht mit dem zweiten Sperrelement (124) in Eingriff steht.

10. Verstellvorrichtung (26) nach Anspruch 9, **dadurch gekennzeichnet, dass** in dem ersten Lenker (32) ein zylinderförmiges Durchgangsloch (77) ausgebildet ist,
dass das erste Sperrelement (84) in dem Durchgangsloch (77) angeordnet ist,
dass das erste Sperrelement (84) eine einer ersten Öffnung (94) des Durchgangslochs (77) zugewandte erste Seite hat, auf der eine erste Zahnung (98) des ersten Sperrelements (84) ausgebildet ist,
dass das erste Eingriffselement (63) eine zu der ersten Zahnung (98) des ersten Sperrelements (84) komplementär ausgebildete Zahnung (66) hat, über die das erste Eingriffselement (63) in dem verriegelten Zustand der ersten Arretierungseinheit (78) mit dem ersten Sperrelement (84) in Eingriff steht,
dass das zweite Sperrelement (124) in dem Durchgangsloch (77) angeordnet ist,
dass das zweite Sperrelement (124) eine der zweiten Öffnung (134) des Durchgangslochs (77) zugewandte erste Seite hat, auf der eine erste Zahnung (144) des zweiten Sperrelements (124) ausgebildet ist, und
dass das zweite Eingriffselement (135) eine zu der ersten Zahnung (144) des zweiten Sperrelements (124) komplementär ausgebildete Zahnung (136) hat, über die das zweite Eingriffselement (135) in dem verriegelten Zustand der zweiten Arretierungseinheit (80) mit dem zweiten Sperrelement (124) in Eingriff steht.

11. Verstellvorrichtung (26) nach Anspruch 9 oder 10, **dadurch gekennzeichnet, dass** das erste Sperrelement (84) und das zweite Sperrelement (124) jeweils um die Längsachse des Durchgangslochs (77) drehfest zu dem ersten Lenker (32) angeordnet sind, und
dass das erste Sperrelement (84) und das zweite Sperrelement (124) jeweils entlang der Längsachse (A2) des Durchgangslochs (77) verschiebbar angeordnet sind.

12. Verstellvorrichtung (26) nach Anspruch 10 oder 11, **dadurch gekennzeichnet, dass** in der Wandung des Durchgangslochs (77) eine Zahnung (102) ausgebildet ist, deren Zahnflanken parallel zu der Längsachse (A2) des Durchgangslochs (77) sind,
dass das erste Sperrelement (84) und das zweite Sperrelement (124) jeweils zylinderförmig ausgebildet sind und an ihrer Mantelfläche jeweils eine zu der Zahnung (102) des Durchgangslochs (77) komplementäre zweite Zahnung (100, 142) ausgebildet ist, über die das erste Sperrelement (84) und das zweite Sperrelement (124) jeweils mit dem ersten Lenker (32) in Eingriff stehen, und
dass das erste Sperrelement (84) und das zweite Sperrelement (124) jeweils entlang der Längsachse (A2) des Durchgangslochs (77) bewegbar sind.

13. Verstellvorrichtung (26) nach Anspruch 12, **dadurch gekennzeichnet, dass** die erste Arretierungseinheit (78) ein erstes Schaltelement (86) umfasst,
dass das Betätigungselement (50) mit einem zweiten Schaltelement (82) verbunden ist, das mit dem ersten Schaltelement (86) in Eingriff steht,
dass das zweite Schaltelement (82) bei einer Bewegung des Betätigungselements (50) von einer Betätigungsposition, in der die erste Arretierungseinheit (78) in dem unverriegelten Zustand ist, in eine Betätigungsposition, in der die erste Arretierungseinheit (78) in dem verriegelten Zustand ist, das erste Schaltelement (86) entlang der Längsachse (A2) des Durchgangslochs (77) von einer ersten Schaltposition des ersten Schaltelements (86) in eine zweite Schaltposition des ersten Schaltelements (86) bewegt,
dass die erste Zahnung (98) des ersten Sperrelements (84) in der ersten Schaltposition des ersten Schaltelements (86) in einem Abstand von der Zahnung (66) des ersten Eingriffselements (63) angeordnet ist, so dass die erste Arretierungseinheit (78) in dem unverriegelten Zustand ist, und
dass die erste Zahnung (98) des ersten Sperrelements (84) bei der Bewegung des ersten Schaltelements (86) von der ersten Schaltposition in die zweite Schaltposition entlang der Längsachse (A2) des Durchgangslochs (77) bewegt und mit der Zahnung (66) des ersten Eingriffselements (63) in Eingriff gebracht wird, so dass die erste Arretierungseinheit (78) in dem verriegelten Zustand ist.

14. Verstellvorrichtung (26) nach Anspruch 13, **dadurch gekennzeichnet, dass** die zweite Arretierungseinheit (80) ein drittes Schaltelement (126) umfasst,
dass das zweite Schaltelement (82) bei einer Bewegung des Betätigungselements (50) von einer Betätigungsposition, in der die zweite Arretierungseinheit (80) in dem unverriegelten Zustand ist, in eine Betätigungsposition, in der die zweite Arretierungseinheit (80) in dem verriegelten Zustand ist, das dritte Schaltelement (126) entlang der Längsachse (A2) des Durchgangslochs (77) von einer ersten Schaltposition des dritten Schaltelements (126) in eine zweite Schaltposition des dritten Schaltelements (126) bewegt,
dass die erste Zahnung (144) des zweiten Sperrelements (124) in der ersten Schaltposition des dritten Schaltelements (126) in einem Abstand von der Zahnung (136) des zweiten Eingriffselements (135) angeordnet ist, so dass die zweite Arretierungseinheit (80) in dem unverriegelten Zustand ist, und
dass die erste Zahnung (144) des zweiten Sperrelements (124) bei der Bewegung des dritten Schaltelements (126) von der ersten Schaltposition in die zweite Schaltposition entlang der Längsachse (A2) des Durchgangslochs (77) bewegt und mit der Zahnung (136) des zweiten Eingriffselements (135) in Eingriff gebracht wird, so dass die zweite Arretierungseinheit (80) in dem verriegelten Zustand ist.

15. Verstellvorrichtung (26) nach Anspruch 14, **dadurch gekennzeichnet, dass** die Bewegung des Betätigungselements (50) von der Betätigungsposition, in der die erste Arretierungseinheit (78) in dem unverriegelten Zustand ist, in die Betätigungsposition, in der die erste Arretierungseinheit (78) in dem verriegelten Zustand ist, eine Drehung des Betätigungselements (50) um die Längsachse (A2) des Durchgangslochs (77) ist,
dass das zweite Schaltelement (82) eine fest mit dem Betätigungselement (50) verbundene Welle (96), deren Längsachse entlang der Längsachse (A2) des Durchgangslochs (77) verläuft, und einen quer zu der Welle (96) angeordneten und mit der Welle (96) verbundenen Stift (112) umfasst,
dass das erste Schaltelement als eine erste Kurvenscheibe (86) ausgebildet ist, deren Kurvenbahn (106) auf der dem Stift (112) zugewandten Seite um die Längsachse (A2) des Durchgangslochs (77) herum angeordnet ist, wobei die Kurvenbahn (106) mindestens einen geneigten Abschnitt (108, 109) mit einer Steigung hat, und
dass der Stift (112) bei der Bewegung des Betätigungselements (50) von der Betätigungsposition, in der die erste Arretierungseinheit (78) in dem unverriegelten Zustand ist, in die Betätigungsposition, in der die erste Arretierungseinheit (78) in dem verriegelten Zustand ist, entlang des geneigten Abschnitts (108, 109) der Kurvenbahn (106) der ersten Kurvenscheibe (86) bewegt wird.

16. Verstellvorrichtung (26) nach Anspruch 15, **dadurch gekennzeichnet, dass** das dritte Schaltelement als eine zweite Kurvenscheibe (126) ausgebildet ist, deren Kurvenbahn (152) auf der dem Stift (112) zugewandten Seite um die Längsachse (A2) des Durchgangslochs (77) herum angeordnet ist, wobei die Kurvenbahn (152) mindestens einen geneigten Abschnitt (154) mit einer Steigung hat, und
dass die erste Kurvenscheibe (86) und die zweite Kurvenscheibe (126) derart relativ zu dem Stift (112) angeordnet sind, dass der Stift (112) bei der Bewegung des Betätigungselements (50) von der ersten Betätigungsposition in die zweite Betätigungsposition entlang des geneigten Abschnitts (108) der Kurvenbahn (106) der ersten Kurvenscheibe (86) und entlang des geneigten Abschnitts (154) der Kurvenbahn (152) der zweiten Kurvenscheibe (126) bewegt wird, oder
dass der Stift (112) bei der Bewegung des Betätigungselements (50) von der ersten Betätigungsposition in die zweite Betätigungsposition entlang des geneigten Abschnitts (108) der Kurvenbahn (106) der ersten Kurvenscheibe (86) und entlang eines Abschnitts (190) der Kurvenbahn (184) der zweiten Kurvenscheibe (182) ohne Steigung bewegt wird und bei der Bewegung des Betätigungselements (50) von der zweiten Betätigungsposition in die dritte Betätigungsposition entlang eines Abschnitts (110) der Kurvenbahn (106) der ersten Kurvenscheibe (86) ohne Steigung und entlang des geneigten Abschnitts (188) der Kurvenbahn (184) der zweiten Kurvenscheibe (182) bewegt wird, oder
dass der Stift (112) bei der Bewegung des Betätigungselements (50) von der ersten Betätigungsposition in die zweite Betätigungsposition entlang eines Abschnitts der Kurvenbahn der ersten Kurvenscheibe ohne Steigung und entlang des geneigten Abschnitts der Kurvenbahn der zweiten Kurvenscheibe bewegt wird und bei der Bewegung des Betätigungselements (50) von der zweiten Betätigungsposition in die dritte Betätigungsposition entlang des geneigten Abschnitts der Kurvenbahn der ersten Kurvenscheibe und entlang eines Abschnitts der Kurvenbahn der zweiten Kurvenscheibe ohne Steigung bewegt wird.

17. Verstellvorrichtung (240) nach Anspruch 11 oder 12, **dadurch gekennzeichnet, dass** eine Welle (250) vorhanden ist, die ein erstes Außengewinde (252) mit einer ersten Steigung und ein zweites Außengewinde (254) mit einer zweiten Steigung hat, wobei das erste Außengewinde (252) in einem ersten Bereich der Welle (250) und das zweite Außengewinde (254) in einem zweiten Bereich der Welle (250) jeweils um die Längsachse (A2) der Welle (250) angeordnet sind und die Richtungen der ersten Steigung und der zweiten Steigung einander entgegengesetzt sind,
dass das erste Sperrelement (258) eine Öffnung mit einem Innengewinde (262) hat, das komplementär zu dem ersten Außengewinde (252) ausgebildet ist und zumindest teilweise mit dem ersten Außengewinde (252) in Eingriff steht,
dass das zweite Sperrelement (266) eine Öffnung mit einem Innengewinde (267) hat, das komplementär zu dem zweiten Außengewinde (254) ausgebildet ist und zumindest teilweise mit dem zweiten Außengewinde (254) in Eingriff steht,
dass das Betätigungselement (50) mit der Welle (250) drehfest verbunden ist, und
dass durch die Bewegung des Betätigungselements (50) von der ersten Betätigungsposition in die zweite Betätigungsposition eine Drehung der Welle (250) um deren Längsachse (A2) erfolgt.

18. Verstellvorrichtung (200) nach Anspruch 14, **dadurch gekennzeichnet, dass** das zweite Schaltelement (203) eine Welle (204) umfasst,
dass die Welle (204) ein erstes Außengewinde (206) mit einer ersten Steigung (224) und ein zweites Außengewinde (207) mit einer zweiten Steigung (226) hat, wobei das erste Außengewinde (206) in einem ersten Bereich der Welle (204) und das zweite Außengewinde (207) in einem zweiten Bereich der Welle (204) jeweils um die Längsachse (A2) der Welle (204) angeordnet sind und die Richtungen der ersten Steigung (224) und der zweiten Steigung (226) einander entgegengesetzt sind,
dass das erste Schaltelement (208) eine Öffnung mit einem Innengewinde (210) hat, das komplementär zu dem ersten Außengewinde (206) ausgebildet ist und zumindest teilweise mit dem ersten Außengewinde (206) in Eingriff steht,
dass das dritte Schaltelement (212) eine Öffnung mit einem Innengewinde (214) hat, das komplementär zu dem zweiten Außengewinde (207) ausgebildet ist und zumindest teilweise mit dem zweiten Außengewinde (207) in Eingriff steht, und
dass durch die Bewegung des Betätigungselements (50) von der ersten Betätigungsposition in die zweite Betätigungsposition eine Drehung der Welle (204) um deren Längsachse (A2) erfolgt.

19. Verstellvorrichtung nach Anspruch 1, **dadurch gekennzeichnet, dass** eine kombinierte Arretierungseinheit (300) vorgesehen ist, welche ein Kupplungsstück (302) umfasst, das in einer ersten Schaltposition eine Schwenkbewegung des Lagerflächensegment (22, 24) mit dem Viergelenk (30) um die zweite Schwenkachse (A2) und eine Schwenkbewegung der zweiten Schwenkachse (A2) um die erste Schwenkachse (A1) ermöglicht, in einer zweiten Schaltposition eine Schwenkbewegung der zweiten Schwenkachse (A2) um die erste Schwenkachse (A1) sperrt, und in einer dritten Schaltposition zusätzlich auch eine Schwenkbewegung des Lagerflächensegments (22, 24) um die zweite Schwenkachse (A2) relativ zu dem ersten Lenker (32) oder der Koppel (36) sperrt.

20. Verstellvorrichtung nach Anspruch 19, **dadurch gekennzeichnet, dass** die Verstellvorrichtung ferner ein Verbindungselement (44) zur drehbaren Verbindung des Lagerflächensegments (22, 24) mit dem Viergelenk (30) umfasst, und dass das Kupplungsstück (302) axial in Richtung der zweiten Schwenkachse (A2) verschiebbar ist, wobei das Kupplungsstück (302) wenigstens eine Außenverzahnung (302a) aufweist, die in eine Innenverzahnung (32a) des ersten Lenkers (32) und/oder der Koppel (36) und/oder des Verbindungselements (44) eingreifen kann.

21. Verstellvorrichtung nach einem der Ansprüche 19 oder 20, **dadurch gekennzeichnet, dass** das Kupplungsstück (302) ferner mindestens einen Zentrierfortsatz (302b) umfasst, auf welchem der erste Lenker (32) und/oder die Koppel (36) und/oder das Verbindungselement (44) frei drehbar sind.

22. Verstellvorrichtung nach Anspruch 20 oder 21, **dadurch gekennzeichnet, dass** wenigstens ein axialer Randbereich (302c) der Außenverzahnung (302a) des Kupplungsstücks (302) derart ausgebildet ist, dass in diesem Randbereich (302c) die Seitenwände jeweils benachbarter Zähne derart relativ zueinander geneigt und/oder gewölbt ausgeführt sind, dass trichterförmige Zwischenräume zwischen benachbarten Zähnen gebildet werden.

23. Verstellvorrichtung nach einem der Ansprüche 20 bis 22, **dadurch gekennzeichnet, dass** am Kupplungsstück (302) ein federgelagertes Rastelement (306) vorgesehen ist, das in die Innenverzahnung (32a) des ersten Lenkers (32) und/oder der Koppel (36) und/oder des Verbindungselements (44) eingreift.

24. Verstellvorrichtung nach einem der Ansprüche 19 bis 23, **dadurch gekennzeichnet, dass** die jeweiligen Innenverzahnungen des ersten Lenkers (32), der Koppel (36) und des Verbindungselements (44) in axialer Richtung hintereinander angeordnet sind, und dass das Kupplungsstück (302) wahlweise mit einem, zwei oder drei der Innenverzahnungen in Eingriff bringbar ist.

25. Verstellvorrichtung nach Anspruch 1, **dadurch gekennzeichnet, dass** das Lagerflächensegment (22, 24) ein erstes Teilsegment (22) und ein zweites Teilsegment (24) aufweist, welche relativ zueinander um eine weitere Schwenkachse (A5) verschwenkbar sind, wobei die weitere Schwenkachse (A5) im Wesentlichen senkrecht zur ersten und zweiten Schwenkachse (A1, A2) verläuft, und dass eine Rotationssperrvorrichtung (400) vorgesehen ist, die in einem vorbestimmten Winkelbereich der Verschwenkung um die weitere Schwenkachse (A5) eine Rotation des Lagerflächensegments (22, 24) um die zweite Schwenkachse (A2) in wenigstens einer Richtung sperrt.

26. Verstellvorrichtung nach Anspruch 25, **dadurch gekennzeichnet, dass** die Rotationssperrvorrichtung (400) ein Kontaktelement (402) aufweist, welches mit dem zweiten Teilsegment (24) fest verbunden ist, und ferner ein Anschlagselement (404) aufweist, welches mit der Koppel (36) oder mit dem ersten Lenker (32) des Viergelenks (30) fest verbunden ist, so dass bei einer Verstellung des zweiten Teilsegments (24) relativ zum ersten Teilsegment (22) um die weitere Schwenkachse (A5) das Kontaktelement (402) in Kontakt mit dem Anschlagselement (404) gebracht wird und somit eine Verschwenkung des Lagerflächensegments (22, 24) um die zweite Schwenkachse (A2) in eine Richtung sperrt.

27. Verstellvorrichtung nach Anspruch 26, **dadurch gekennzeichnet, dass** das Kontaktelement einen länglichen Vorsprung (402) umfasst.

28. Verstellvorrichtung nach einem der Ansprüche 26 oder 27, **dadurch gekennzeichnet, dass** die Rotationssperrvorrichtung (400) in einem Winkelbereich von 75° bis 90° der Verstellung um die weitere Schwenkachse (A5) ein Verschwenken des Lagerflächensegments (22, 24) um die zweite Schwenkachse (A2) sperrt.

29. Verstellvorrichtung nach einem der Ansprüche 26 bis 28, **dadurch gekennzeichnet, dass** in einem Sperrzustand der Rotationssperrvorrichtung (400) die zweite Schwenkachse (A2) mittels des Viergelenks (30) um die erste Schwenkachse (A1) verschwenkbar ist.

## Claims

1. An adjustment device (26) for positioning support surface segments (22, 24) of an operating table,
having a four-bar linkage (30) via which a base element (28) of the operating table and a support surface segment (22, 24) of a patient support surface (12) of the operating table are connected,
wherein the four-bar linkage (30) has a first guide bar (32) which at its first end is connected to the base element (28) so as to be pivotable about a first swivel axis (A1), and at its second end is connected to a first end of a coupler (36) so as to be pivotable about a second swivel axis (A2) that is parallel to the first swivel axis (A1), and
wherein the four-bar linkage (30) has a second guide bar (34) which at its first end is connected to the base element (28) so as to be pivotable about a third swivel axis (A3) that is parallel to the first swivel axis (A1), and at its second end is connected to the coupler (36) so as to be pivotable about a fourth swivel axis (A4) that is parallel to the first swivel axis (A1), **characterized in that**
the support surface segment (22, 24) is connected to the four-bar linkage (30) so as to be pivotable about the second swivel axis (A2).

2. The adjustment device (26) according to Claim 1, **characterized in that** the adjustment device (26) has a first locking unit (78) for blocking a swivel motion of the support surface segment (22, 24) about the second swivel axis (A2) relative to the first guide bar (32) or the coupler (36).

3. The adjustment device (26) according to Claim 1 or 2, **characterized in that** a swivel motion of the second swivel axis (A2) about the first swivel axis (A1) is possible with the aid of the four-bar linkage (30), and
the adjustment device (26) has a second locking unit (80) for blocking the swivel motion of the second swivel axis (A2) about the first swivel axis (A1).

4. The adjustment device (26) according to Claim 2 or 3, **characterized in that** in a first actuating position of an actuating element (50), the first locking unit (78) is in an unlocked state in which the swivel motion of the support surface segment (22, 24) about the second swivel axis (A2) is enabled, and
in a second actuating position of the actuating element (50), the first locking unit (78) is in a locked state in which the swivel motion of the support surface segment (22, 24) about the second swivel axis (A2) is blocked.

5. The adjustment device (26) according to Claim 4, **characterized in that** in the first actuating position of the actuating element (50), the second locking unit (80) is in an unlocked state in which the swivel motion of the second swivel axis (A2) about the first swivel axis (A1) is enabled, and
in the second actuating position of the actuating element (50), the second locking unit (80) is in a locked state in which the swivel motion of the second swivel axis (A2) about the first swivel axis (A1) is blocked.

6. The adjustment device (26) according to Claim 4, **characterized in that** in the first and second actuating positions of the actuating element (50), the second locking unit (80) is in an unlocked state in which the swivel motion of the second swivel axis (A2) about the first swivel axis (A1) is enabled, and
in a third actuating position of the actuating element (50), the second locking unit (80) is in a locked state in which the swivel motion of the second swivel axis (A2) about the first swivel axis (A1) is blocked.

7. The adjustment device (26) according to Claim 3, **characterized in that** in a first actuating position of an actuating element (50) and in a second actuating position of the actuating element (50), the first locking unit (78) is in an unlocked state in which the swivel motion of the support surface segment (22, 24) about the second swivel axis (A2) is enabled,
in a third actuating position of the actuating element (50), the first locking unit (78) is in a locked state in which the swivel motion of the support surface segment (22, 24) about the second swivel axis (A2) is blocked,
in the first actuating position of the actuating element (50), the second locking unit (80) is in an unlocked state in which the swivel motion of the second swivel axis (A2) about the first swivel axis (A1) is enabled, and
in the second and third actuating positions of the actuating element (50), the second locking unit (80) is in a locked state in which the swivel motion of the second swivel axis (A2) about the first swivel axis (A1) is blocked.

8. The adjustment device (26) according to one of Claims 4 to 7, **characterized in that** the first locking unit (78) includes a first blocking element (84) that is rotatably fixed relative to the first guide bar (32) or the coupler (36),
the support surface segment (22, 24) has a first engagement element (63) that is fixedly connected thereto,
in the locked state of the first locking unit (78), the first engagement element (63) is engaged with the first blocking element (84), and
in the unlocked state, the first engagement element (63) is not engaged with the first blocking element (84).

9. The adjustment device (26) according to one of Claims 5 to 8, **characterized in that** the second locking unit (80) has a second blocking element (124) that is rotatably fixed relative to the first guide bar (32),
the coupler (36) has a second engagement element (135) that is fixedly connected thereto,
in the locked state of the second locking unit (80), the second engagement element (135) is engaged with the second blocking element (124), and
in the unlocked state, the second engagement element (135) is not engaged with the second blocking element (124).

10. The adjustment device (26) according to Claim 9, **characterized in that** a cylindrical through hole (77) is formed in the first guide bar (32),
the first blocking element (84) is situated in the through hole (77),
the first blocking element (84) has a first side that faces a first opening (94) of the through hole (77), and on which a first toothing (98) of the first blocking element (84) is formed,
the first engagement element (63) has a toothing (66) having a design that is complementary to the first toothing (98) of the first blocking element (84), and via which in the locked state of the first locking unit (78) the first engagement element (63) is engaged with the first blocking element (84),
the second blocking element (124) is situated in the through hole (77),
the second blocking element (124) has a first side that faces the second opening (134) of the through hole (77), and on which a first toothing (144) of the second blocking element (124) is formed, and
the second engagement element (135) has a toothing (136) having a design that is complementary to the first toothing (144) of the second blocking element (124), and via which in the locked state of the second locking unit (80) the second engagement element (135) is engaged with the second blocking element (124).

11. The adjustment device (26) according to Claim 9 or 10, **characterized in that** the first blocking element (84) and the second blocking element (124) are each situated about the longitudinal axis of the through hole (77) so as to be rotatably fixed with respect to the first guide bar (32), and
the first blocking element (84) and the second blocking element (124) are each situated so as to be displaceable along the longitudinal axis (A2) of the through hole (77).

12. The adjustment device (26) according to Claim 10 or 11, **characterized in that** a toothing (102) whose tooth flanks are parallel to the longitudinal axis (A2) of the through hole (77) is formed in the wall of the through hole (77),
the first blocking element (84) and the second blocking element (124) each have a cylindrical design, and on their circumferential surface a second toothing (100, 142) that is complementary to the toothing (102) of the through hole (77) is formed in each case, via which the first blocking element (84) and the second blocking element (124) are each engaged with the first guide bar (32), and
the first blocking element (84) and the second blocking element (124) are each movable along the longitudinal axis (A2) of the through hole (77).

13. The adjustment device (26) according to Claim 12, **characterized in that** the first locking unit (78) includes a first switching element (86),
the actuating element (50) is connected to a second switching element (82) that is engaged with the first switching element (86),
during a movement of the actuating element (50) from an actuating position in which the first locking unit (78) is in the unlocked state, into an actuating position in which the first locking unit (78) is in the locked state, the second switching element (82) moves the first switching element (86) along the longitudinal axis (A2) of the through hole (77) from a first switching position of the first switching element (86) into a second switching position of the first switching element (86),
in the first switching position of the first switching element (86), the first toothing (98) of the first blocking element (84) is situated at a distance from the toothing (66) of the first engagement element (63), so that the first locking unit (78) is in the unlocked state, and
during the movement of the first switching element (86) from the first switching position into the second switching position, the first toothing (98) of the first blocking element (84) moves along the longitudinal axis (A2) of the through hole (77) and is brought into engagement with the toothing (66) of the first engagement element (63), so that the first locking unit (78) is in the locked state.

14. The adjustment device (26) according to Claim 13, **characterized in that** the second locking unit (80) includes a third switching element (126),
during a movement of the actuating element (50) from an actuating position in which the second locking unit (80) is in the unlocked state, into an actuating position in which the second locking unit (80) is in the locked state, the second switching element (82) moves the third switching element (126) along the longitudinal axis (A2) of the through hole (77) from a first switching position of the third switching element (126) into a second switching position of the third switching element (126),
in the first switching position of the third switching element (126), the first toothing (144) of the second blocking element (124) is situated at a distance from the toothing (136) of the second engagement element (135), so that the second locking unit (80) is in the unlocked state, and
during the movement of the third switching element (126) from the first switching position into the second switching position, the first toothing (144) of the second blocking element (124) moves along the longitudinal axis (A2) of the through hole (77) and is brought into engagement with the toothing (136) of the second engagement element (135), so that the second locking unit (80) is in the locked state.

15. The adjustment device (26) according to Claim 14, **characterized in that** the movement of the actuating element (50) from the actuating position in which the first locking unit (78) is in the unlocked state, into the actuating position in which the first locking unit (78) is in the locked state, is a rotation of the actuating element (50) about the longitudinal axis (A2) of the through hole (77),
the second switching element (82) includes a shaft (96) that is fixedly connected to the actuating element (50), and whose longitudinal axis extends along the longitudinal axis (A2) of the through hole (77), and includes a pin (112) that is situated transverse to the shaft (96) and is connected to the shaft (96),
the first switching element is designed as a first cam disk (86) whose curved path (106) on the side facing the pin (112) is situated around the longitudinal axis (A2) of the through hole (77), wherein the curved path (106) has at least one inclined section (108, 109) with a pitch, and
during the movement of the actuating element (50) from the actuating position in which the first locking unit (78) is in the unlocked state, into the actuating position in which the first locking unit (78) is in the locked state, the pin (112) is moved along the inclined section (108, 109) of the curved path (106) of the first cam disk (86).

16. The adjustment device (26) according to Claim 15, **characterized in that** the third switching element is designed as a second cam disk (126) whose curved path (152) on the side facing the pin (112) is situated around the longitudinal axis (A2) of the through hole (77), wherein the curved path (152) has at least one inclined section (154) with a pitch, and
the first cam disk (86) and the second cam disk (126) are situated relative to the pin (112) in such a way that during the movement of the actuating element (50) from the first actuating position into the second actuating position, the pin (112) is moved along the inclined section (108) of the curved path (106) of the first cam disk (86) and along the inclined section (154) of the curved path (152) of the second cam disk (126), or
during the movement of the actuating element (50) from the first actuating position into the second actuating position, the pin (112) is moved along the inclined section (108) of the curved path (106) of the first cam disk (86) and along a section (190) of the curved path (184) of the second cam disk (182) without a pitch, and during the movement of the actuating element (50) from the second actuating position into the third actuating position, the pin is moved along a section (110) of the curved path (106) of the first cam disk (86) without a pitch and along the inclined section (188) of the curved path (184) of the second cam disk (182), or
during the movement of the actuating element (50) from the first actuating position into the second actuating position, the pin (112) is moved along a section of the curved path of the first cam disk without a pitch, and along the inclined section of the curved path of the second cam disk, and during the movement of the actuating element (50) from the second actuating position into the third actuating position, the pin is moved along the inclined section of the curved path of the first cam disk and along a section of the curved path of the second cam disk without a pitch.

17. The adjustment device (240) according to Claim 11 or 12, **characterized in that** a shaft (250) is present that has a first male thread (252) with a first pitch and a second male thread (254) with a second pitch, wherein the first male thread (252) is situated in a first area of the shaft (250) and the second male thread (254) is situated in a second area of the shaft (250), in each case about the longitudinal axis (A2) of the shaft (250), and the directions of the first pitch and of the second pitch are opposite one another,
the first blocking element (258) has an opening with a female thread (262) that has a design that is complementary to the first male thread (252), and that is at least partially engaged with the first male thread (252),
the second blocking element (266) has an opening with a female thread (267) that has a design that is complementary to the second male thread (254), and that is at least partially engaged with the second male thread (254),
the actuating element (50) is nonrotatably connected to the shaft (250), and
a rotation of the shaft (250) about its longitudinal axis (A2) results from the movement of the actuating element (50) from the first actuating position into the second actuating position.

18. The adjustment device (200) according to Claim 14, **characterized in that** the second switching element (203) includes a shaft (204),
the shaft (204) has a first male thread (206) with a first pitch (224) and a second male thread (207) with a second pitch (226), wherein the first male thread (206) is situated in a first area of the shaft (204) and the second male thread (207) is situated in a second area of the shaft (204), in each case about the longitudinal axis (A2) of the shaft (204), and the directions of the first pitch (224) and of the second pitch (226) are opposite one another,
the first switching element (208) has an opening with a female thread (210) that has a design that is complementary to the first male thread (206), and that is at least partially engaged with the first male thread (206),
the third switching element (212) has an opening with a female thread (214) that has a design that is complementary to the second male thread (207), and that is at least partially engaged with the second male thread (207), and
a rotation of the shaft (204) about its longitudinal axis (A2) results from the movement of the actuating element (50) from the first actuating position into the second actuating position.

19. The adjustment device according to Claim 1, **characterized in that** a combined locking unit (300) is provided that includes a coupling piece (302) which in a first switching position allows a swivel motion of the support surface segment (22, 24) via the four-bar linkage (30) about the second swivel axis (A2) and a swivel motion of the second swivel axis (A2) about the first swivel axis (A1), in a second switching position blocks a swivel motion of the second swivel axis (A2) about the first swivel axis (A1), and in a third switching position additionally blocks a swivel motion of the support surface segment (22, 24) about the second swivel axis (A2) relative to the first guide bar (32) or the coupler (36).

20. The adjustment device according to Claim 19, **characterized in that** the adjustment device also includes a connecting element (44) for rotatably connecting the support surface segment (22, 24) to the four-bar linkage (30), and the coupling piece (302) is axially displaceable in the direction of the second swivel axis (A2), wherein the coupling piece (302) has at least one external toothing (302a) that can engage with an internal toothing (32a) of the first guide bar (32) and/or of the coupler (36) and/or of the connecting element (44).

21. The adjustment device according to one of Claims 19 or 20, **characterized in that** the coupling piece (302) also includes at least one centering extension (302b) on which the first guide bar (32) and/or the coupler (36) and/or the connecting element (44) are/is freely rotatable.

22. The adjustment device according to Claim 20 or 21, **characterized in that** at least one axial edge area (302c) of the external toothing (302a) of the coupling piece (302) is designed in such a way that in this edge area (302c), the side walls of respective adjacent teeth are inclined and/or arched relative to one another in such a way that funnel-shaped intermediate spaces are formed between adjacent teeth.

23. The adjustment device according to one of Claims 20 to 22, **characterized in that** a spring-mounted detent element (306) is provided on the coupling piece (302), and engages with the internal toothing (32a) of the first guide bar (32) and/or of the coupler (36) and/or of the connecting element (44) .

24. The adjustment device according to one of Claims 19 to 23, **characterized in that** the respective internal toothings of the first guide bar (32), of the coupler (36), and of the connecting element (44) are situated in succession in the axial direction, and the coupling piece (302) may be selectively brought into engagement with one, two, or three of the internal toothings.

25. The adjustment device according to Claim 1, **characterized in that** the support surface segment (22, 24) has a first subsegment (22) and a second subsegment (24) that may be swiveled relative to one another about a further swivel axis (A5), wherein the further swivel axis (A5) extends essentially perpendicularly with respect to the first and second swivel axes (A1, A2), and a rotation blocking device (400) is provided which in a predetermined angular range of the swiveling about the further swivel axis (A5) blocks a rotation of the support surface segment (22, 24) about the second swivel axis (A2) in at least one direction.

26. The adjustment device according to Claim 25, **characterized in that** the rotation blocking device (400) has a contact element (402) that is fixedly connected to the second subsegment (24), and also has a stop element (404) that is fixedly connected to the coupler (36) or to the first guide bar (32) of the four-bar linkage (30), so that during an adjustment of the second subsegment (24) relative to the first subsegment (22) about the further swivel axis (A5), the contact element (402) is brought into contact with the stop element (404) and thus blocks swiveling of the support surface segment (22, 24) about the second swivel axis (A2) in one direction.

27. The adjustment device according to Claim 26, **characterized in that** the contact element includes an elongated projection (402) .

28. The adjustment device according to one of Claims 26 or 27, **characterized in that** the rotation blocking device (400) blocks swiveling of the support surface segment (22, 24) about the second swivel axis (A2) in an angular range of 75° to 90° of the adjustment about the further swivel axis (A5) .

29. The adjustment device according to one of Claims 26 to 28, **characterized in that** in a blocked state of the rotation blocking device (400), the second swivel axis (A2) may be swiveled about the first swivel axis (A1) by means of the four-bar linkage (30).

## Revendications

1. Dispositif de réglage (26) destiné à positionner des segments de surface de support (22, 24) d'une table d'opération,
ledit dispositif de réglage comprenant un quadrilatère articulé (30) qui permet de relier un élément de base (28) de la table d'opération et un segment de surface de support (22, 24) d'une surface de support de patient (12) de la table d'opération,
le quadrilatère articulé (30) comportant une première barre de guidage (32) qui est reliée, à sa première extrémité, à l'élément de base (28) de manière à pouvoir pivoter sur un premier axe de pivotement (A1) et, à sa deuxième extrémité, à une première extrémité d'un élément d'accouplement (36) de manière à pouvoir pivoter sur un deuxième axe de pivotement (A2) parallèle au premier axe de pivotement (A1), et
le quadrilatère articulé (30) comportant une deuxième barre de guidage (34) qui est reliée, à sa première extrémité, à l'élément de base (28) de manière à pouvoir pivoter sur un troisième axe de pivotement (A3) parallèle au premier axe de pivotement (A1) et, à sa deuxième extrémité, à l'élément d'accouplement (36) de manière à pouvoir pivoter sur un quatrième axe de pivotement (A4) parallèle au premier axe de pivotement (A1), **caractérisé en ce que**
le segment de surface de support (22, 24) est relié au quadrilatère articulé (30) de manière à pouvoir pivoter sur le deuxième axe de pivotement (A2).

2. Dispositif de réglage (26) selon la revendication 1, **caractérisé en ce que** le dispositif de réglage (26) comporte une première unité de blocage (78) destinée à bloquer le mouvement de pivotement du segment de surface de support (22, 24) sur le deuxième axe de pivotement (A2) par rapport à la première barre de guidage (32) ou à l'élément d'accouplement (36) .

3. Dispositif de réglage (26) selon la revendication 1 ou 2, **caractérisé en ce que** le mouvement de pivotement du deuxième axe de pivotement (A2) sur le premier axe de pivotement (A1) est possible à l'aide du quadrilatère articulé (30) et **en ce que**
le dispositif de réglage (26) comporte une deuxième unité de blocage (80) destinée à bloquer le mouvement de pivotement du deuxième axe de pivotement (A2) sur le premier axe de pivotement (A1).

4. Dispositif de réglage (26) selon la revendication 2 ou 3, **caractérisé en ce que**, dans une première position d'actionnement d'un élément d'actionnement (50), la première unité de blocage (78) est dans un état débloqué dans lequel le mouvement de pivotement du segment de surface de support (22, 24) sur le deuxième axe de pivotement (A2) est libéré, et **en ce que**,
dans une deuxième position d'actionnement de l'élément d'actionnement (50), la première unité de blocage (78) est dans un état bloqué dans lequel le mouvement de pivotement du segment de surface de support (22, 24) sur le deuxième axe de pivotement (A2) est bloqué.

5. Dispositif de réglage (26) selon la revendication 4, **caractérisé en ce que**, dans la première position d'actionnement de l'élément d'actionnement (50), la deuxième unité de blocage (80) est dans un état débloqué dans lequel le mouvement de pivotement du deuxième axe de pivotement (A2) sur le premier axe de pivotement (A1) est libéré, et **en ce que**,
dans la deuxième position d'actionnement de l'élément d'actionnement (50), la deuxième unité de blocage (80) est dans un état bloqué dans lequel le mouvement de pivotement du deuxième axe de pivotement (A2) sur le premier axe de pivotement (A1) est bloqué.

6. Dispositif de réglage (26) selon la revendication 4, **caractérisé en ce que**, dans les première et deuxième positions d'actionnement de l'élément d'actionnement (50), la deuxième unité de blocage (80) est dans un état débloqué dans lequel le mouvement de pivotement du deuxième axe de pivotement (A2) sur le premier axe de pivotement (A1) est libéré, et **en ce que**, dans une troisième position d'actionnement de l'élément d'actionnement (50), la deuxième unité de blocage (80) est dans un état bloqué dans lequel le mouvement de pivotement du deuxième axe de pivotement (A2) sur le premier axe de pivotement (A1) est bloqué.

7. Dispositif de réglage (26) selon la revendication 3, **caractérisé en ce que**, dans une première position d'actionnement d'un élément d'actionnement (50) et dans une deuxième position d'actionnement de l'élément d'actionnement (50), la première unité de blocage (78) est dans un état débloqué dans lequel le mouvement de pivotement du segment de surface de support (22, 24) sur le deuxième axe de pivotement (A2) est libéré, **en ce que**,
dans une troisième position d'actionnement de l'élément d'actionnement (50), la première unité de blocage (78) est dans un état bloqué dans lequel le mouvement de pivotement du segment de surface de support (22, 24) sur le deuxième axe de pivotement (A2) est bloqué, **en ce que**,
dans la première position d'actionnement de l'élément d'actionnement (50), la deuxième unité de blocage (80) est dans un état débloqué dans lequel le mouvement de pivotement du deuxième axe de pivotement (A2) sur le premier axe de pivotement (A1) est libéré, et **en ce que**,
dans les deuxième et troisième positions d'actionnement de l'élément d'actionnement (50), la deuxième unité de blocage (80) est dans un état bloqué dans lequel le mouvement de pivotement du deuxième axe de pivotement (A2) sur le premier axe de pivotement (A1) est bloqué.

8. Dispositif de réglage (26) selon l'une des revendications 4 à 7, **caractérisé en ce que** la première unité de blocage (78) comporte un premier élément de blocage (84) relié solidairement en rotation à la première barre de guidage (32) ou à l'élément d'accouplement (36), **en ce que**
le segment de surface de support (22, 24) comporte un premier élément d'engagement (63) qui est relié de manière fixe à celui-ci, **en ce que**,
dans l'état bloqué de la première unité de blocage (78), le premier élément d'engagement (63) est en engagement avec le premier élément de blocage (84), et **en ce que**,
à l'état débloqué, le premier élément d'engagement (63) n'est pas en engagement avec le premier élément de blocage (84).

9. Dispositif de réglage (26) selon l'une des revendications 5 à 8, **caractérisé en ce que** la deuxième unité de blocage (80) comporte un deuxième élément de blocage (124) relié solidairement en rotation à la première barre de guidage (32), **en ce que**
l'élément d'accouplement (36) comporte un deuxième élément d'engagement (135) auquel il est relié de manière fixe, **en ce que**,
dans l'état bloqué de la deuxième unité de blocage (80), le deuxième élément d'engagement (135) est en engagement avec le deuxième élément de blocage (124), et **en ce que**,
à l'état débloqué, le deuxième élément d'engagement (135) n'est pas en engagement avec le deuxième élément de blocage (124).

10. Dispositif de réglage (26) selon la revendication 9, **caractérisé en ce qu'**un trou traversant cylindrique (77) est ménagé dans la première barre de guidage (32), **en ce que** le premier élément de blocage (84) est disposé dans le trou traversant (77), **en ce que**
le premier élément de blocage (84) présente un premier côté qui fait face à une première ouverture (94) du trou traversant (77) et sur lequel est formée une première denture (98) du premier élément de blocage (84), **en ce que**
le premier élément d'engagement (63) comporte une denture (66) qui est conçue pour être complémentaire de la première denture (98) du premier élément de blocage (84) et par le biais de laquelle, à l'état bloqué de la première unité de blocage (78), le premier élément d'engagement (63) est en engagement avec le premier élément de blocage (84), **en ce que**
le deuxième élément de blocage (124) est ménagé dans le trou traversant (77), **en ce que**
le deuxième élément de blocage (124) présente un premier côté qui fait face à la deuxième ouverture (134) du trou traversant (77) et sur lequel est formée une première denture (144) du deuxième élément de blocage (124), et **en ce que** le deuxième élément d'engagement (135) comporte une denture (136) qui est conçue pour être complémentaire de la première denture (144) du deuxième élément de blocage (124) et par le biais de laquelle, à l'état bloqué de la deuxième unité de blocage (80), le deuxième élément d'engagement (135) est en engagement avec le deuxième élément de blocage (124).

11. Dispositif de réglage (26) selon la revendication 9 ou 10, **caractérisé en ce que** le premier élément de blocage (84) et le deuxième élément de blocage (124) sont situés chacun solidairement en rotation sur l'axe longitudinal du trou traversant (77) par rapport à la première barre de guidage (32), et **en ce que**
le premier élément de blocage (84) et le deuxième élément de blocage (124) sont chacun situés de manière coulissante le long de l'axe longitudinal (A2) du trou traversant (77).

12. Dispositif de réglage (26) selon la revendication 10 ou 11, **caractérisé en ce qu'**une denture (102), dont les flancs de dent sont parallèles à l'axe longitudinal (A2) du trou traversant (77), est formée dans la paroi du trou traversant (77), **en ce que**
le premier élément de blocage (84) et le deuxième élément de blocage (124) ont chacun une forme cylindrique et comportent chacun sur leur surface latérale une deuxième denture (100, 142) qui est complémentaire de la denture (102) du trou traversant (77) et par le biais de laquelle le premier élément de blocage (84) et le deuxième élément de blocage (124) sont chacun en engagement avec la première barre de guidage (32), et **en ce que**
le premier élément de blocage (84) et le deuxième élément de blocage (124) sont chacun mobiles le long de l'axe longitudinal (A2) du trou traversant (77).

13. Dispositif de réglage (26) selon la revendication 12, **caractérisé en ce que** la première unité de blocage (78) comprend un premier élément de commutation (86), **en ce que** l'élément d'actionnement (50) est relié à un deuxième élément de commutation (82) qui est en engagement avec le premier élément de commutation (86), **en ce que**,
lors du mouvement de l'élément d'actionnement (50) d'une position d'actionnement, dans laquelle la première unité de blocage (78) est à l'état débloqué, dans une position d'actionnement dans laquelle la première unité de blocage (78) est à l'état bloqué, le deuxième un élément de commutation (82) déplace le premier élément de commutation (86) le long de l'axe longitudinal (A2) du trou traversant (77) d'une première position de commutation du premier élément de commutation (86) dans une deuxième position de commutation du premier élément de commutation (86), **en ce que**,
dans la première position de commutation du premier élément de commutation (86), la première denture (98) du premier élément de blocage (84) est située à distance de la denture (66) du premier élément d'engagement (63) de sorte que la première unité de blocage (78) soit à l'état débloqué, et **en ce que**, pendant le mouvement du premier élément de commutation (86) de la première position de commutation dans la deuxième position de commutation, la première denture (98) du premier élément de blocage (84) se déplace le long de l'axe longitudinal (A2) du trou traversant (77) et est amenée en engagement avec la denture (66) du premier élément d'engagement (63) de sorte que la première unité de blocage (78) soit à l'état bloqué.

14. Dispositif de réglage (26) selon la revendication 13, **caractérisé en ce que** la deuxième unité de blocage (80) comprend un troisième élément de commutation (126), **en ce que**, lors d'un mouvement de l'élément d'actionnement (50) d'une position d'actionnement, dans laquelle la deuxième unité de blocage (80) est à l'état débloqué, dans une position d'actionnement dans laquelle la deuxième unité de blocage (80) est à l'état bloqué, le deuxième élément de commutation (82) déplace le troisième élément de commutation (126) le long de l'axe longitudinal (A2) du trou traversant (77) d'une première position de commutation du troisième élément de commutation (126) dans une deuxième position de commutation du troisième élément de commutation (126), **en ce que**,
dans la première position de commutation du troisième élément de commutation (126), la première denture (144) du deuxième élément de blocage (124) est située à distance de la denture (136) du deuxième élément d'engagement (135) de sorte que la deuxième unité de blocage (80) est à l'état débloqué, et **en ce que**,
lors du mouvement du troisième élément de commutation (126) de la première position de commutation dans la deuxième position de commutation, la première denture (144) du deuxième élément de blocage (124) se déplace le long de l'axe longitudinal (A2) du trou traversant (77) et est amenée en engagement avec la denture (136) du deuxième élément d'engagement (135) de sorte que la deuxième unité de blocage (80) soit à l'état bloqué.

15. Dispositif de réglage (26) selon la revendication 14, **caractérisé en ce que** le mouvement de l'élément d'actionnement (50) de la position d'actionnement, dans laquelle la première unité de blocage (78) est à l'état débloqué, à la position d'actionnement dans laquelle la première unité de blocage (78) est à l'état bloqué, est une rotation de l'élément d'actionnement (50) sur l'axe longitudinal (A2) du trou traversant (77), **en ce que**
le deuxième élément de commutation (82) comprend un arbre (96) qui est relié de manière fixe à l'élément d'actionnement (50) et dont l'axe longitudinal s'étend le long de l'axe longitudinal (A2) du trou traversant (77), et comprend une broche (112) qui est disposée transversalement à l'arbre (96) et reliée à l'arbre (96), **en ce que**
le premier élément de commutation est conçu comme un premier disque à came (86) dont le chemin incurvé (106) est disposé, du côté dirigé vers la broche (112), autour de l'axe longitudinal (A2) du trou traversant (77), le chemin incurvé (106) comportant au moins une partie inclinée (108, 109) présentant une pente, et **en ce que**,
pendant le mouvement de l'élément d'actionnement (50) de la position d'actionnement, dans laquelle la première unité de blocage (78) est à l'état débloqué, à la position d'actionnement dans laquelle la première unité de blocage (78) est à l'état bloqué, la broche (112) est déplacée le long de la partie inclinée (108, 109) du chemin incurvé (106) du premier disque à came (86).

16. Dispositif de réglage (26) selon la revendication 15, **caractérisé en ce que** le troisième élément de commutation est réalisé sous la forme d'un deuxième disque à came (126) dont le chemin incurvé (152) est disposé, du côté dirigé vers la broche (112), autour de l'axe longitudinal (A2) du trou traversant (77), le chemin incurvé (152) comportant au moins une partie inclinée (154) présentant une pente, et **en ce que** le premier disque à cames (86) et le deuxième disque à cames (126) sont situés par rapport à la broche (112) de telle sorte que, lors du déplacement de l'élément d'actionnement (50) de la première position d'actionnement à la deuxième position d'actionnement, la broche (112) soit déplacée le long de la partie inclinée (108) du chemin incurvé (106) du premier disque de came (86) et le long de la partie inclinée (154) du chemin incurvé (152) du deuxième disque de came (126), ou **en ce que**, pendant le mouvement de l'élément d'actionnement (50) de la première position d'actionnement à la deuxième position d'actionnement, la broche (112) est déplacée le long de la partie inclinée (108) du chemin incurvé (106) du premier disque de came (86) et le long d'une partie (190) du chemin incurvé (184) du deuxième disque de came (182) sans pente et, pendant le mouvement de l'élément d'actionnement (50) de la deuxième position d'actionnement à la troisième position d'actionnement, la broche est déplacée le long d'une partie (110) du chemin incurvé (106) du premier disque de came (86) sans pente et le long de la partie inclinée (188) du chemin incurvé (184) du deuxième disque de came (182), ou **en ce que**, pendant le mouvement de l'élément d'actionnement (50) de la première position d'actionnement à la deuxième position d'actionnement, la broche (112) est déplacée le long d'une partie du chemin incurvé du premier disque de came sans pente, et le long de la partie inclinée du chemin incurvé du deuxième disque de came et, pendant le mouvement de l'élément d'actionnement (50) de la deuxième position d'actionnement à la troisième position d'actionnement, la broche est déplacée le long de la partie inclinée du chemin incurvé du premier disque de came et le long d'une partie du chemin incurvé du deuxième disque de came sans pente.

17. Dispositif de réglage (240) selon la revendication 11 ou 12, **caractérisé en ce qu'**un arbre (250) est prévu qui comporte un premier filetage extérieur (252) ayant un premier pas et un deuxième filetage extérieur (254) ayant un deuxième pas, le premier filetage extérieur (252) étant situé dans une première zone de l'arbre (250) et le deuxième filetage extérieur (254) étant situé dans une deuxième zone de l'arbre (250) à chaque fois autour de l'axe longitudinal (A2) de l'arbre (250) et les sens du premier pas et du deuxième pas étant opposées, **en ce que**
le premier élément de blocage (258) comporte une ouverture pourvue d'un filetage intérieur (262) complémentaire du premier filetage extérieur (252) et au moins partiellement en engagement avec le premier filetage extérieur (252), **en ce que** le deuxième élément de blocage (266) comporte une ouverture pourvue d'un filetage intérieur (267) complémentaire du deuxième filetage extérieur (254) et au moins partiellement en engagement avec le deuxième filetage extérieur (254), **en ce que**
l'élément d'actionnement (50) est relié solidairement en rotation à l'arbre (250), et **en ce que**
une rotation de l'arbre (250) sur son axe longitudinal (A2) résulte du mouvement de l'élément d'actionnement (50) de la première position d'actionnement à la deuxième position d'actionnement.

18. Dispositif de réglage (200) selon la revendication 14, **caractérisé en ce que** le deuxième élément de commutation (203) comprend un arbre (204), **en ce que**
l'arbre (204) comporte un premier filetage extérieur (206) ayant un premier pas (224) et un deuxième filetage extérieur (207) ayant un deuxième pas (226), le premier filetage extérieur (206) étant situé dans une première zone de l'arbre (204) et le deuxième filetage extérieur (207) étant situé dans une deuxième zone de l'arbre (204) à chaque autour de l'axe longitudinal (A2) de l'arbre (204) et les sens du premier pas (224) et du deuxième pas (226) étant opposés, **en ce que** le premier élément de commutation (208) comporte une ouverture pourvue d'un filetage intérieur (210) complémentaire du premier filetage extérieur (206) et au moins partiellement en engagement avec le premier filetage extérieur (206), **en ce que** le troisième élément de commutation (212) comporte une ouverture pourvue d'un filetage intérieur (214) complémentaire du deuxième filetage extérieur (207) et au moins partiellement en engagement avec le deuxième filetage extérieur (207), et **en ce que**
la rotation de l'arbre (204) sur son axe longitudinal (A2) résulte du mouvement de l'élément d'actionnement (50) de la première position d'actionnement à la deuxième position d'actionnement.

19. Dispositif de réglage selon la revendication 1, **caractérisé en ce qu'**une unité de blocage combinée (300) est prévue qui comprend une pièce d'accouplement (302) qui permet, dans une première position de commutation, le mouvement de pivotement du segment de surface de support (22, 24) conjointement avec le quadrilatère articulé (30) sur le deuxième axe de pivotement (A2) et le mouvement de pivotement du deuxième axe de pivotement (A2) sur le premier axe de pivotement (A1), qui bloque, dans une deuxième position de commutation, le mouvement de pivotement du deuxième axe de pivotement (A2) sur le premier axe de pivotement (A1) et qui bloque en outre, dans une troisième position de commutation, le mouvement de pivotement du segment de surface de support (22, 24) sur le deuxième axe de pivotement (A2) par rapport à la première barre de guidage (32) ou à l'élément d'accouplement (36) .

20. Dispositif de réglage selon la revendication 19, **caractérisé en ce que** le dispositif de réglage comprend également un élément de liaison (44) destiné à relier de manière rotative le segment de surface de support (22, 24) au quadrilatère articulé (30) et **en ce que** la pièce d'accouplement (302) peut coulissement axialement en direction du deuxième axe de pivotement (A2), la pièce d'accouplement (302) comportant au moins une denture extérieure (302a) qui peut s'engager dans une denture intérieure (32a) de la première barre de guidage (32) et/ou de l'élément d'accouplement (36) et/ou de l'élément de liaison (44).

21. Dispositif de réglage selon l'une des revendications 19 ou 20, **caractérisé en ce que** la pièce d'accouplement (302) comprend également au moins une extension de centrage (302b) sur laquelle la première barre de guidage (32) et/ou le élément d'accouplement (36) et/ou l'élément de liaison (44) peuvent tourner librement.

22. Dispositif de réglage selon la revendication 20 ou 21, **caractérisé en ce qu'**au moins une zone de bord axiale (302c) de la denture extérieure (302a) de la pièce d'accouplement (302) est conçue de telle sorte que, dans cette zone de bord (302c), les parois latérales de dents adjacentes respectives soient inclinées et/ou incurves l'une par rapport à l'autre de manière à former des espaces intermédiaires en forme d'entonnoir entre des dents adjacentes.

23. Dispositif de réglage selon l'une des revendications 20 à 22, **caractérisé en ce qu'**un élément d'encliquetage (306) monté sur ressort est prévu sur la pièce d'accouplement (302) et coopère avec la denture intérieure (32a) de la première barre de guidage (32) et/ou de l'élément d'accouplement (36) et/ou de l'élément de liaison (44).

24. Dispositif de réglage selon l'une des revendications 19 à 23, **caractérisé en ce que** les dentures intérieures respectives de la première barre de guidage (32), de l'élément d'accouplement (36) et de l'élément de liaison (44) sont situées les unes derrières les autres dans la direction axiale et la pièce d'accouplement (302) peut être amenée sélectivement en engagement avec une, deux ou trois des dentures intérieures.

25. Dispositif de réglage selon la revendication 1, **caractérisé en ce que** le segment de surface de support (22, 24) comporte un premier sous-segment (22) et un deuxième sous-segment (24) qui sont pivotants l'un par rapport à l'autre sur un autre axe de pivotement (A5), l'autre axe de pivotement (A5) s'étendant sensiblement perpendiculairement aux premier et deuxième axes de pivotement (A1, A2), et **en ce qu'**un dispositif de blocage de rotation (400) est prévu qui bloque, dans une plage angulaire prédéterminée du pivotement sur l'autre axe de pivotement (A5), la rotation du segment de surface de support (22, 24) sur le deuxième axe de pivotement (A2) dans au moins une direction.

26. Dispositif de réglage selon la revendication 25, **caractérisé en ce que** le dispositif de blocage de rotation (400) comporte un élément de contact (402), qui est relié de manière fixe au deuxième sous-segment (24), et également un élément de butée (404) qui est reliées de manière fixe à l'élément d'accouplement (36) ou à la première barre de guidage (32) du quadrilatère articulé (30) de sorte que, lors d'un réglage du deuxième sous-segment (24) par rapport au premier sous-segment (22) sur l'axe de pivotement (A5), l'élément de contact (402) soit amené en contact avec l'élément de butée (404) et bloque ainsi le pivotement du segment de surface de support (22, 24) sur le deuxième axe de pivotement (A2) dans une direction.

27. Dispositif de réglage selon la revendication 26, **caractérisé en ce que** l'élément de contact comprend une saillie allongée (402).

28. Dispositif de réglage selon l'une des revendications 26 ou 27, **caractérisé en ce que** le dispositif de blocage de rotation (400) bloque le pivotement du segment de surface de support (22, 24) sur le deuxième axe de pivotement (A2) dans une plage angulaire de 75 ° à 90 ° du réglage sur l'autre axe de pivotement (A5).

29. Dispositif de réglage selon l'une des revendications 26 à 28, **caractérisé en ce que**, dans un état bloqué du dispositif de blocage de rotation (400), le deuxième axe de pivotement (A2) peut pivoter sur le premier axe de pivotement (A1) à l'aide du quadrilatère articulé (30).
